# EUROPEAN PATENT APPLICATION

(11) **EP 4 813 815 A1**
(43) Date of publication of application: **30.09.2026**
(21) Application number: 24912547.7
(22) Date of filing: 17.12.2024
(51) Int. Cl.: B62D 27/06, B60P 3/00, B66C 23/26

(54) **MOBILE BODY, MOBILE BODY STORAGE CONTAINER, AND MOBILE BODY STORAGE SYSTEM**

(30) Priority: 27.12.2023 JP 2023220155; 27.12.2023 JP 2023220156; 27.12.2023 JP 2023220157
(71) Applicant: KUBOTA CORPORATION, Osaka-shi, Osaka 530-0011 (JP)
(72) Inventor: HIGASHIKAWA Yoshitaka, Sakai-shi, Osaka 590-0908 (JP); SASAKI Wataru, Sakai-shi, Osaka 590-0908 (JP); KUSAKA Yuya, Sakai-shi, Osaka 590-0908 (JP)
(74) Representative: Cabinet Beau de Loménie
(86) International application number: PCT/JP2024/044679
(87) International publication number: WO 2025/142658

(57) **Abstract**

In a mobile body which includes a traveling body and a mounted body detachable from the traveling body, both attachment of the mounted body and detachment of the mounted body can be appropriately performed. A mobile body (100) includes: a traveling body (200) that travels in a first direction and includes a mounting surface (210) directed in a second direction which is an upward direction relative to the first direction; and a mounted body (300) that is attachable to and detachable from the mounting surface (210), moves integrally with the traveling body (100) in a case where the mounted body (300) is attached to the mounting surface (210) and mounted on the traveling body (200), and is arranged separately from the traveling body (200) in a case where the mounted body (300) is detached from the mounting surface (210) and is not mounted on the traveling body (200).

## Description

### TECHNICAL FIELD

The present invention relates to a mobile body, a storage station of the mobile body, and a storage system of the mobile body.

### BACKGROUND ART

Hitherto, a mobile body including a traveling body traveling on a traveling surface and a mounted body mounted on the traveling body has been known. The mounted body can be attached to the traveling body, and the attached mounted body can be detached from the traveling body. Various aspects of mounted bodies can be appropriately replaced on the traveling body depending on the application of the mobile body. An example of such a type of mobile body is disclosed in Non Patent Literature 1 below.

### CITATION LIST

### NON PATENT LITERATURE

Non Patent Literature 1: Honda Unveils 3E-D18 Robotic Workhorse at CES 2018, YouTube [online] [video], delivered on January 11, 2018, [searched on April 4, 2023], mainly see 1:20 to 1:43, URL, https://www.youtube.com/watch?v=PuGoP_eCXZk

### SUMMARY OF THE INVENTION

By the way, in the mobile body described above, although a concept of attaching the mounted body on the traveling body can be identified, a specific attachment aspect such as an attachment portion or an attachment method of the mounted body in a vehicle when the mounted body is attached to the vehicle is unknown. Furthermore, it is also unclear how the mounted body is treated before attachment, such as from where and how the mounted body is moved to the traveling body before being attached. Therefore, it cannot be said that the mounted body is appropriately attached to the traveling body.

In addition, in the mobile body described above, a concept of detaching the mounted body from the vehicle can be identified, but a specific detachment aspect such as a detachment method at the time of detaching the mounted body from the vehicle is unclear. Furthermore, it is also unclear how the mounted body is treated after the detachment, such as to where and how the mounted body after the detachment is moved from the vehicle. Therefore, it cannot be said that the mounted body is appropriately detached from the traveling body. From the above, it can be said that there is room for improvement in appropriately performing both the attachment of the mounted body and the detachment of the mounted body in such a type of mobile body.

In view of the above, an object of the present invention is to provide a mobile body which includes a traveling body and a mounted body detachable from the traveling body and in which both attachment of the mounted body and detachment of the mounted body can be appropriately performed.

### SOLUTION TO PROBLEM

The technical means of the present invention to solve this technical problem is characterized by the following points. A mobile body according to the first feature of the present invention is characterized by including: a traveling body that travels in a first direction and includes a mounting surface directed in a second direction which is an upward direction relative to the first direction; a mounted body that is attachable to and detachable from the mounting surface, moves integrally with the traveling body in a case where the mounted body is attached to the mounting surface and mounted on the traveling body, and is arranged separately from the traveling body in a case where the mounted body is detached from the mounting surface and is not mounted on the traveling body; and a lift portion that is provided in any one of the traveling body and the mounted body and moves the mounted body with respect to the mounting surface in the second direction or a third direction opposite to the second direction while supporting the mounted body.

A mobile body according to the second feature of the present invention is characterized by including an engagement portion that engages the traveling body and the mounted body with each other, attaches the mounted body by engagement, and detaches the mounted body by disengagement, in the mobile body according to the above first feature.

A mobile body according to the third feature of the present invention is characterized in that the lift portion protrudes toward the engagement portion, and the engagement portion is provided at a location corresponding to the lift portion of the other one of the traveling body and the mounted body, has a recessed shape into which the protruding lift portion is fittable, has a shape having a portion whose diameter decreases in a direction in which the lift portion is fitted, and is engaged by being fitted with the lift portion, in the mobile body according to the above second feature.

A mobile body according to the fourth feature of the present invention is characterized by comprising: a fixing portion that fixes the mounted body to the traveling body, restricts relative movement of the mounted body with respect to the traveling body by the fixation, and allows the relative movement by releasing the fixation, in the mobile body according to any one of the above first to third features.

A mobile body according to the fifth feature of the present invention is characterized in that the fixing portion is provided at a location different from an installation location of the lift portion, is configured to generate a magnetic-based attraction force between the traveling body and the mounted body, and fixes the mounted body to the traveling body by an action of the attraction force, in the mobile body according to the above fourth features.

A mobile body according to the sixth feature of the present invention is characterized in that the traveling body includes: a first electric device; and a first end portion which is electrically connected to the first electric device, and the mounted body includes: a second electric device; and a second end portion which is electrically connected to the second electric device, for which contact or non-contact energization with the first end portion is allowed to achieve electrical connection between the first and second electric devices in a case where the mounted body is attached to the mounting surface, and for which the contact or non-contact energization with the first end portion is restricted to release the electrical connection between the first and second electric devices when the mounted body is detached from the mounting surface, in the mobile body according to the above first features.

A mobile body according to the seventh feature of the present invention is characterized by including: an attachment control unit that controls the lift portion so as to move the mounted body facing the mounting surface upward from an arrangement position in the second direction while supporting the mounted body when the mounted body arranged at the arrangement position upward of the mounting surface in the second direction is attached to the traveling body to which the mounted body is not attached, controls the traveling body so as to travel in the first direction integrally with the mounted body in a state in which the mounted body has shifted upward from the arrangement position, and controls the lift portion so as to move the mounted body that has shifted upward in the third direction while supporting the mounted body, in the mobile body according to the above first features.

A mobile body according to the eighth feature of the present invention is characterized by including: a detachment control unit that controls the lift portion to move the mounted body upward from the arrangement position in the second direction while supporting the mounted body attached to the mounting surface when the mounted body is detached from the traveling body to which the mounted body is attached and is arranged at the arrangement position upward of the mounting surface in the second direction, controls the traveling body to travel to a position for arranging the mounted body integrally with the mounted body in a state in which the mounted body has shifted upward from the arrangement position, and controls the lift portion to move the mounted body that has shifted upward in the third direction while supporting the mounted body, in the mobile body according to any one of the above one to seventh features.

A mobile body according to the ninth feature of the present invention is characterized by including: a traveling body; a mounted body that moves integrally with the traveling body when the mounted body is mounted on the traveling body and is configured to be arranged separately from the traveling body when the mounted body is detached from the traveling body; and a lift portion that is provided in any one of the traveling body and the mounted body and is configured to move the mounted body in a vertical direction.

A mobile body according to the tenth feature of the present invention is characterized by including: an engagement portion that is configured to engage the traveling body and the mounted body with each other, to attach the mounted body by engagement, and to detach the mounted body by disengagement, in the mobile body according to the above ninth features.

A mobile body according to the eleventh feature of the present invention is characterized in that the lift portion protrudes toward the engagement portion, and the engagement portion is provided at a location corresponding to the lift portion of the other one of the traveling body and the mounted body, has a recessed shape into which the protruding lift portion is fittable, has a shape having a portion whose diameter decreases in a direction in which the lift portion is fitted, and is engaged by being fitted with the lift portion, in the mobile body according to the above tenth features.

A mobile body according to the twelfth feature of the present invention is characterized by including: a traveling body that travels in a first direction and includes a mounting surface directed in a second direction which is an upward direction relative to the first direction; a mounted body that is attachable to and detachable from the mounting surface, moves integrally with the traveling body in a case where the mounted body is attached to the mounting surface and mounted on the traveling body, and is arranged separately from the traveling body in a case where the mounted body is detached from the mounting surface and is not mounted on the traveling body; and an engagement portion that engages the traveling body and the mounted body with each other, attaches the mounted body by engagement, and detaches the mounted body by disengagement, in the mobile body according to the above first feature.

A mobile body according to the thirteenth feature of the present invention is characterized in that the engagement portion includes a protruding portion and a fitting portion such that the protruding portion can be fitted thereto, and is engaged by being fitted with the protruding portion, in the mobile body according to the above twelfth feature.

A mobile body according to the fourteenth feature of the present invention is characterized in that the engagement portion includes: a protruding portion that protrudes in the second direction or a third direction opposite to the second direction; and a fitting portion that has a recessed shape into which the protruding portion can be fitted, has a shape having a portion whose diameter decreases in a direction in which the protruding portion is fitted, and is engaged by being fitted with the protruding portion, in the mobile body according to the above thirteenth feature.

A mobile body according to the fifteenth feature of the present invention is characterized in that the engagement portion includes: a protruding portion that protrudes in the second direction or a third direction opposite to the second direction; and a fitting portion that has a recessed shape into which the protruding portion can be fitted, has a shape having a portion to be screwed when the protruding portion is fitted, and is engaged by being fitted with the protruding portion, in the mobile body according to the above thirteenth feature.

A mobile body according to the sixteenth feature of the present invention is characterized in that the engagement portion is configured such that the mounted body is attached by engagement in a state in which the traveling body is traveling, in the mobile body according to the above twelfth feature.

A mobile body according to the seventeenth feature of the present invention is characterized in that the engagement portion includes an outer rail that extends in the first direction; and an inner rail that can be engaged inside the outer rail, and is guided by the outer rail and engaged while moving in the first direction in a state in which the traveling body travels, in the mobile body according to the above sixth feature.

A mobile body according to the eighteenth feature of the present invention is characterized in that the engagement portion includes: an erected portion that is erected in the second direction or a third direction opposite to the second direction and has a surface facing the first direction; and a contact portion that is configured to come into contact with the surface of the erected portion and is engaged by coming into contact with the surface in a state in which the traveling body is traveling, in the mobile body according to the above sixth feature.

A mobile body according to the nineteenth feature of the present invention is characterized by including: a traveling body; a mounted body that moves integrally with the traveling body when the mounted body is mounted on the traveling body and is configured to be arranged separately from the traveling body when the mounted body is detached from the traveling body; and an engagement portion that engages the traveling body and the mounted body with each other, attaches the mounted body by engagement, and detaches the mounted body by disengagement.

A mobile body according to the twentieth feature of the present invention is characterized in that the engagement portion includes a protruding portion and a fitting portion such that the protruding portion can be fitted thereto, and is engaged by being fitted with the protruding portion, in the mobile body according to the above nineteenth feature.

A mobile body according to the twenty-first feature of the present invention is characterized in that the engagement portion includes: a protruding portion that protrudes in the second direction or a third direction opposite to the second direction; and a fitting portion that has a recessed shape into which the protruding portion can be fitted, has a shape having a portion whose diameter decreases in a direction in which the protruding portion is fitted, and is engaged by being fitted with the protruding portion, in the mobile body according to the above twentieth feature.

A mobile body according to the twenty-second feature of the present invention is characterized by including: a traveling body; a mounted body that moves integrally with the traveling body when the mounted body is mounted on the traveling body and is configured to be arranged separately from the traveling body when the mounted body is detached from the traveling body; and a fixing portion that fixes the mounted body to the traveling body, restricts relative movement of the mounted body with respect to the traveling body by the fixation, and allow the relative movement by releasing the fixation.

A mobile body according to the twenty-third feature of the present invention is characterized in that the fixing portion includes: a protruding portion that protrudes in the second direction or a third direction opposite to the second direction; and a fitting portion that is configured to be fitted with the protruding portion and fixes the mounted body to the traveling body by being fitted with the protruding portion, in the mobile body according to the above twenty-second feature.

A mobile body according to the twenty-fourth feature of the present invention is characterized in that the fixing portion includes: a protruding portion that protrudes in a direction substantially perpendicular to the second direction; and a fitting portion that is configured to be fitted with the protruding portion and fixes the mounted body to the traveling body by being fitted with the protruding portion, in the mobile body according to the above twenty-second feature.

A mobile body according to the twenty-fifth feature of the present invention is characterized in that the fixing portion is configured to generate a magnetic-based attraction force between the traveling body and the mounted body, and fixes the mounted body to the traveling body by an action of the attraction force, in the mobile body according to the above twenty-second feature.

A mobile body according to the twenty-sixth feature of the present invention is characterized in that the fixing portion includes: a protruding portion that protrudes in the second direction or a third direction opposite to the second direction; a fitting portion that is configured to be fitted with the protruding portion and fixes the mounted body to the traveling body by being fitted with the protruding portion; and an attraction portion that is configured to generate a magnetic-based attraction force between the traveling body and the mounted body, and fixes the mounted body to the traveling body by an action of the attraction force, in the mobile body according to the above twenty-third or twenty-fifth feature.

A mobile body according to the twenty-seventh feature of the present invention is characterized by including: a traveling body; a mounted body that moves integrally with the traveling body when the mounted body is mounted on the traveling body and is configured to be arranged separately from the traveling body when the mounted body is detached from the traveling body; and a fixing portion that fixes the mounted body to the traveling body, restricts relative movement of the mounted body with respect to the traveling body by the fixation, and allow the relative movement by releasing the fixation.

A mobile body according to the twenty-eighth feature of the present invention is characterized in that the fixing portion includes: a protruding portion that protrudes in a vertical direction; and a fitting portion that is configured to be fitted with the protruding portion and fixes the mounted body to the traveling body by being fitted with the protruding portion, in the mobile body according to the above twenty-seventh feature.

A mobile body according to the twenty-ninth feature of the present invention is characterized in that the fixing portion is configured to be able to generate a magnetic-based attraction force between the traveling body and the mounted body, and fixes the mounted body to the traveling body by an action of the attraction force, in the mobile body according to the above twenty-seventh feature.

### ADVANTAGEOUS EFFECTS OF INVENTION

According to the present invention, it is possible to provide a mobile body which includes a traveling body and a mounted body detachable from the traveling body and in which both attachment of the mounted body and detachment of the mounted body can be appropriately performed.

### BRIEF DESCRIPTION OF THE DRAWINGS

[FIG. 1] Fig. 1 is a perspective view of a mobile body according to a first embodiment of the present invention.
[FIG. 2] Fig. 2 is a perspective view of the mobile body illustrated in Fig. 1.
[FIG. 3] Fig. 3 is a perspective view of the mobile body illustrated in Fig. 1.
[FIG. 4] Fig. 4 is a perspective view of the mobile body illustrated in Fig. 1.
[FIG. 5] Fig. 5 is a side view of a traveling body included in the mobile body illustrated in Fig. 1.
[FIG. 6] Fig. 6 is a plan view of the traveling body included in the mobile body illustrated in Fig. 1.
[FIG. 7] Fig. 7 is a rear view of the traveling body included in the mobile body illustrated in Fig. 1.
[FIG. 8] Fig. 8 is a front view of the traveling body included in the mobile body illustrated in Fig. 1.
[FIG. 9] Fig. 9 is a perspective view of a lift portion, an engagement portion, a fixing portion, and a support portion included in the mobile body illustrated in Fig. 1.
[FIG. 10] Figs. 10A, 10B, and 10C are cross-sectional views illustrating a state in which the lift portion included in the mobile body illustrated in Fig. 1 ascends to move a mounted body upward while supporting the mounted body.
[FIG. 11] Figs. 11A, 11B, and 11C are a cross-sectional view illustrating a state in which the lift portion included in the mobile body illustrated in Fig. 1 descends to move the mounted body downward while supporting the mounted body.
[Fig. 12] Fig. 12 is a functional block diagram of each element included in the mobile body illustrated in Fig. 1.
[Fig. 13] Fig. 13 is a side view of the mounted body included in the mobile body illustrated in Fig. 1.
[Fig. 14] Fig. 14 is a plan view of the mounted body included in the mobile body illustrated in Fig. 1.
[Fig. 15] Fig. 15 is a bottom view of the mounted body included in the mobile body illustrated in Fig. 1.
[Fig. 16] Fig. 16 is a front view of the mounted body included in the mobile body illustrated in Fig. 1.
[Fig. 17] Fig. 17 is a rear view of the mounted body included in the mobile body illustrated in Fig. 1.
[Fig. 18] Fig. 18 is a side view of the mounted body in a state in which the mounted body included in the mobile body illustrated in Fig. 1 is in an accommodated posture.
[Fig. 19] Fig. 19 is a side view of the mobile body illustrated in Fig. 1.
[Fig. 20] Fig. 20 is a perspective view of a storage system including a storage station for storing the mobile body according to the first embodiment of the present invention.
[Fig. 21] Fig. 21 is a rear view of the storage station illustrated in Fig. 20.
[Fig. 22] Fig. 22 is a rear view of the storage station illustrated in Fig. 20 in a state in which the mobile body is stored in the storage station.
[Fig. 23] Fig. 23 is a rear view of the storage station illustrated in Fig. 20 in a state in which the traveling body is stored in the storage station.
[Fig. 24] Fig. 24 is a perspective view of the inside of the storage station illustrated in Fig. 20 in a state in which the traveling body is stored in the storage station.
[Fig. 25] Fig. 25 is a rear view of the storage station illustrated in Fig. 20 in a state in which the mounted body is stored in the storage station.
[Fig. 26] Fig. 26 is a perspective view of the inside of the storage station illustrated in Fig. 20 in a state in which the mounted body is stored in the storage station.
[Fig. 27] Fig. 27 is a side view illustrating a relationship between a detected portion and a stop position of the traveling body in the storage station illustrated in Fig. 20.
[Fig. 28] Fig. 28 is a view for describing a process for detaching the mounted body included in the mobile body from the traveling body in the storage station illustrated in Fig. 20.
[Fig. 29] Fig. 29 is a view for describing the process for detaching the mounted body included in the mobile body from the traveling body in the storage station illustrated in Fig. 20.
[Fig. 30] Fig. 30 is a view for describing the process for detaching the mounted body included in the mobile body from the traveling body in the storage station illustrated in Fig. 20.
[Fig. 31] Fig. 31 is a view for describing the process for detaching the mounted body included in the mobile body from the traveling body in the storage station illustrated in Fig. 20.
[Fig. 32] Fig. 32 is a view for describing the process for detaching the mounted body included in the mobile body from the traveling body in the storage station illustrated in Fig. 20.
[Fig. 33] Fig. 33 is a view for describing the process for detaching the mounted body included in the mobile body from the traveling body in the storage station illustrated in Fig. 20.
[Fig. 34] Fig. 34 is a perspective view of the inside of the storage station illustrated in Fig. 20 in a state in which the mounted body is stored in the storage station.
[Fig. 35] Fig. 35 is a view for describing a process for attaching the mounted body included in the mobile body to the traveling body in the storage station illustrated in Fig. 20.
[Fig. 36] Fig. 36 is a view for describing the process for attaching the mounted body included in the mobile body to the traveling body in the storage station illustrated in Fig. 20.
[Fig. 37] Fig. 37 is a view for describing the process for attaching the mounted body included in the mobile body to the traveling body in the storage station illustrated in Fig. 20.
[Fig. 38] Fig. 38 is a view for describing the process for attaching the mounted body included in the mobile body to the traveling body in the storage station illustrated in Fig. 20.
[Fig. 39] Fig. 39 is a view for describing the process for attaching the mounted body included in the mobile body to the traveling body in the storage station illustrated in Fig. 20.
[Fig. 40] Fig. 40 is a view for describing the process for attaching the mounted body included in the mobile body to the traveling body in the storage station illustrated in Fig. 20.
[Fig. 41] Fig. 41 is a view for describing the process for attaching the mounted body included in the mobile body to the traveling body in the storage station illustrated in Fig. 20.
[Fig. 42] Fig. 42 is a flowchart illustrating a series of operations for detaching the mounted body included in the mobile body from the traveling body in the storage station illustrated in Fig. 20.
[Fig. 43] Fig. 43 is a flowchart illustrating a series of operations for attaching the mounted body included in the mobile body to the traveling body in the storage station illustrated in Fig. 20.
[Fig. 44] Fig. 44 is a perspective view of an engagement portion included in a mobile body according to a modification example of the first embodiment of the present invention.
[Fig. 45] Figs. 45A and 45B are cross-sectional views illustrating a state in which a protruding portion of the engagement portion included in the mobile body according to the modification example of the first embodiment of the present invention rotates and is screwed with a fitting portion to move a mounted body upward/downward.
[Fig. 46] Fig. 46 is a plan view of a traveling body included in the mobile body according to the modification example of the first embodiment of the present invention.
[Fig. 47] Fig. 47 is a perspective view of an engagement portion included in a mobile body according to a second embodiment of the present invention.
[Fig. 48] Fig. 48 is a perspective view of the inside of a storage station that stores the mobile body according to the second embodiment of the present invention in a state in which a mounted body included in the mobile body is attached to a traveling body.
[Fig. 49] Fig. 49 is a perspective view of the inside of the storage station that stores the mobile body according to the second embodiment of the present invention in a state in which the mounted body included in the mobile body is attached to the traveling body.
[Fig. 50] Fig. 50 is a perspective view of the inside of the storage station that stores the mobile body according to the second embodiment of the present invention in a state in which the mounted body included in the mobile body is attached to the traveling body.
[Fig. 51] Fig. 51 is a perspective view of an engagement portion included in a mobile body according to a modification example of the second embodiment of the present invention.
[Fig. 52] Fig. 52 is a perspective view of an engagement portion and a fixing portion included in a mobile body according to a third embodiment of the present invention.
[Fig. 53] Figs. 53A and 53B are perspective views illustrating a state before and after fixation of the fixing portion included in the mobile body according to the third embodiment of the present invention.
[Fig. 54] Fig. 54 is a perspective view of the inside of a storage station for storing a mobile body according to a fourth embodiment of the present invention.
[Fig. 55] Fig. 55 is a perspective view of the mobile body according to the fourth embodiment of the present invention.
[Fig. 56] Fig. 56 is a perspective view of a storage system including the storage station for storing the mobile body according to the fourth embodiment of the present invention.
[Fig. 57] Fig. 57 is a functional block diagram of each element included in the storage system including the storage station for storing the mobile body according to the fourth embodiment of the present invention.
[Fig. 58] Fig. 58 is a view for describing a process for charging each of a mounted body and a traveling body included in the mobile body in the storage station for storing the mobile body according to the fourth embodiment of the present invention.
[Fig. 59] Fig. 59 is a view for describing the process for charging each of the mounted body and the traveling body included in the mobile body in the storage station for storing the mobile body according to the fourth embodiment of the present invention.
[Fig. 60] Fig. 60 is a view for describing the process for charging each of the mounted body and the traveling body included in the mobile body in the storage station for storing the mobile body according to the fourth embodiment of the present invention.
[Fig. 61] Fig. 61 is a perspective view of a mobile body according to a fifth embodiment of the present invention.
[Fig. 62] Fig. 62 is a perspective view of the mobile body according to the fifth embodiment of the present invention.
[Fig. 63] Fig. 63 is a plan view of a traveling body included in the mobile body according to the fifth embodiment of the present invention.
[Fig. 64] Fig. 64 is a bottom view of a mounted body included in the mobile body according to the fifth embodiment of the present invention.
[Fig. 65] Fig. 65 is a functional block diagram of each element included in the mobile body according to the fifth embodiment of the present invention.
Fig. 66 is a view for describing a process for connecting a first end portion and a second end portion included in the mobile body according to the fifth embodiment of the present invention.
[Fig. 67] Fig. 67 is a view for describing the process for connecting the first end portion and the second end portion included in the mobile body according to the fifth embodiment of the present invention.
[Fig. 68] Fig. 68 is a view for describing the process for connecting the first end portion and the second end portion included in the mobile body according to the fifth embodiment of the present invention.
[Fig. 69] Figs. 69A and 69B are cross-sectional views illustrating a state in which the first end portion and the second end portion included in the mobile body according to the fifth embodiment of the present invention are each a contact type terminal and electrical connection is made through the terminals.
[Fig. 70] Figs. 70A and 70B are cross-sectional views illustrating a state in which the first end portion and the second end portion included in the mobile body according to the fifth embodiment of the present invention are each a non-contact type coil and electrical connection is made through the coils.
[Fig. 71] Fig. 71 is a time chart illustrating changes over time in respective remaining battery levels of a power supply of the traveling body and a power supply of the mounted body included in the mobile body according to the fifth embodiment of the present invention.
[Fig. 72] Fig. 72 is a perspective view of a mobile body according to a sixth embodiment of the present invention.
[Fig. 73] Fig. 73 is a perspective view of the mobile body according to the sixth embodiment of the present invention.
[Fig. 74] Fig. 74 is a functional block diagram of each element included in the mobile body according to a sixth embodiment of the present invention.
[Fig. 75] Figs. 75A and 75B are cross-sectional views illustrating a state in which transmission is performed by a mechanism through a transmission portion and a transmitted portion included in the mobile body according to the sixth embodiment of the present invention.
[Fig. 76] Figs. 76A and 76B are cross-sectional views illustrating a state in which transmission is performed by a fluid through a transmission portion and a transmitted portion included in a mobile body according to a modification example of the sixth embodiment of the present invention.
[Fig. 77] Fig. 77 is a functional block diagram of each element included in the mobile body according to the modification example of the sixth embodiment of the present invention.
[Fig. 78] Fig. 78 is a perspective view of the mobile body according to the modification example of the sixth embodiment of the present invention.
[Fig. 79] Fig. 79 is a perspective view of the mobile body according to the modification example of the sixth embodiment of the present invention.
[Fig. 80] Fig. 80 is a perspective view of a mobile body according to a seventh embodiment of the present invention.
[Fig. 81] Fig. 81 is a perspective view of the mobile body according to the seventh embodiment of the present invention.
[Fig. 82] Fig. 82 is a perspective view of the mobile body according to the seventh embodiment of the present invention.
[Fig. 83] Fig. 83 is a perspective view of the mobile body according to the seventh embodiment of the present invention.
[Fig. 84] Fig. 84 is a plan view of a traveling body and an outer shell portion included in the mobile body according to the seventh embodiment of the present invention.
[Fig. 85] Fig. 85 is a front view of the mobile body according to the seventh embodiment of the present invention.
[Fig. 86] Fig. 86 is a functional block diagram of each element included in the mobile body according to the seventh embodiment of the present invention.
[Fig. 87] Fig. 87 is a perspective view of an outer shell portion provided in a mobile body according to a modification example of the seventh embodiment of the present invention.
[Fig. 88] Fig. 88 is a plan view of the mobile body according to the modification example of the seventh embodiment of the present invention.
[Fig. 89] Fig. 89 is a diagram for describing an example of an operation of a mobile body according to a modification example of an embodiment of the present invention.
[Fig. 90] Fig. 90 is a diagram for describing an example of an operation of a mobile body according to a modification example of an embodiment of the present invention.

### DETAILED DESCRIPTION

Hereinafter, each embodiment of the present invention will be described with reference to the drawings.

### [First Embodiment]

In a description of a first embodiment of the present invention, a mobile body 100, a traveling body 200, a mounted body 300, and a storage system 400 (storage station 500) will be described in detail in this order.

### <Mobile Body>

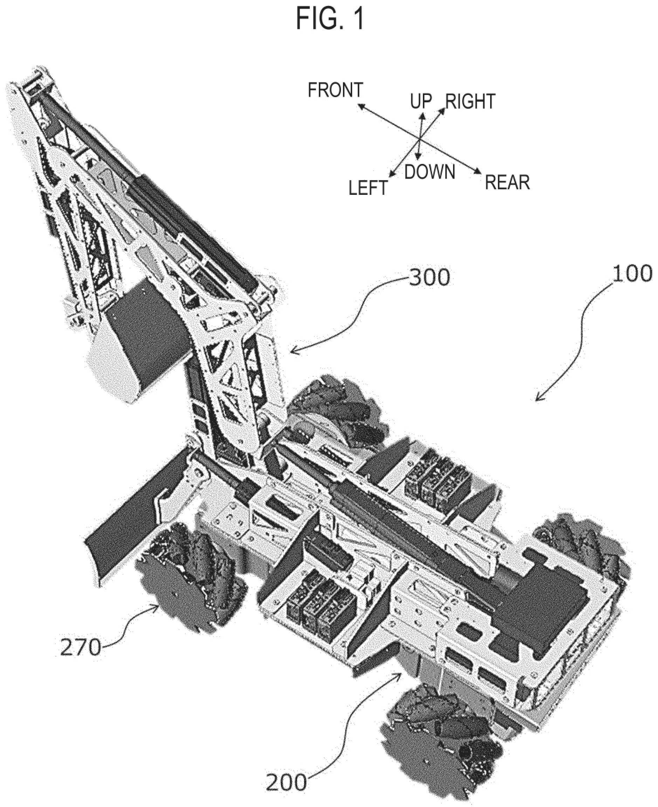

As illustrated in Figs. 1, 2, 3, and 4, the mobile body 100 according to the first embodiment of the present invention includes the traveling body 200 and the mounted body 300 (which may hereinafter be referred to as an "attachment 300").

As for directions in the present embodiment, an upward-downward direction, a leftward-rightward direction, and a forward-rearward direction respectively correspond to an up-down direction, a left-right direction, and a front-rear direction of arrows illustrated in each drawing as appropriate.

The traveling body 200 can travel in a first direction. Here, the "first direction" is any one of the forward-rearward direction, the leftward-rightward direction, a front-left-diagonal-front-right-diagonal direction, or a rear-left-diagonal-rear-right-diagonal direction, and corresponds to a horizontal direction. Diagonal angles in the front-left-diagonal-front-right-diagonal direction and the rear-left-diagonal-rear-right-diagonal direction are respectively arbitrary.

The "first direction" also corresponds to a direction parallel to a traveling surface. That is, the traveling body 200 can travel in all directions along the traveling surface. The traveling in all directions is enabled by a traveling device 270, and a configuration of the traveling device 270 is described in detail below.

The traveling body 200 includes a mounting surface 210 directed in a second direction which is an upward direction relative to the first direction. The mounting surface 210 is included in an upper surface of the traveling body 200. Here, the "second direction" corresponds to the upward direction. The "second direction" also corresponds to a vertical direction away from the traveling surface.

A third direction opposite to the second direction is also defined. Here, the "third direction" corresponds to a downward direction, and also corresponds to a vertical direction approaching the traveling surface. In addition, a fourth direction orthogonal to each of the first direction and the second direction is also defined. Here, the "fourth direction" corresponds to the horizontal direction and also corresponds to a direction parallel to the traveling surface. For example, in a case where the first direction is the forward direction, the fourth direction is the leftward or rightward direction.

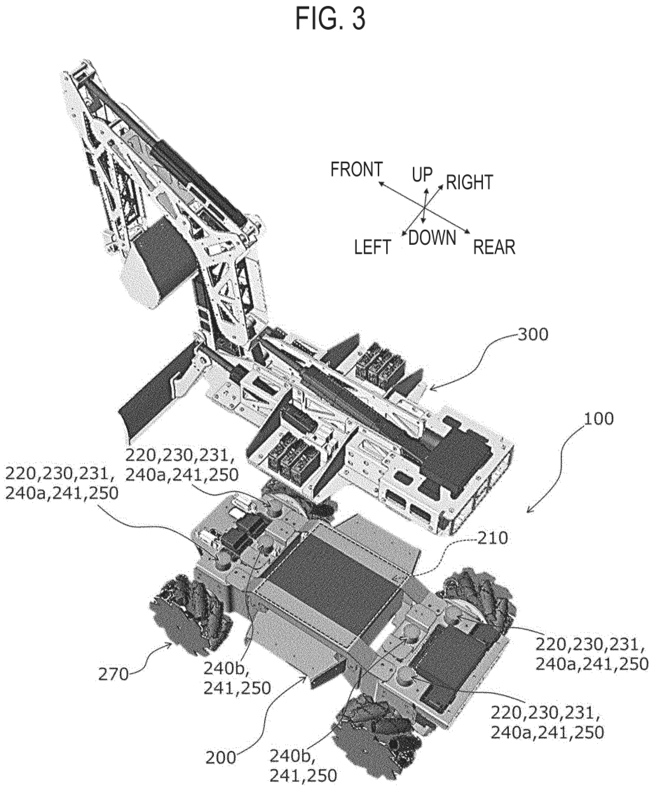

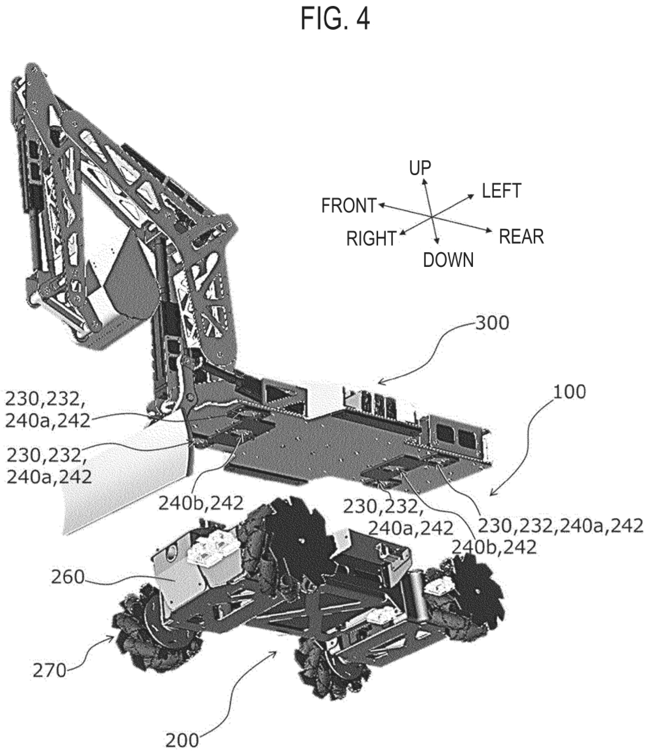

The mounted body 300 is configured to be attachable to and detachable from the mounting surface 210 of the traveling body 200. In a state in which the mounted body 300 is detached (see, for example, Figs. 3 and 4), first, a bottom surface of the mounted body 300 directed in the third direction faces the mounting surface 210 directed in the second direction. The mounted body 300 can be attached to the mounting surface 210 by bringing both surfaces relatively close to each other.

More specifically, in a case where the mounted body 300 is arranged at a position upward of the mounting surface 210, the traveling body 200 is caused to travel to an arrangement position of the mounted body 300 such that both surfaces face each other. Then, the attachment may be achieved by moving the mounted body 300 in the third direction in a state in which both surfaces face each other. In a case where the mounted body 300 is attached to the mounting surface 210 and mounted on the traveling body 200, the mounted body 300 moves integrally with the traveling body 200.

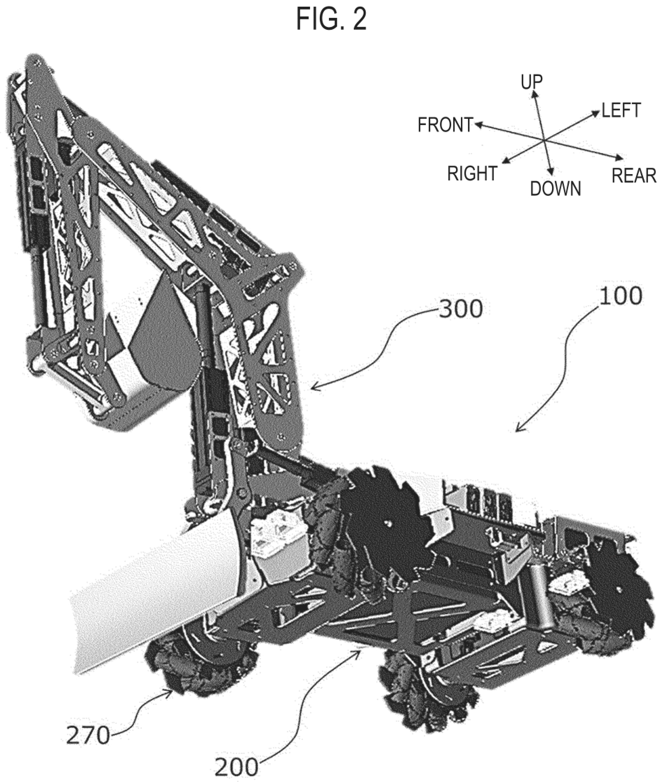

On the other hand, when a lower surface of the mounted body 300 is relatively separated from the mounting surface 210 in a state in which the mounted body 300 is attached (see, for example, Figs. 1 and 2), the mounted body 300 can be detached from the mounting surface 210.

More specifically, the mounted body 300 is moved from the traveling body 200 in the second direction in a state in which both surfaces face each other. Then, the detachment may be achieved by arranging the mounted body 300 at a position upward of the mounting surface 210 and causing the traveling body 200 to travel from the arrangement position of the mounted body 300. In a case where the mounted body 300 is detached from the mounting surface 210 and is not mounted on the traveling body 200, the mounted body 300 is arranged separately from the traveling body 200.

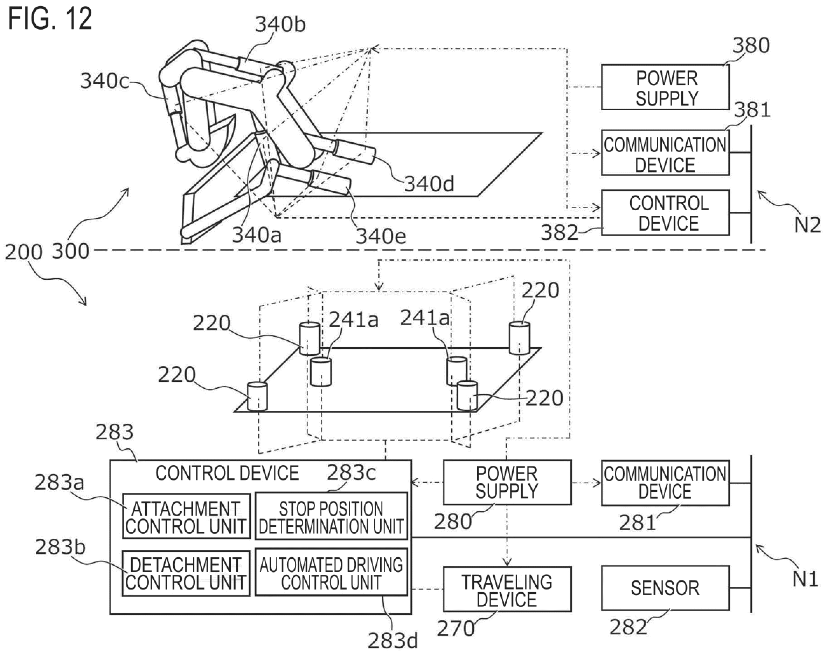

Attachment/detachment control is performed by an attachment control unit 283a and a detachment control unit 283b included in the mobile body 100 (see, for example, Fig. 12). Note that the control and operation for the attachment and detachment, arrangement of the detached mounted body 300 in the storage station 500, and the like are described in detail below.

The mounted body 300 attached to the traveling body 200 is a so-called attachment 300, and the same attachment 300 may be attached and detached. Alternatively, after an attachment 300 of one aspect is detached, an attachment 300 of a different aspect may be attached. That is, attachments 300 of a plurality of different aspects may be replaced on the traveling body 200 of one aspect depending on an application. When attached to the traveling body 200, the attachment 300 may be configured to be able to perform various types of work such as agricultural work, construction work, and transportation work, or may be configured to be a riding mobility, and an aspect thereof is arbitrary. For example, in a case where the aspect of the attachment 300 corresponds to agricultural work, the attachment 300 may be configured so as to be able to perform mowing, sowing, spreading, ridging, and the like.

In the present embodiment, it is assumed that the attachment 300 functioning as a backhoe when attached is used as the mounted body 300. In the present embodiment, it is assumed that the attachment 300 to be attached/detached is the same. The aspect and attachment/detachment operation for the mounted body 300 are described in detail below.

In addition, the mobile body 100 includes a lift portion 220, an engagement portion 230, fixing portions 240a and 240b, and a support portion 250. The lift portion 220 is configured to be able to move the mounted body 300 in the second direction or the third direction with respect to the mounting surface 210 while supporting the mounted body 300. In the present embodiment, the lift portion 220 is provided in the traveling body 200, but the lift portion 220 may also be provided in any one of the traveling body 200 and the mounted body 300 (see, for example, Fig. 3).

The engagement portion 230 is configured to engage the traveling body 200 and the mounted body 300 with each other, the mounted body 300 is attached thereto by engagement, and the mounted body 300 is detached therefrom by disengagement. The engagement portion 230 includes a protruding portion 231 and a fitting portion 232. The fitting portion 232 is configured such that the protruding portion 231 can be fitted thereto, and is engaged by being fitted with the protruding portion 231.

In the present embodiment, the engagement portion 230 is provided at a location corresponding to the lift portion 220. The lift portion 220 corresponds to the protruding portion 231 and protrudes toward the fitting portion 232. The fitting portion 232 fitted with the protruding portion 231 (lift portion 220) is provided in the mounted body 300, but the fitting portion 232 may be provided in the other one of the traveling body 200 and the mounted body 300 (see, for example, Fig. 4). Alternatively, the engagement portion 230 may be arranged independently of the lift portion 220.

The fixing portions 240a and 240b are configured to be able to fix the mounted body 300 to the traveling body 200, restrict relative movement of the mounted body 300 with respect to the traveling body 200 by the fixation, and allow the relative movement by releasing the fixation. The fixing portions 240a and 240b each include a protruding portion 241 and a fitting portion 242. The fitting portion 242 is configured such that the protruding portion 241 can be fitted thereto, and is fixed by being fitted with the protruding portion 241.

In the present embodiment, the fixing portion 240a is provided at a location corresponding to the lift portion 220 (engagement portion 230). The protruding portion 241 and the fitting portion 242 of the fixing portion 240a correspond to the protruding portion 231 and the fitting portion 232 of the engagement portion 230, respectively. Alternatively, the fixing portion 240a may be arranged independently of the engagement portion 230 and the lift portion 220. On the other hand, the fixing portion 240b is provided at a location different from an installation location of the lift portion 220 (engagement portion 230). The protruding portion 241 and the fitting portion 242 of the fixing portion 240b are separate from the protruding portion 231 and the fitting portion 232 of the engagement portion 230.

The support portion 250 is provided in the traveling body 200, and supports the mounted body 300 in a case where the mounted body 300 is attached to the mounting surface 210. The support portions 250 are arranged at positions corresponding to respective vertices of a polygon in a plan view. In the present embodiment, the support portion 250 corresponds to each of the protruding portion 231 and the protruding portion 241. Note that aspects of the lift portion 220, the engagement portion 230, the fixing portions 240a and 240b, and the support portion 250, and control for the lifting, engagement, fixing, and support are described in detail below.

### <Traveling Body>

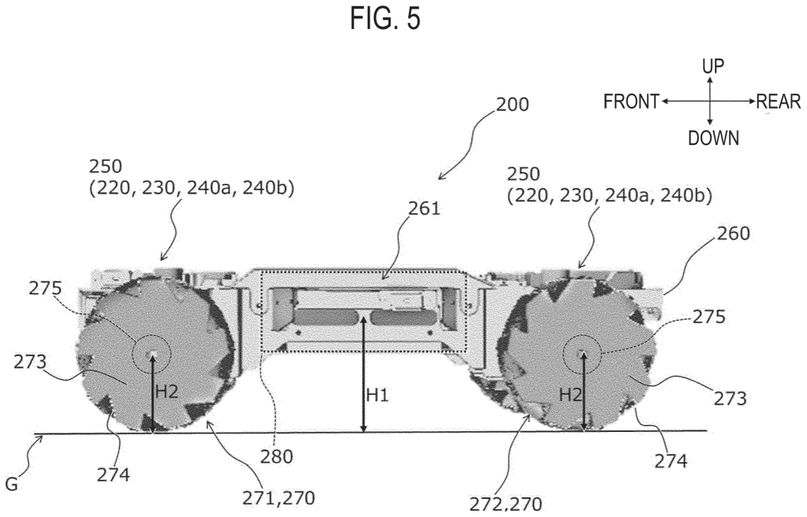

As illustrated in Figs. 5, 6, 7, and 8, the traveling body 200 includes a vehicle body 260 and the traveling device 270. The vehicle body 260 is formed of a substantially rectangular parallelepiped housing, and a power supply 280 and various electric devices (a communication device, a control device, a sensor, and the like) are mounted on the vehicle body 260. The mounting surface 210 is provided at an upper end of the vehicle body 260. The support portions 250 (the lift portions 220, the engagement portions 230, and the fixing portions 240a and 240b) are provided on a front side and a rear side of an upper surface of the vehicle body 260.

Overhanging portions 261 are provided on left and right side surfaces of the vehicle body 260. The overhanging portion 261 is installed at a substantially central portion of the vehicle body 260 in a vehicle length direction. The overhanging portion 261 overhangs outward in a vehicle width direction from the side surface of the vehicle body 260. The overhanging portion 261 has a trapezoidal shape in a plan view of the vehicle body 260, a lower base of the trapezoidal shape is connected to the side surface of the vehicle body 260, and an upper base of the trapezoidal shape corresponds to an end portion in an overhanging direction.

### <<Traveling Device>>

The traveling device 270 is arranged at each of both ends of the vehicle body 260 in the vehicle width direction so as to support the vehicle body 260. That is, arrangement positions of the traveling devices 270 are left and right side ends in a plan view. The traveling devices 270 include a front wheel 271 positioned on a front side of the vehicle body 260 in the vehicle length direction and a rear wheel 272 positioned on a rear side of the vehicle body 260 in the vehicle length direction. The front wheel 271 and the rear wheel 272 are arranged at a position forward of the overhanging portion 261 and a position rearward of the overhanging portion 261, respectively. That is, the overhanging portion 261 is interposed between the front wheel 271 and the rear wheel 272 on the side surface of the vehicle body 260. Although dimensions of the overhanging portion 261, the front wheel 271, and the rear wheel 272 are arbitrary, it is preferable that an outer end of the overhanging portion 261 is positioned inward of outer ends of the front wheel 271 and the rear wheel 272 in the vehicle width direction.

In the present embodiment, the front wheel 271 and the rear wheel 272 are all Mecanum wheels. More specifically, each front wheel 271 and each rear wheel 272 each includes a wheel 273 and a tire 274. The wheel 273 has a substantially disk shape, and is arranged on each of the front side and the rear side of the vehicle body 260 in the vehicle length direction. The wheel 273 is rotationally driven for traveling, and an axle 275 serving as a shaft of the center of rotation is defined.

The tire 274 has a substantially cylindrical shape, has both ends slightly reduced in diameter, and has a solid portion. A plurality of tires 274 are provided for one wheel 273. An axis of each tire 274 is positioned so as to be inclined with respect to the axle 275 of the corresponding wheel 273 in a plan view. All the tires 274 are configured to be rotatable integrally with the wheel 273 in a state of being in contact with the traveling surface. Each tire 274 is also configured to be rotatable relative to the wheel 273.

An independent motor is provided at a position inward of each of the front wheel 271 and the rear wheel 272 in the vehicle width direction. The wheel 273 and the tire 274 of each Mecanum wheel are independently rotationally driven based on motive power of the motor. That is, an aspect of rotation of each Mecanum wheel can be individually adjusted. Therefore, the traveling device 270 can travel in all directions in a plan view. In the present embodiment, the Mecanum wheel configured as described above is used as the traveling device 270 (the front wheel 271 and the rear wheel 272). However, a Mecanum wheel of any aspect may be used as long as the Mecanum wheel can travel in all directions in a plan view even if the wheel and the tire operate independently and there is no steering mechanism. In addition, a drive system, a mechanism, and the like other than the Mecanum wheel may be used as the traveling device 270. In this case, it is sufficient if the front wheel 271 and the rear wheel 272 each include an independent driving device, and the mobile body 100 can travel in any direction (all directions in a plan view). For example, an omni wheel (registered trademark), a caster mechanism, a ball drive mechanism, or the like may be used.

In the present embodiment, the motor and the electric device related to driving of the motor are provided in the vehicle body 260, but instead, for example, the motor and/or the electric device may be provided in the wheel 273. That is, the front wheel 271 and the rear wheel 272 may each be an in-wheel motor type Mecanum wheel.

Further, the traveling device 270 may be detachably arranged with respect to the vehicle body 260. In this case, after the attached traveling device 270 is detached, a traveling device 270 of a different aspect from the detached traveling device 270 can be attached to the vehicle body 260. More specifically, in a case where a wheel having a predetermined diameter is arranged in the vehicle body 260, the wheel may be detached, and then, a wheel, a crawler, or the like having a different diameter may be attached to the vehicle body 260.

### <<Power Supply>>

In the present embodiment, the power supply 280 is a battery that can repeatedly perform charging and discharging. The power supply 280 can supply power to various drive units such as the traveling device 270 and the support portion 250, a communication device 281, a control device 283, various sensors, and the like. The power supply 280 has a substantially rectangular parallelepiped shape, and both side surfaces of the power supply 280 extend in the vehicle length direction of the vehicle body 260. A bottom surface of the power supply 280 is substantially horizontal with respect to the traveling surface. Note that the power supply 280 may be chargeable through cable-connected power feeding, non-contact power feeding, or the like via a predetermined electric device (for example, a fixed or movable charger). A form, a timing, a location, and the like of charging of the power supply 280 are arbitrary, and for example, as described below, when the traveling body 200 is stored in the storage station 500, the power supply 280 may be charged by contact power feeding or non-contact power feeding. On the other hand, the power supply 280 may be charged outside the storage station 500.

The power supply 280 is arranged between the traveling devices 270 at both ends of the vehicle body 260 in the vehicle width direction. The power supply 280 is arranged between the front and rear axles 275 in the vehicle length direction of the vehicle body 260. More specifically, the power supply 280 is arranged at a substantially central portion of the vehicle body 260 in a plan view. That is, a front end of the power supply 280 is positioned rearward of the axle 275 of the front wheel 271 in the vehicle length direction. A rear end of the power supply 280 is positioned forward of the axle 275 of the rear wheel 272 in the vehicle length direction.

Further, the power supply 280 is arranged such that the center of gravity of the power supply 280 is positioned upward of the axle 275 in the second direction in a side view. That is, a height H1 from a traveling surface G to the center of gravity of the power supply 280 is larger than a height H2 from the traveling surface G to the axle 275. As described above, in the present embodiment, the power supply 280 is arranged at a position slightly upward of the axle, and a clearance between the traveling surface G and the power supply 280 is large (see Fig. 5).

Note that the battery serving as the power supply 280 may be of any type as long as the battery is a chargeable/dischargeable secondary battery, and the battery may be, for example, a lithium ion battery or an all-solid-state battery. Alternatively, a primary battery may be used as the battery. In this case, the battery is configured to be detachable, and it is preferable to replace the battery when the remaining battery level has decreased. In addition, in the power supply 280, for example, a fuel cell, a generator (engine and alternator) that converts motive power into electric power, and the like may be used instead of the battery.

### <<Arrangement of Support Portion>>

The support portion 250 supports the mounted body 300 in the second direction in a case where the mounted body 300 is attached to the mounting surface 210. A plurality of support portions 250 are arranged on the upper surface of the vehicle body 260 of the traveling body 200. When the bottom surface of the mounted body 300 and the mounting surface 210 of the traveling body 200 face each other, the support portion 250 protrudes toward the bottom surface of the mounted body 300, that is, upward in the second direction. Therefore, in a case where the mounted body 300 is attached to the mounting surface 210, the bottom surface of the mounted body 300 is supported by the support portion 250. For example, when the mounted body 300 is attached to the traveling body 200, arrangement positions of the support portions 250 and the number of support portions 250 may be determined in consideration of the center of gravity or the like of the mounted body 300 so that stable attachment is achieved, and may be adjusted so as not to interfere with an arrangement portion 560 in the storage station 500 described below. Although the arrangement positions of the support portions 250 and the number of the support portions 250 are arbitrary, it is preferable to adopt an aspect described below.

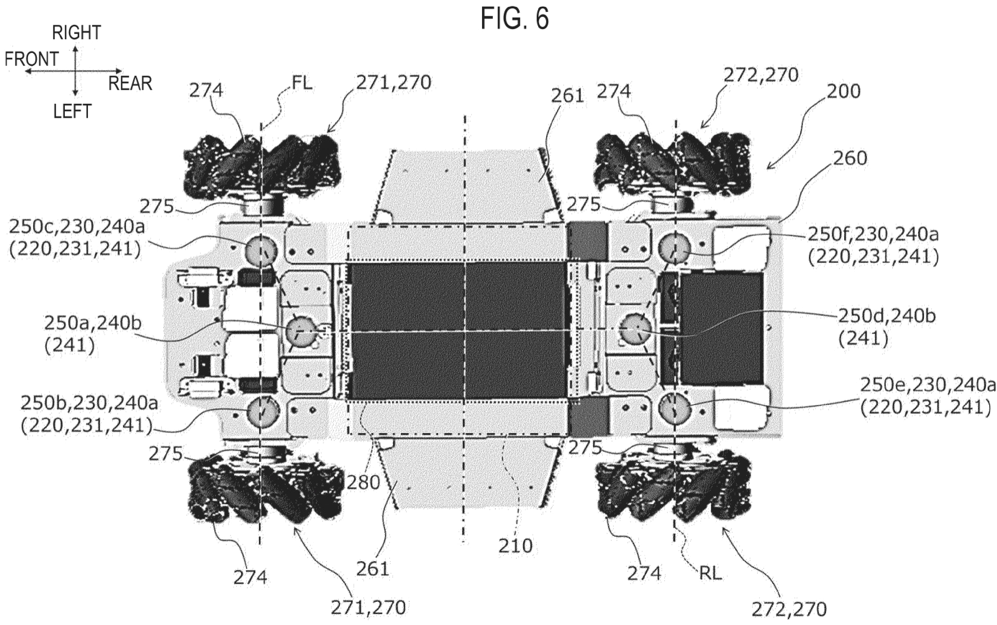

The support portions 250 are arranged at positions respectively corresponding to the respective vertices of the polygon in a plan view (see Fig. 6). The support portions 250 of the present embodiment include six support portions 250a, 250b, 250c, 250d, 250e, and 250f. The arrangement positions of the support portions 250a, 250b, and 250c correspond to vertices of a triangle, and the arrangement positions of the support portions 250d, 250e, and 250f correspond to vertices of a triangle, on the same plane.

That is, in a plan view, there are a plurality of regions of the polygons having vertices where the support portions 250 are arranged. In the present embodiment, one triangular region is arranged on the front side of the vehicle body 260 in the vehicle length direction, and one triangular region is arranged on the rear side of the vehicle body 260 in the vehicle length direction. That is, a total of two triangular regions exist. The triangular region may be, for example, an isosceles triangle, and interior angles corresponding to the support portion 250a and the support portion 250d may each be a vertex angle.

A plurality of regions of the polygons are symmetrically arranged in a plan view. In the present embodiment, for example, figures of the two regions are arranged so as to be line-symmetric with each other with a symmetry line passing through the power supply 280 and extending in the vehicle width direction of the vehicle body 260 as an axis in a plan view. That is, the isosceles triangle having the support portions 250a, 250b, and 250c as the vertices and the isosceles triangle having the support portions 250d, 250e, and 250f as the vertices are line-symmetric with each other with respect to the symmetry line.

The support portion 250 is arranged at a position outward of the power supply 280 in the vehicle width direction of the vehicle body 260. The support portion 250 is arranged at a position outward of the power supply 280 in the vehicle length direction of the vehicle body 260. More specifically, the support portions 250a, 250b, and 250c are arranged at positions forward of the front end of the power supply 280 in the vehicle length direction of the vehicle body 260. The support portion 250b is arranged at a position leftward of a left side surface of the power supply 280 in the vehicle width direction of the vehicle body 260. The support portion 250c is arranged at a position rightward of a right side surface of the power supply 280 in the vehicle width direction of the vehicle body 260.

The support portions 250d, 250e, and 250f are arranged at positions rearward of the rear end of the power supply 280 in the vehicle length direction of the vehicle body 260. The support portion 250e is arranged at a position leftward of a left side surface of the power supply 280 in the vehicle width direction of the vehicle body 260. The support portion 250f is arranged at a position rightward of a right side surface of the power supply 280 in the vehicle width direction of the vehicle body 260.

Further, the support portion 250 is arranged on an imaginary line coaxially passing through the axle 275 of the wheel 273 in a plan view. More specifically, the imaginary line includes a front imaginary line FL and a rear imaginary line RL. The front imaginary line FL is an imaginary line coaxially passing through each axle 275 of the left and right front wheels 271. The rear imaginary line RL is an imaginary line coaxially passing through each axle 275 of the left and right rear wheels 272. The support portions 250b and 250c are arranged on the front imaginary line FL, and the support portion 250e and the support portion 250f are arranged on the rear imaginary line RL in a plan view.

The support portion 250a is arranged between the front imaginary line FL and the front end of the power supply 280 in a plan view. The support portion 250d is arranged between the rear imaginary line RL and the rear end of the power supply 280. The support portion 250a and the support portion 250d are arranged at a substantially central portion of the vehicle body 260 in the vehicle width direction.

### <<Details of Lift Portion, Engagement Portion, and Fixing Portion>>

In the present embodiment, the support portion 250 may function as the lift portion 220, the protruding portion 231 of the engagement portion 230, and the protruding portion 241 of the fixing portions 240a and 240b. More specifically, the support portions 250b, 250c, 250e, and 250f correspond to the lift portion 220 (the protruding portion 231 of the engagement portion 230 and the protruding portion 241 of the fixing portion 240a). The support portions 250a and 250d correspond to the protruding portion 241 of the fixing portion 240b (see Fig. 6).

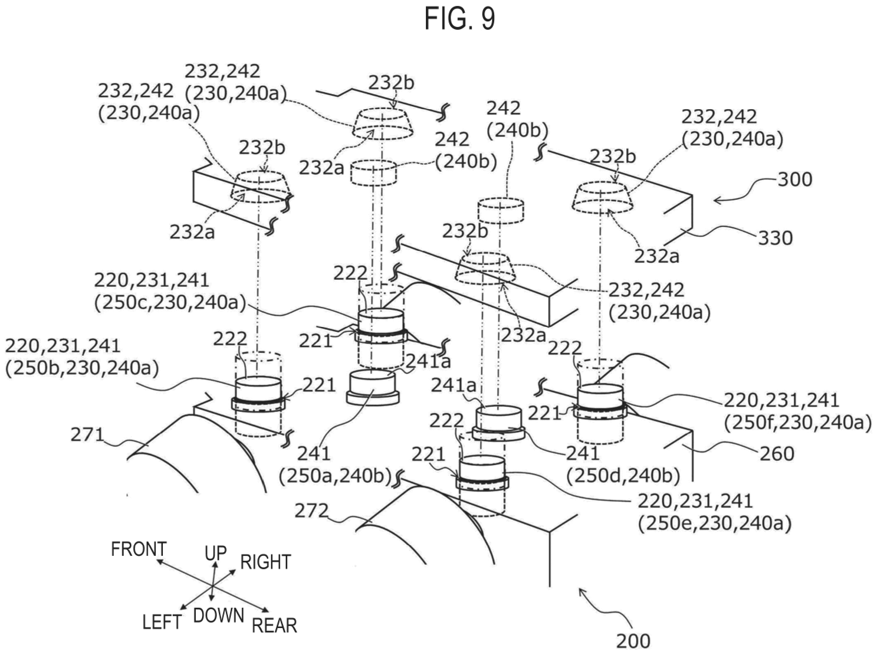

As illustrated in Fig. 9, the lift portion 220 (that is, the support portions 250b, 250c, 250e, and 250f) has a columnar shape. The lift portion 220 is coaxially fitted to a hole portion 221 that partially stores a lower portion of the lift portion 220. The hole portion 221 is arranged on the upper surface of the vehicle body 260 at each of four corners in a plan view. The hole portion 221 is provided so as to correspond to a position of the lift portion 220. The hole portion 221 has a circular opening having a diameter slightly larger than a diameter of the lift portion 220. The lower portion of the lift portion 220 is accommodated in the vehicle body 260 through the opening. A shape of the lift portion 220 (that is, the support portions 250b, 250c, 250e, and 250f) is not limited to the columnar shape, and may be any shape such as a prismatic (for example, a quadrangular prism) shape as long as an axis and a translation direction match.

The lift portion 220 is relatively movable in the second direction (upward direction) and the third direction (downward direction) through the opening. An actuator (for example, a stepping motor) built in the vehicle body 260 is provided at a lower end portion of the lift portion 220. Motive power of the actuator is transmitted to the lower end portion of the lift portion 220, and rotational power is converted into translational movement of the lift portion 220 in an axial direction.

When the actuator rotates in a forward direction, the lift portion 220 moves relative to the vehicle body 260 in the second direction and is exposed from the opening of the hole portion 221, and a top portion 222 shifts further upward. On the other hand, when the actuator rotates in a reverse direction, the lift portion 220 moves relative to the vehicle body 260 in the third direction and is accommodated in the opening of the hole portion 221, and the top portion 222 that has shifted upward shifts further downward.

The lift portion 220 protrudes toward the fitting portion 232 (that is, the fitting portion 242 of the fixing portion 240a) of the engagement portion 230 in the mounted body 300. The fitting portion 232 is provided at each of four corners of the mounted body 300 in a bottom view. The fitting portion 232 is positioned so as to correspond to arrangement of the lift portion 220 when the mounted body 300 is attached to the traveling body 200. The fitting portion 232 is recessed upward, and the lift portion 220 can be fitted with the fitting portion 232 when the mounted body 300 is attached.

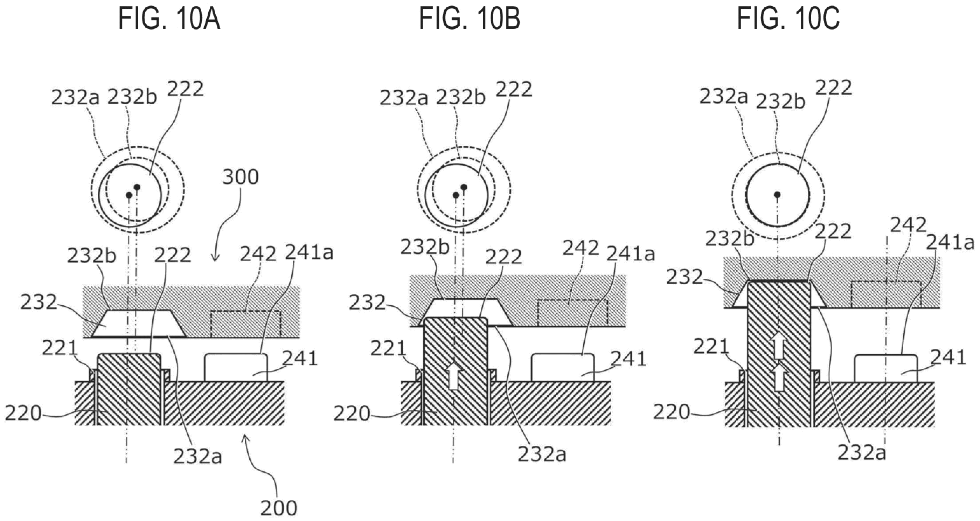

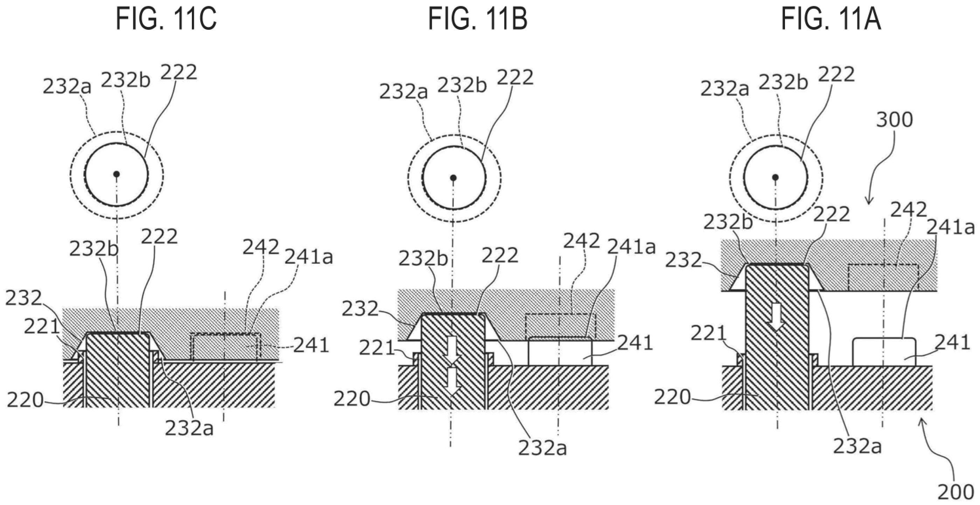

As the lift portion 220 is fitted into the fitting portion 232, it is possible to lift and lower the mounted body 300 while supporting the mounted body 300. That is, the mounted body 300 moves in the second direction (upward direction) according to the movement of the lift portion 220 in the second direction (see Fig. 10). The mounted body 300 moves in the third direction (downward direction) according to the movement of the lift portion 220 in the third direction (downward direction) (see Fig. 11).

As the lift portion 220 is fitted into the fitting portion 232, the traveling body 200 and the mounted body 300 are engaged with each other. In this manner, the lift portion 220 also functions as the protruding portion 231 of the engagement portion 230. Further, as the lift portion 220 is fitted into the fitting portion 242, the relative movement of the traveling body 200 and the mounted body 300 is restricted, and the mounted body 300 is fixed to the traveling body 200. In this manner, the lift portion 220 also functions as the protruding portion 241 of the fixing portion 240a.

The fitting portion 232 of the engagement portion 230 (the fitting portion 242 of the fixing portion 240a) has a recessed shape to which the protruding portion 231 (the protruding portion 241 of the fixing portion 240a) can be fitted. Such a shape has a portion whose diameter decreases in a direction in which the protruding portion 231 (the protruding portion 241 of the fixing portion 240a) is fitted.

More specifically, the fitting portion 232 (the fitting portion 242 of the fixing portion 240a) has a circular opening 232a formed at a lower end and an abutment 232b formed at an upper end. A diameter of the opening 232a is larger than a diameter of the abutment 232b. In the present embodiment, the fitting portion 232 (the fitting portion 242 of the fixing portion 240a) has a mortar shape or a cup shape in a bottom view. Here, a diameter of the columnar shape of the lift portion 220, which serves as the protruding portion 231 of the engagement portion 230 (the protruding portion 241 of the fixing portion 240a), is substantially the same as the diameter of the abutment 232b and is smaller than the diameter of the opening 232a (see Figs. 9, 10, and 11).

The protruding portion 241 (that is, the support portion 250a and the support portion 250d) of the fixing portion 240b has a columnar shape and is arranged at a position different from the lift portion 220. Unlike the lift portion 220, the protruding portion 241 of the fixing portion 240b does not move in the up-down direction and is integrally fixed to the vehicle body 260. That is, although the protruding portion 241 of the fixing portion 240b constantly protrudes upward from the vehicle body 260, a position of a top portion 241a thereof is unchanged in the up-down direction.

Further, the top portion 241a of the fixing portion 240b has an attraction portion. Hereinafter, the top portion 241a may be referred to as an attraction portion 241a. The attraction portion 241a is configured to be able to generate a magnetic-based attraction force between the traveling body 200 and the mounted body 300, and fixes the mounted body 300 to the traveling body 200 by an action of the attraction force. In the present embodiment, excitation/de-excitation of the attraction portion 241a is switched in response to the supply of electricity. The attraction portion 241a may be configured to generate the attraction force when excited and cancel the attraction force when de-excited. For example, a plurality of electromagnets may be built in the attraction portion 241a, and the generation/cancellation of the attraction force may be switched by adjusting a magnetization direction of each electromagnet.

Similarly, the top portion 222 of the lift portion 220 may be provided with the attraction portion. In this case, the magnetic-based attraction force is generated at a total of six attraction portions corresponding to four lift portions 220 and two fixing portions 240b.

The protruding portion 241 (attraction portion 241a) of the fixing portion 240b protrudes toward the fitting portion 242 of the fixing portion 240b in the mounted body 300. The fitting portion 242 is provided at a substantially central portion of the mounted body 300 in the vehicle width direction in a bottom view. The fitting portion 242 is positioned so as to correspond to the arrangement of the protruding portion 241 (attraction portion 241a) when the mounted body 300 is attached to the traveling body 200. The fitting portion 242 is recessed upward, and the protruding portion 241 (attraction portion 241a) can be fitted with the fitting portion 242 when the mounted body 300 is attached.

The protruding portion 241 (attraction portion 241a) is fitted into the fitting portion 242, and the attraction force is generated by the excitation of the attraction portion 241a, so that the relative movement of the traveling body 200 and the mounted body 300 is restricted. As a result, the mounted body 300 is fixed to the traveling body 200. The fitting portion 242 of the fixing portion 240b has a recessed shape to which the protruding portion 241 of the protruding fixing portion 240b can be fitted. Such a shape is arbitrary as long as the fitting portion 242 can be fitted, and has the same diameter in a fitting direction in the present embodiment (see Figs. 9, 10, and 11). The fitting portion 242 may have a shape whose diameter decreases in the fitting direction instead of the above shape.

### <<Vertical Movement of Mounted Body by Lift Portion>>

As illustrated in Figs. 10 and 11, the lift portion 220 operates to move the mounted body 300 in the second direction (upward) and the third direction (downward). As an example of the operation, it is assumed that the mounted body 300 is arranged at an arrangement position upward of the mounting surface 210 of the traveling body 200 in the second direction at the start of the operation. In addition, it is assumed that the top portion 222 of the lift portion 220 has shifted to the lowermost position.

Furthermore, it is assumed that a circular cross section of the lift portion 220 is eccentric from the abutment 232b of the fitting portion 232 and is present in a region of a circular cross section of the opening 232a in a plan view at the start of the operation. That is, a misalignment occurs between an axis of the lift portion 220 and an axis of the fitting portion 232. In addition, a misalignment also occurs between an axis of the protruding portion 241 (the attraction portion 241a) and an axis of the fitting portion 242.

When the operation starts from the state of Fig. 10A, the lift portion 220 moves in the second direction relative to the vehicle body 260 (the lift portion 220 is exposed from the hole portion 221). The lift portion 220 is fitted into the fitting portion 232 via the opening 232a with the ascending top portion 222 as a tip. As illustrated in Fig. 10B, as the top portion 222 ascends, an edge of the top portion 222 comes into contact with an inner wall of the fitting portion 232.

Here, the fitting portion 232 has a diameter decreasing in the fitting direction. Therefore, the top portion 222 is guided to the abutment 232b by the inner wall of the fitting portion 232 while ascending. As a result, while the fitting portion 232 slides with respect to the lift portion 220, the eccentric circular cross section of the lift portion 220 in a plan view approaches the abutment 232b of the fitting portion 232. That is, the mounted body 300 moves such that the axis of the lift portion 220 and the axis of the fitting portion 232 are aligned with each other.

As illustrated in Fig. 10C, when the ascending top portion 222 reaches the abutment 232b, the circular cross section of the lift portion 220 is aligned with the abutment 232b of the fitting portion 232 in a plan view. That is, the axis of the lift portion 220 and the axis of the fitting portion 232 are aligned with each other. The axis of the protruding portion 241 (attraction portion 241a) and the axis of the fitting portion 242 are aligned with each other.

After the top portion 222 reaches the abutment 232b, the ascending top portion 222 stops at the uppermost position in a state in which the top portion 222 and the abutment 232b come into contact with each other. As described above, the mounted body 300 facing the mounting surface 210 moves upward from the arrangement position in the second direction while being supported by the ascending lift portion 220.

It is assumed that the top portion 222 of the lift portion 220 has shifted to the uppermost position in the state of Fig. 11A. In addition, it is assumed that the top portion 222 and the abutment 232b come into contact with each other, so that the lift portion 220 supports the mounted body 300. From this state, the lift portion 220 moves in the third direction relative to the vehicle body 260 (the lift portion 220 is accommodated in the hole portion 221).

That is, the top portion 222 descends while supporting the mounted body 300. Therefore, the mounted body 300 moves in the third direction in a state in which the top portion 222 and the abutment 232b come into contact with each other. At the same time, the fitting portion 242 descends so as to approach the protruding portion 241 (attraction portion 241a). Here, the axis of the protruding portion 241 (attraction portion 241a) and the axis of the fitting portion 242 are aligned with each other.

Therefore, as illustrated in Fig. 11B, the protruding portion 241 is fitted into the descending fitting portion 242 with the attraction portion 241a as a tip. As illustrated in Fig. 11C, the descending top portion 222 stops at the lowermost position. At the same time, the fitting of the protruding portion 241 into the fitting portion 242 is completed. As described above, the mounted body 300 that has shifted upward moves downward so as to approach the mounting surface 210 while being supported by the descending lift portion 220.

In the state of Fig. 11(c), the lift portions 220 at four corners are fitted into the respective fitting portions 232, respectively. Accordingly, the engagement between the traveling body 200 and the mounted body 300 is achieved. As a result, the relative movement of the traveling body 200 and the mounted body 300 is restricted, and the fixation of the mounted body 300 to the traveling body 200 is also achieved. Further, the state of Fig. 11(c) is a state in which the abutment of the fitting portion 242 and the attraction portion 241a come into contact with each other. By exciting the attraction portion 241a, the magnetic-based attraction force is generated, and further fixation of the mounted body 300 to the traveling body 200 is achieved.

### <<Electric Device>>

As illustrated in Fig. 12, the traveling body 200 includes, as the electric devices, the power supply 280, the communication device 281, a sensor 282, and the control device 283. The power supply 280 is electrically connected to the communication device 281, the control device 283, the motor of the traveling device 270, the actuator of the lift portion 220, and the electromagnet of the attraction portion 241a so as to be able to supply power to each of them.

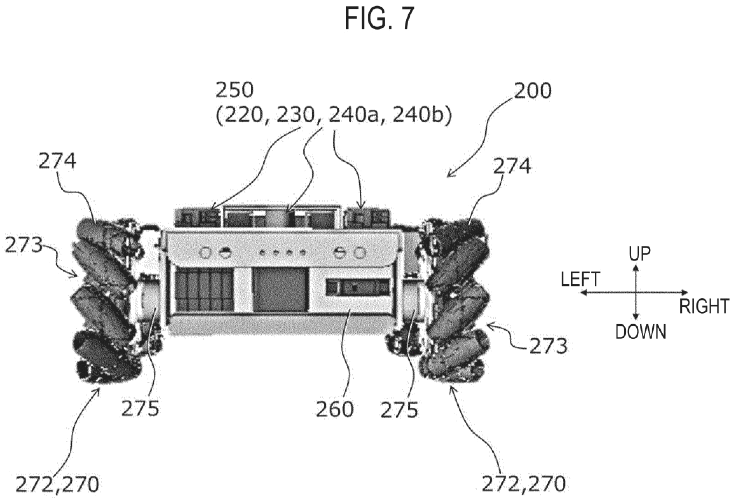

A device (such as a converter) related to the motor, a switch, and the like may be interposed between the power supply 280 and a power supply target. The power feeding by the power supply 280 is controlled by the control device 283, so that the traveling device 270, the lift portion 220, and the attraction portion 241a are controlled. As illustrated in Figs. 6 and 7, the communication device 281, the control device 283, a device related to the motor, and the like are arranged at positions rearward of the power supply 280 in the vehicle length direction of the vehicle body 260. The above devices may be integrally arranged behind the vehicle body 260 as an electronic unit.

The communication device 281 is connected to the control device 283 and the sensor 282 via a communication network N1 such as a controller area network (CAN). The communication device 281 is also connected to an external terminal (not illustrated) to enable information communication. The communication device 281 transmits information received from the external terminal to the communication network N1 and transmits information from the communication network N1 to the external terminal.

The external terminal may be, for example, a mobile terminal, which is a terminal that enables an instruction input by an operator and is owned by the operator, or a server. Examples of an instruction in the mobile terminal or the server include a traveling/steering instruction for the traveling device 270, an instruction for attachment and detachment of the mounted body 300 to and from the traveling body 200, and an instruction for operations of a first movable tool 310 and a second movable tool 320 described below.

Furthermore, the external terminal may be a terminal capable of displaying information indicating a state of the mobile body 100, and may be a fixed terminal provided outside the storage station 500 described below. The information communication between the communication device 281 and the external terminal may be, for example, radio communication according to IEEE802.11 series standards (for example, Wi-Fi (registered trademark)). Note that the format of the radio communication is not limited to the above, and for example, infrared communication, Bluetooth (registered trademark), or cellular/non-cellular low-power wide-area (LPWA) may be used. Furthermore, information communication by wired connection may be performed instead of the radio communication.

The sensor 282 includes a distance sensor (distance measuring sensor), a remaining battery level sensor, and the like. Hereinafter, the sensor 282 may be referred to as a distance measuring sensor 282. The distance measuring sensor 282 can measure a separation distance between the vehicle body 260 and a detected object separated from the vehicle body 260. The distance measuring sensor 282 may measure the separation distance based on a reflection status of a beam or the like. For example, an ultrasonic sensor, a light detection and ranging (LiDAR), or the like is used as the distance measuring sensor 282. Note that a range sensor may be used instead of the distance measuring sensor 282.

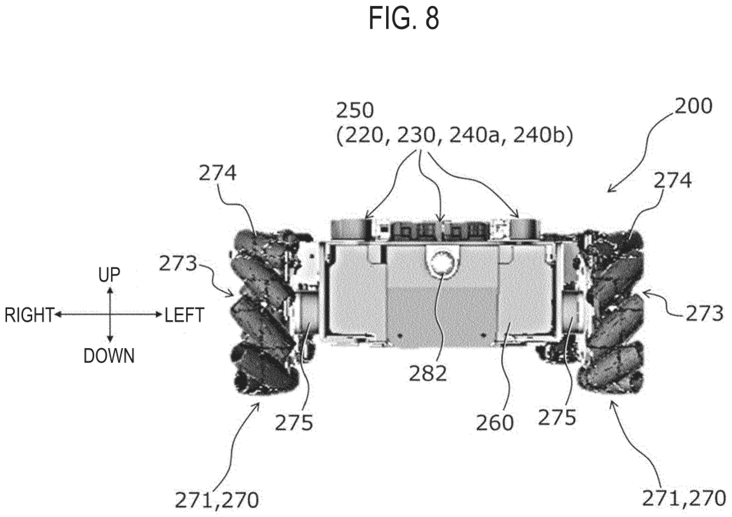

As illustrated in Fig. 8, in the present embodiment, the distance measuring sensor 282 is provided at the front end of the vehicle body 260 in the vehicle length direction and at a substantially central portion of the vehicle body 260 in the vehicle width direction. As a result, a separation distance between the front end of the traveling body 200 and a detected portion 531 described below is measured. In addition, a plurality of distance measuring sensors 282 may also be provided in the vicinity of an outer end on a side surface on the front side of the vehicle body.

In the present embodiment, the distance measuring sensor 282 is provided at the front end of the vehicle body 260, but instead, a camera may be provided at the front end of the vehicle body 260. The camera may capture an image of the outside of the traveling body 200, for example. The captured data may be transmitted to the external terminal via the communication network N1 and the communication device 281.

As illustrated in Fig. 12, the control device 283 is a device that performs control of the traveling device 270, control of the lift portion 220, control of the attraction portion 241a, and the like. The control device 283 includes an attachment control unit 283a, a detachment control unit 283b, a stop position determination unit 283c, and an automated driving control unit 283d, each of which is implemented by an electric/electronic circuit, a program stored in a central processing unit (CPU), or the like. An instruction signal received by the communication device 281 and a detection signal detected by the sensor 282 are transmitted to the control device 283 via the communication network N1.

The attachment control unit 283a performs control to attach the arranged mounted body 300 on the traveling body 200 to which the mounted body 300 is not attached. More specifically, in the case of attaching the mounted body 300 arranged at the arrangement position upward of the mounting surface 210 in the second direction to the traveling body 200 to which the mounted body 300 is not attached, the attachment control unit 283a controls the lift portion 220 so as to move the mounted body 300 facing the mounting surface 210 upward from the arrangement position in the second direction while supporting the mounted body 300 (see Fig. 10). In the present embodiment, it is assumed that the mounted body 300 is arranged at the arrangement position in the storage station 500 described below.

The control of the lift portion 220 is performed in a state in which the traveling body 200 is stopped at a stop position. The stop position is determined by the stop position determination unit 283c. In the present embodiment, the stop position is determined based on a result of detecting the detected portion by the distance measuring sensor 282. At the stop position, the mounting surface 210 faces the bottom surface of the mounted body 300. The determination of the stop position is described in detail below.

Next, the attachment control unit 283a controls the traveling device 270 such that the traveling body 200 travels in the first direction integrally with the mounted body 300 in a state in which the mounted body 300 has shifted upward from the arrangement position. Next, the attachment control unit 283a controls the lift portion so as to move the mounted body 300, which has shifted upward, in the third direction while supporting the mounted body 300 (see Fig. 11).

Then, the attachment control unit 283a controls the fixing portions 240a and 240b so as to fix the mounted body 300 to the traveling body 200. More specifically, the attraction portion 241a that has been de-excited is switched to an excited state to generate the magnetic-based attraction force.

The detachment control unit 283b detaches the mounted body 300 from the traveling body 200 to which the mounted body 300 is attached, and performs control to arrange the mounted body 300. More specifically, in the case of detaching the mounted body 300 from the traveling body 200 to which the mounted body 300 is attached and arranging the mounted body 300 at the arrangement position upward of the mounting surface 210 in the second direction, the detachment control unit 283b controls the fixing portions 240a and 240b so as to release the fixation of the mounted body 300 to the traveling body 200. More specifically, the attraction portion 241a that has been excited is switched to a de-excited state to cancel the magnetic-based attraction force.

Next, the detachment control unit 283b controls the lift portion 220 so as to move the mounted body 300 attached to the mounting surface 210 upward from the arrangement position in the second direction while supporting the mounted body 300. Next, the detachment control unit 283b controls the traveling device 270 such that the traveling body 200 travels to the above-described stop position integrally with the mounted body 300 in a state in which the mounted body 300 has shifted upward from the arrangement position.

Then, the detachment control unit 283b controls the lift portion 220 to move the mounted body 300, which has shifted upward, in the third direction while supporting the mounted body 300 (see Fig. 11). The control of the lift portion 220 is performed in a state in which the traveling body 200 is stopped at the above-described stop position.

The automated driving control unit 283d causes the traveling body 200 to travel by automated driving so as to stop at the determined stop position. In the present embodiment, when attaching the mounted body 300 to the traveling body 200, the automated driving control unit 283d is executed in conjunction with the execution of the attachment control unit 283a in response to an instruction from the external terminal. Further, when detaching the mounted body 300 from the traveling body 200, the automated driving control unit 283d is executed in conjunction with the execution of the detachment control unit 283b in response to an instruction from the external terminal.

### <Mounted Body>

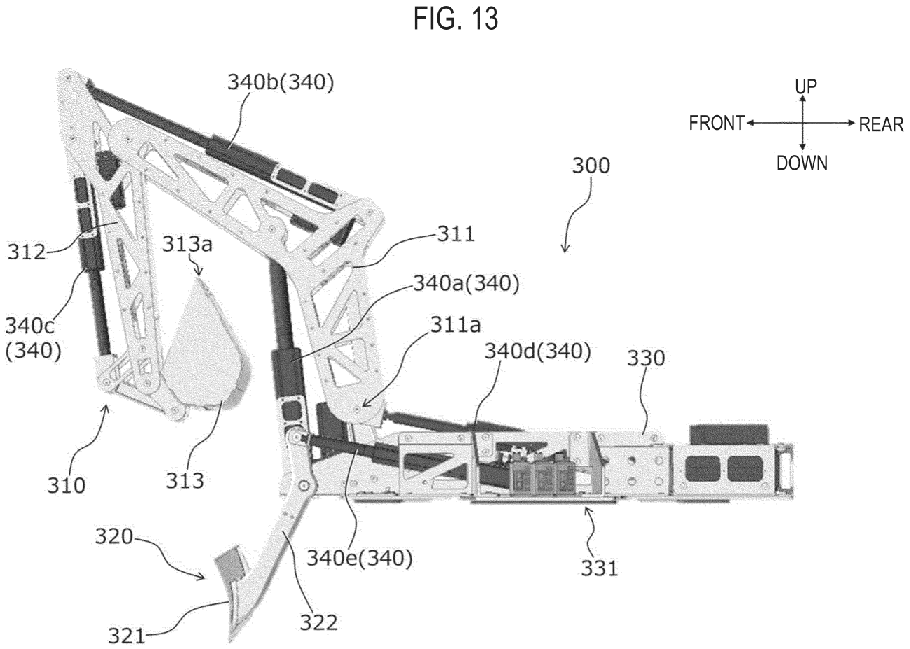

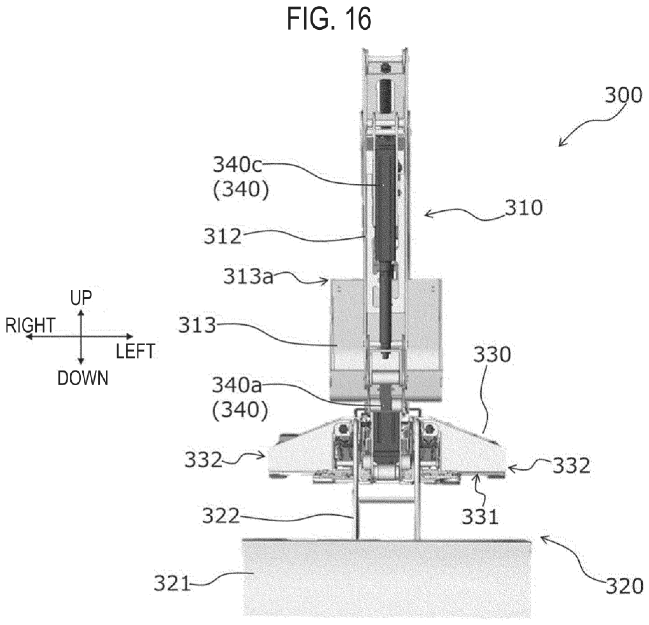

As illustrated in Figs. 13, 14, 15, 16, 17, 18, and 19, the mounted body 300 of the present embodiment is the attachment 300 functioning as a backhoe when attached to the traveling body 200. The mounted body 300 includes the first movable tool 310, the second movable tool 320, and a base portion 330.

The mounted body 300 includes drive units 340. The drive units 340 include a drive unit 340a, a drive unit 340b, a drive unit 340c, a drive unit 340d, and a drive unit 340e. The drive unit 340a, the drive unit 340b, the drive unit 340c, and the drive unit 340d are used to drive the first movable tool 310. The drive unit 340e is used to drive the second movable tool 320.

The base portion 330 is attachable to and detachable from the mounting surface 210 of the vehicle body 260. The base portion 330 is formed of a substantially rectangular parallelepiped housing, and a power supply 380 and various electric devices (a communication device, a control device, and the like) are mounted on the base portion 330. A bottom surface 331 (lower end) of the base portion 330 faces the mounting surface 210 of the traveling body 200 substantially in parallel.

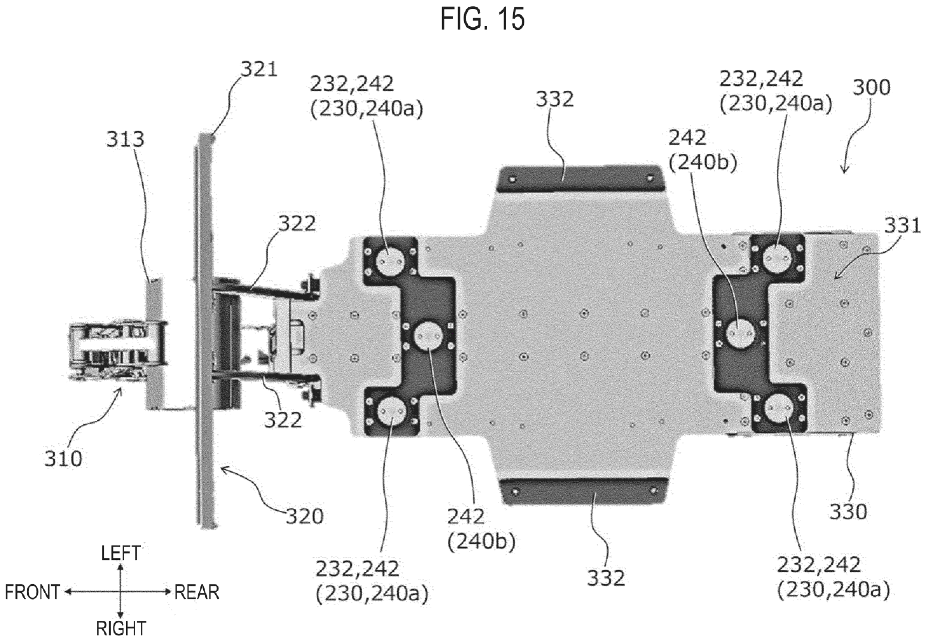

As illustrated in Fig. 15, the lift portion 220, the fitting portion 232 in the engagement portion 230, and the fitting portions 242 in the fixing portions 240a and 240b are provided on the bottom surface 331 of the base portion 330. The fitting portions 232 and the fitting portions 242 are arranged so as to correspond to six support portions 250 of the traveling body 200, respectively. Details of the arrangement positions and structures of the fitting portion 232 and the fitting portion 242 are as described above (see Figs. 9, 10, and 11).

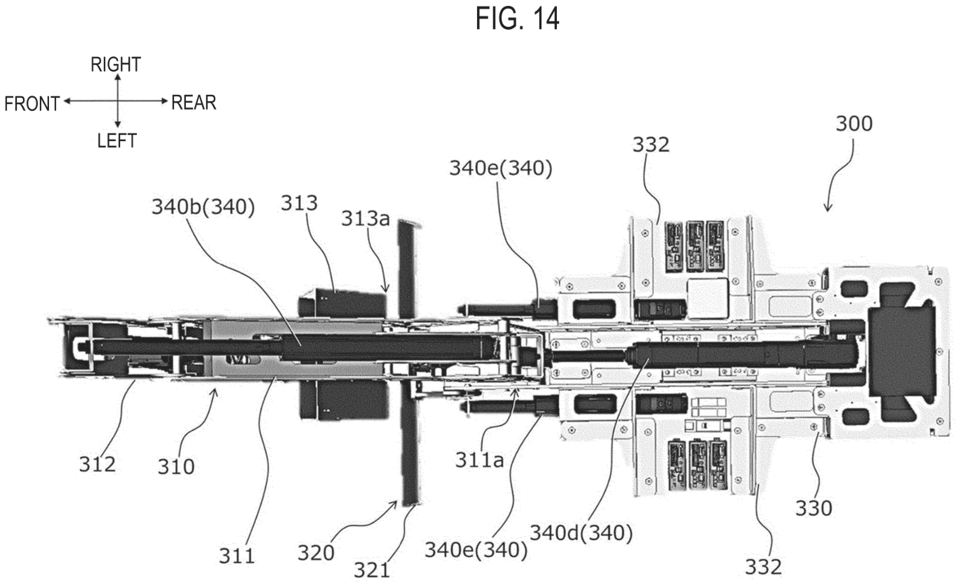

As illustrated in Figs. 14 and 15, overhanging portions 332 are provided on left and right side surfaces of the base portion 330. The overhanging portion 332 has a trapezoidal shape in a plan view, and overhangs outward in the vehicle width direction from the side surface of the base portion 330 so as to face the overhanging portion 261 of the vehicle body 260 in the up-down direction. A lower base of the trapezoidal shape is connected to the side surface of the base portion 330, and an upper base of the trapezoidal shape corresponds to an end portion in an overhanging direction.

### <<First Movable Tool>>

As illustrated in Fig. 13, the first movable tool 310 includes a boom 311, an arm 312, and a bucket 313. The boom 311, the arm 312, and the bucket 313 are connected in an articulated manner, and the first movable tool 310 is formed in an elongated shape. The boom 311 has a truss structure and is bent at a substantially intermediate portion between one end 311a and the other end. One end 311a of the boom 311 is supported by the base portion 330 such that the boom 311 is relatively rotatable with respect to the base portion 330. A position at which one end of the boom 311 is supported is a substantially central portion of the base portion 330 in the vehicle width direction on a front side of the base portion 330.

The arm 312 has a truss structure and extends substantially linearly from one end to the other end. One end of the arm 312 is supported by the boom 311 such that the arm 312 is relatively rotatable with respect to the boom 311. A position at which one end of the arm 312 is supported is the other end of the boom 311.

The bucket 313 is configured such that one end is supported and the other end 313a describes a locus of a rotation radius. The other end 313a is provided with a cutting edge. One end of the bucket 313 is supported by the arm 312 via a bucket link such that the bucket 313 is relatively rotatable with respect to the arm 312. A position at which one end of the bucket 313 is supported is the other end of the arm 312.

The drive unit 340a, the drive unit 340b, the drive unit 340c, and the drive unit 340d are cylinders whose one end and the other end are defined, and can extend and retract in an axial direction. Actuators (for example, stepping motors) are built in the drive unit 340a, the drive unit 340b, the drive unit 340c, and the drive unit 340d, respectively, and rotational power thereof is converted into an extension/retraction motion in the axial direction. When the actuator rotates in a forward/reverse direction, the drive unit 340a, the drive unit 340b, the drive unit 340c, and the drive unit 340d extend/retract.

One end of the drive unit 340a is connected at a position forward of a support position of the boom 311 (one end 311a of the boom 311) on the base portion 330. The other end of the drive unit 340a is connected at a position slightly forward of a bent portion on a lower side of the boom 311. The boom 311 rotates relative to the base portion 330 in response to the extension/retraction of the drive unit 340a.

One end of the drive unit 340b is connected at a position slightly rearward of a connection position of the drive unit 340a on an upper side of the boom 311. The other end of the drive unit 340b is connected at a position slightly upward of the support position of the arm 312. The arm 312 rotates relative to the boom 311 in response to extension/retraction of the drive unit 340b.

One end of the drive unit 340c is connected at a position slightly upward of the support position of the arm 312. The other end of the drive unit 340c is connected to the bucket link provided on one end side of the bucket 313, on the other end side of the arm 312. The bucket 313 rotates relative to the arm 312 in response to extension/retraction of the drive unit 340c.

As described above, the boom 311, the arm 312, and the bucket 313 included in the first movable tool 310 relatively rotate as described above by the drive of the drive unit 340a, the drive unit 340b, and the drive unit 340c. The other end 313a of the bucket 313 extends from the base portion 330 in the first direction in response to the relative rotation of each of the boom 311, the arm 312, and the bucket 313, and can work as a cutting edge.

As illustrated in Figs. 13 and 14, one end of the drive unit 340d (corresponding to a first drive unit) is connected to a rear half portion in the vehicle length direction, the portion being positioned rearward of the support position of the boom 311 on the base portion 330 (one end 311a of the boom 311). The other end of the drive unit 340d is connected to the vicinity of one end 311a of the boom 311. The boom 311 rotates relative to the base portion 330 in response to extension/retraction of the drive unit 340d.

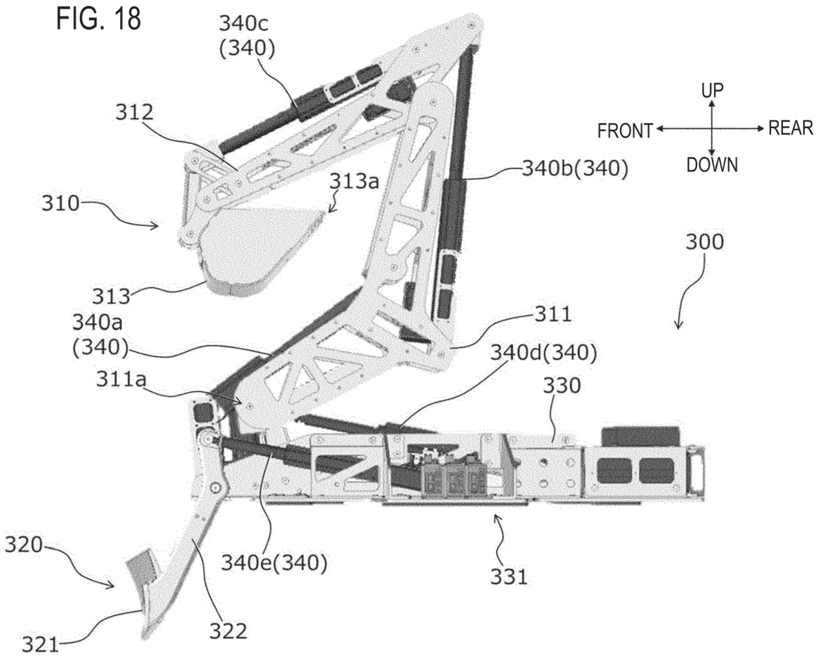

As illustrated in Fig. 18, in a case where the first movable tool 310 is accommodated in the storage station 500 or the like described below, the first movable tool 310 relatively rotates with one end 311a as a fulcrum so as to approach the base portion 330. In the present embodiment, the drive unit 340d pulls the first movable tool 310 extending in the first direction toward a side opposite to the first direction to bring the first movable tool closer to the base portion 330.

More specifically, the drive unit 340a, the drive unit 340b, and the drive unit 340c are also driven to fold the arm 312 and the bucket 313 of the first movable tool 310, and the drive unit 340d is driven to tilt the boom 311 clockwise as viewed in the drawing with the one end 311a as a fulcrum. As a result, a posture is held in a state in which the first movable tool 310 is positioned close to the base portion 330. Therefore, the entire mobile body 100 has a shape suitable for accommodation.

### <<Second Movable Tool>>

As illustrated in Fig. 13, in the present embodiment, the second movable tool 320 is formed in a plate shape as a dozer. Hereinafter, the second movable tool 320 will be described as the dozer 321. When the mounted body 300 is attached to the traveling body 200, the dozer 321 is arranged at a position forward of the traveling body 200 (see, for example, Figs. 1, 2, and 19).

As illustrated in Figs. 15, 16, and 17, the dozer 321 is arranged at a position downward of the base portion 330 via a dozer arm 322. The dozer 321 has a substantially rectangular shape in a front view, and can work on a surface directed in the first direction. A side opposite to the surface faces the front end of the vehicle body 260, and one end of each of two dozer arms 322 is connected.

As illustrated in Fig. 13, the dozer arm 322 extends upward from a connection portion of the dozer 321, and is supported by the base portion 330 so as to be relatively rotatable with respect to the base portion 330. The other end of the dozer arm 322 is positioned upward of the support portion on the base portion 330.

The drive unit 340e (corresponding to a second drive unit) is a cylinder whose one end and the other end are defined, and can extend and retract in the axial direction. An actuator (for example, a stepping motor) is built in the drive unit 340e, and rotational power thereof is converted into an extension and retraction motion in the axial direction. When the actuator rotates in a forward/reverse direction, the drive unit 340e extends/retracts.

As illustrated in Figs. 14 and 15, two drive units 340e are provided and correspond to the respective dozer arms 322. The two drive units 340e and the dozer arms 322 are arranged so as to sandwich the first movable tool 310 therebetween. One end of the drive unit 340e is connected to the other end of the dozer arm 322 at a position upward of a support position of the dozer arm 322 on the base portion 330. The other end of the drive unit 340e is connected to a rear half portion in the vehicle length direction, the portion being positioned rearward of one end 311a of the boom 311.

As described above, the drive unit 340e is provided at a position upward of the second movable tool 320 in the second direction, and is driven to relatively move the second movable tool 320. That is, the dozer 321 moves relative to the base portion 330 via the dozer arm 322 in response to the extension/retraction of the drive unit 340e. As a result, work is performed on the surface of the dozer 321 that is directed in the first direction.

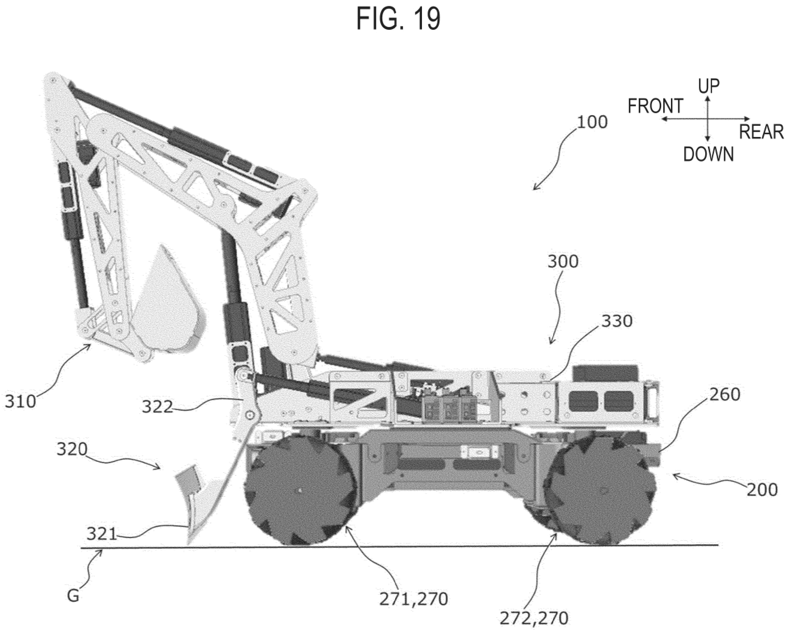

As illustrated in Fig. 19, the second movable tool 320 is configured to be able to come into contact with a ground surface (that is, the traveling surface G) of the traveling body 200 when work by the first movable tool 310 is performed in a state in which the mounted body 300 is attached to the traveling body 200. More specifically, a lower end of the substantially rectangular dozer 321 faces the ground surface. In the work by the first movable tool 310, when the center of gravity fluctuates and the mobile body 100 is tilted, the lower end of the dozer 321 comes into contact with the ground. That is, the second movable tool 320 has a function as an outrigger in addition to a function of working as the dozer 321.

### <<Electric Device>>

As illustrated in Fig. 12, the mounted body 300 includes, as electric devices, the power supply 380, a communication device 381, and a control device 382. The power supply 380 is electrically connected to the communication device 381, the control device 382, and the actuators of the drive unit 340a, the drive unit 340b, the drive unit 340c, the drive unit 340d, and the drive unit 340e so as to be able to supply power to each of them. Note that the power supply 380 may be chargeable through cable-connected power feeding, non-contact power feeding, or the like via a predetermined electric device (for example, a fixed or movable charger). A form, a timing, a location, and the like of charging of the power supply 380 are arbitrary, and for example, as described below, when the mounted body 300 is stored in the storage station 500, the power supply 380 may be charged by contact power feeding or non-contact power feeding. On the other hand, the power supply 380 may be charged outside the storage station 500.

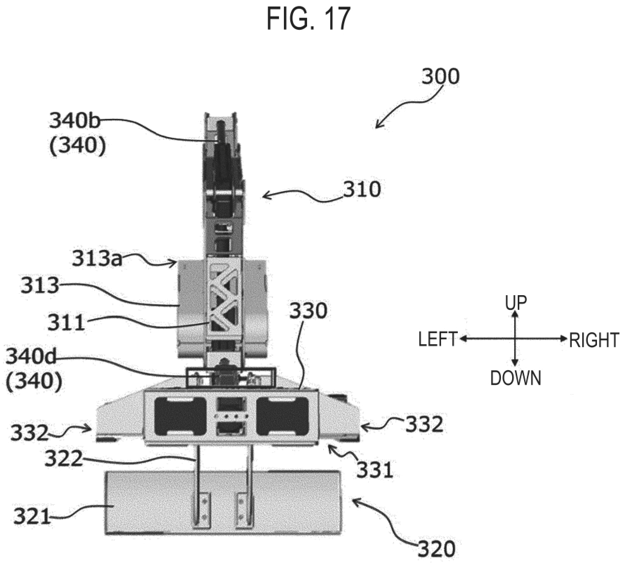

A device (such as a converter) related to the motor, a switch, and the like may be interposed between the power supply 380 and a power supply target. The power feeding by the power supply 380 is controlled by the control device 382, so that the drive unit 340a, the drive unit 340b, the drive unit 340c, the drive unit 340d, and the drive unit 340e are controlled. As illustrated in Figs. 14 and 17, the power supply 380, the communication device 381, the control device 382, a device related to the motor, and the like may be integrally arranged as an electronic unit on a rear side of the base portion 330 in the vehicle length direction or on the overhanging portion 332.

The communication device 381 is connected to the control device 382 via a communication network N2 such as a CAN. In addition, a battery sensor (not illustrated) of the power supply 380 may be connected to the communication network N2. The communication device 381 is also connected to the above-described external terminal to enable information communication. The communication device 381 transmits information received from the external terminal to the communication network N2 and transmits information from the communication network N2 to the external terminal. The information communication between the communication device 381 and the external terminal may be, for example, radio communication according to the above-described standards. Note that the format of the radio communication is not limited to the above, and for example, infrared communication, Bluetooth (registered trademark), or cellular/non-cellular low-power wide-area (LPWA) may be used. Furthermore, information communication by wired connection may be performed instead of the radio communication.

As illustrated in Fig. 12, the control device 382 is a device that performs control and the like of the drive unit 340a, the drive unit 340b, the drive unit 340c, the drive unit 340d, and the drive unit 340e. The control device 382 is implemented by an electric/electronic circuit, a program stored in a CPU or the like, and the like. An instruction signal received by the communication device 381 or the like is transmitted to the control device 382 via the communication network N2.

### <Storage System>

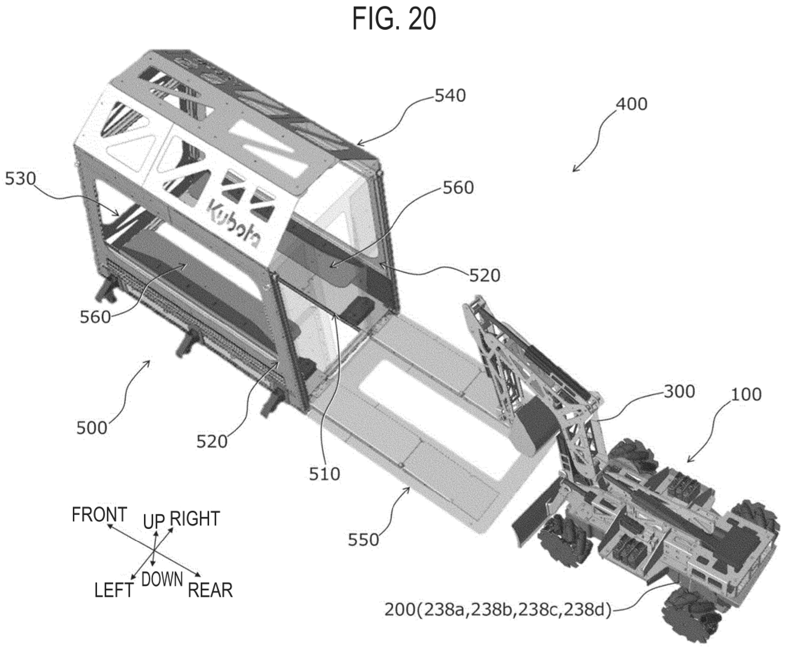

As illustrated in Figs. 12 and 20, the storage system 400 of the mobile body 100 according to the first embodiment of the present invention includes the storage station 500, the stop position determination unit 283c, the automated driving control unit 283d, the attachment control unit 283a, and the detachment control unit 283b. In the present embodiment, the stop position determination unit 283c, the automated driving control unit 283d, the attachment control unit 283a, and the detachment control unit 283b are included in the traveling body 200 of the mobile body 100. Alternatively, the stop position determination unit 283c, the automated driving control unit 283d, the attachment control unit 283a, and the detachment control unit 283b may be included in a portion different from the traveling body 200 (for example, the mounted body 300 or other terminals).

In the storage system 400, the stop position determination unit 283c determines the stop position of the mobile body 100 or the traveling body 200 inside the storage station 500. In the storage system 400, the automated driving control unit 283d causes the mobile body 100 or the traveling body 200 positioned outside the storage station 500 to travel by automated driving and stop at the stop position.

In the storage system 400, the detachment control unit 283b detaches the mounted body 300 from the mobile body 100 to which the mounted body 300 is attached at the stop position in the storage station 500, and arranges and stores the mounted body 300 on the arrangement portion 560 of the storage station 500. In the storage system 400, the attachment control unit 283a attaches the mounted body 300 arranged on the arrangement portion 560 to the traveling body 200 at the stop position in the storage station 500.

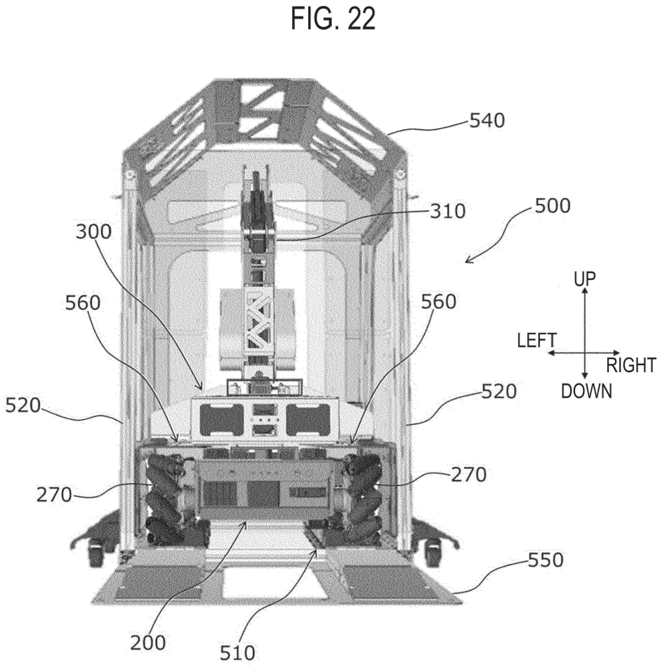

In the storage station 500, both the mounted body 300 and the traveling body 200 (that is, the mobile body 100) may be stored at the same time, or only the traveling body 200 or only the mounted body 300 may be stored (see, for example, Figs. 22, 23, and 25).

### <<Configuration of Storage Station>>

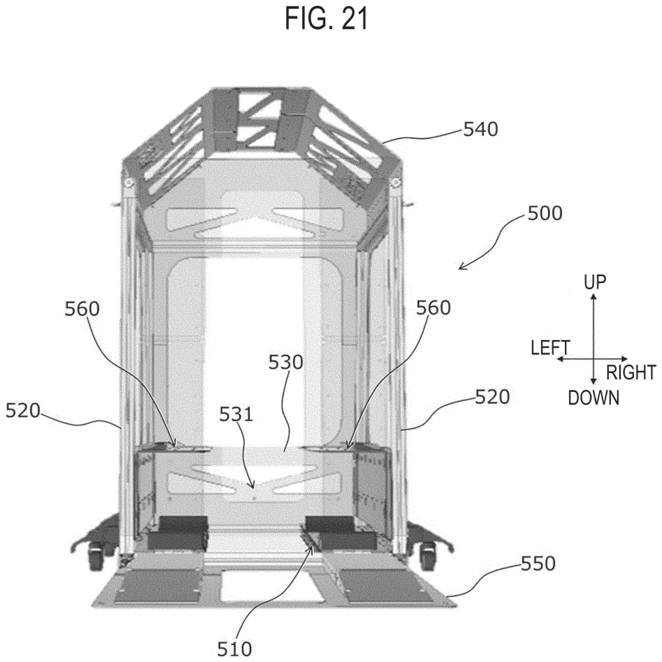

As illustrated in Figs. 20 and 21, the storage station 500 is a housing capable of accommodating the entire mobile body 100. The storage station 500 has a rectangular bottom surface portion 510, and a longitudinal direction and a lateral direction of the bottom surface portion 510 correspond to the vehicle length direction and the vehicle width direction of the vehicle body 260. A dimension of the bottom surface portion 510 in the longitudinal direction is larger than a vehicle length dimension of the vehicle body 260. A dimension of the bottom surface portion 510 in the lateral direction is larger than a vehicle width dimension of the vehicle body 260.

A side surface portion 520 is erected upward on each long side of the bottom surface portion 510. A front surface portion 530 is erected upward on one short side on a front side of the bottom surface portion 510. A roof portion 540 is provided at the uppermost portion so as to face the bottom surface portion 510 in the up-down direction.

An entrance is formed on the other short side on a rear side of the bottom surface portion 510 such that the mobile body 100 or the traveling body 200 can enter and exit. A slope portion 550 is connected to the short side via a hinge. When the storage station 500 comes into contact with the ground surface, the bottom surface portion 510 shifts slightly upward from the ground surface. The slope portion 550 is inclined downward from the entrance of the storage station 500 toward the outside.

The mobile body 100 or the traveling body 200 travels on the slope portion 550 when entering or exiting the storage station 500. That is, the slope portion 550 can guide the mobile body 100 or the traveling body 200 from the entrance of the storage station 500 to the outside or from the outside of the storage station 500 to the entrance. Meanwhile, the slope portion 550 is configured to be flippable upward. When an end portion of the slope portion 550 is flipped up toward the roof portion 540, the opening serving as the entrance is closed.

The storage station 500 includes the arrangement portion 560. The arrangement portion 560 is used to arrange the mounted body 300. The arrangement portion 560 is formed of an inverted L-shaped plate member in a front view. Two arrangement portions 560 are arranged inside the storage station 500 so as to extend in a direction along the long side of the bottom surface portion 510.

More specifically, one of two surfaces forming the inverted L-shape in each arrangement portion 560 is connected to each side surface portion 520. The other surface of the two surfaces protrudes from each side surface portion 520 toward the center of the inside of the storage 500. The other of the two surfaces is substantially parallel to the bottom surface portion 510, and the mounted body 300 can be arranged on an upper portion thereof. A configuration of the storage station 500 is not limited to that described above, and may be any configuration as long as the mounted body 300 can be arranged inside the storage station 500. For example, the storage station 500 may simply include only the arrangement portion 560 and a member that supports the arrangement portion 560. Furthermore, the storage station 500 may have, for example, a frame structure so that the inside can be visually recognized, or may have a wall surface structure for the purpose of blocking wind and rain from the outside, crime prevention, or the like. The front surface portion 530 may be removable from the storage station 500, and when the front surface portion 530 is removed, the mobile body 100 (traveling body 200) can travel forward from the storage station 500. The arrangement position of the mounted body 300 (an installation position of the arrangement portion 560) inside the storage station 500 is preferably above the bottom surface portion 510, and is arbitrary. For example, the storage station 500 may be configured such that the mounted body 300 is arranged on any one of a front side (first direction side), a lateral side (fourth direction side), and an upper side (second direction side) with respect to a position of the traveling body 200 in the storage station 500.

As illustrated in Fig. 22, for example, when the mobile body 100 is accommodated in the storage station 500, the mobile body 100 is arranged in a predetermined direction in an internal space of the storage station 500. Inside the storage station 500, the traveling devices 270 on both sides of the traveling body 200 face inner sides of the side surface portions 520 of the storage station 500 while coming into contact with the bottom surface portion 510. A bottom surface of the traveling body 200 faces the bottom surface portion 510, and an upper portion of the mounted body 300 is covered by the roof portion 540.

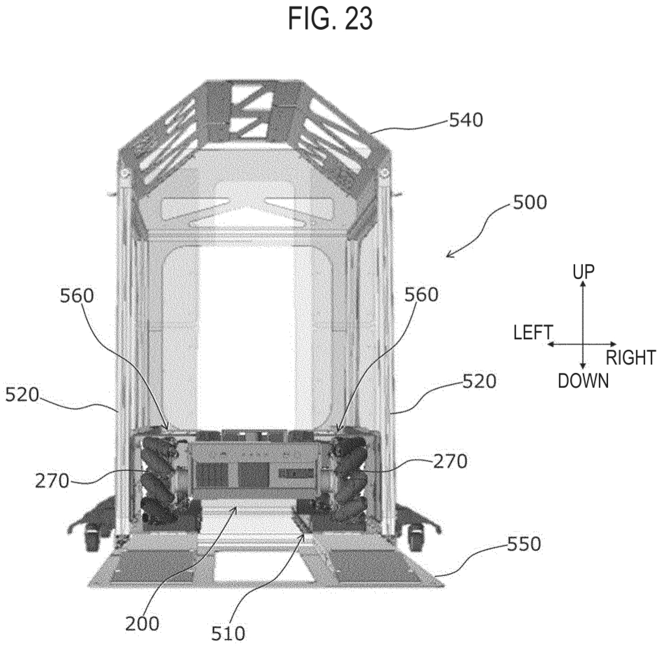

As illustrated in Fig. 23, for example, when the traveling body 200 is accommodated in the storage station 500, the traveling body 200 is arranged similarly to an arrangement aspect of the traveling body 200 when the mobile body 100 is accommodated (see Fig. 22). The traveling body 200 is arranged below (the other surface of) the arrangement portion 560. That is, in a case where the internal space of the storage station 500 is partitioned into an upper side and a lower side by the arrangement portion 560, the arrangement position of the traveling body 200 is on the lower side of the internal space.

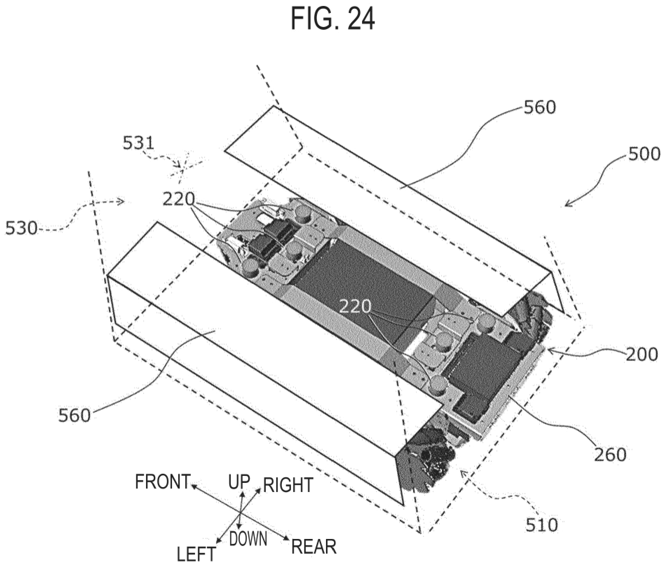

As illustrated in Fig. 24, it is assumed that the traveling body 200 is accommodated in the storage station 500 such that the first direction is the front. In this case, the traveling body 200 is arranged such that the vehicle length direction is along the longitudinal direction of the bottom surface portion 510. The front end of the vehicle body 260 of the traveling body 200 faces an inner side of the front surface portion 530 of the storage station 500.

The arrangement portion 560 is positioned apart from the traveling body 200 in the first direction and the fourth direction. More specifically, a portion of the arrangement portion 560 may be present at a position forward of the front end of the vehicle body 260 of the traveling body 200. Furthermore, the portion of the arrangement portion 560 may be present at a position outward of the vehicle body 260 of the traveling body 200 in the vehicle width direction. In the present embodiment, the arrangement portion 560 is positioned upward of the traveling body 200 in the second direction, but the arrangement relationship is not limited thereto.

Four lift portions 220 of the vehicle body 260 are positioned between the two arrangement portions 560 on both sides in the vehicle width direction in a plan view. That is, upper sides of the four lift portions 220 are not covered by the arrangement portions 560.

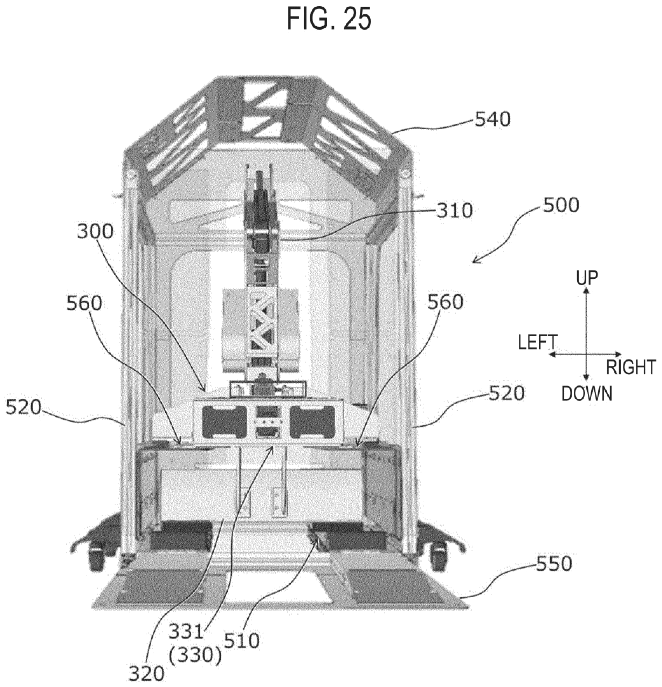

As illustrated in Fig. 25, for example, when the mounted body 300 is accommodated in the storage station 500, the mounted body 300 is arranged similarly to an arrangement aspect of the mounted body 300 when the mobile body 100 is accommodated (see Fig. 22). The mounted body 300 is arranged above (the other surface of) the arrangement portion 560. That is, in a case where the internal space of the storage station 500 is partitioned into the upper side and the lower side by the arrangement portion 560, the arrangement position of the mounted body 300 is on the upper side of the internal space. Depending on the configuration of the storage station 500 and an environment in which the storage station 500 is installed, moisture, mud, dust, and the like may accumulate on the bottom surface portion 510. In addition, there is a high possibility that this event is accelerated by substances adhering to the tires of the traveling body 200. As described above, by arranging the mounted body 300 on the upper side in the internal space of the storage station 500, the mounted body 300 can be separated from the bottom surface portion 510, and the mounted body 300 can be prevented from getting wet or dirty during storage.

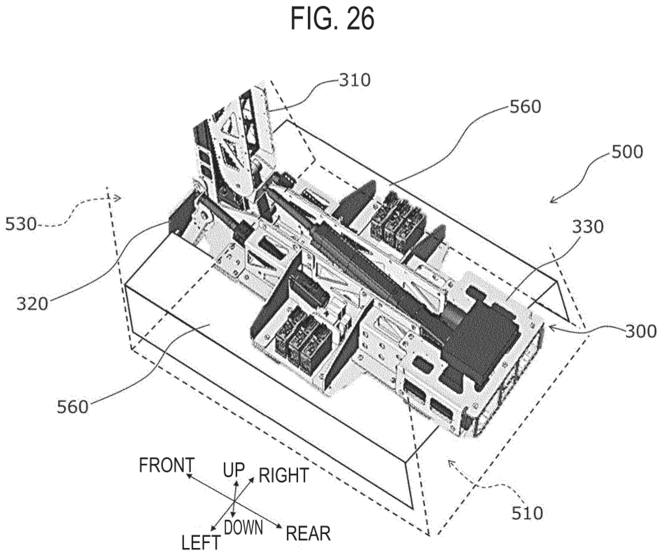

As illustrated in Fig. 26, it is assumed that the mounted body 300 is accommodated in the storage station 500 such that the first direction is the front. In this case, the mounted body 300 is arranged such that a longitudinal direction of the base portion 330 is along the longitudinal direction of the bottom surface portion 510. The first movable tool 310 and the second movable tool 320 of the mounted body 300 face the inner side of the front surface portion 530 of the storage station 500.

The arrangement portion 560 is configured such that the detached mounted body 300 can be arranged. More specifically, the portion of the arrangement portion 560 may support the mounted body 300 in the second direction to arrange the mounted body 300. In addition, the portion of the arrangement portion 560 may have a planar shape capable of supporting the bottom surface 331 of the mounted body 300 to be arranged, and may have a shape facing the bottom surface 331 of the mounted body 300 and extending in the first direction. Note that a position where the mounted body 300 is arranged on the arrangement portion 560 may be referred to as the arrangement position.

As illustrated in Figs. 21 and 24, the storage station 500 includes the detected portion 531. The detected portion 531 is used to determine the stop position of the traveling body 200 in the storage station 500. In the present embodiment, the detected portion 531 is provided on the inner side of the front surface portion 530. The detected portion 531 corresponds to a portion whose positional relationship with the stop position is defined. The detected portion 531 can be detected by the distance measuring sensor 282 at the front end of the vehicle body 260. In the present embodiment, the detected portion 531 is a constituent member of the storage station 500 on the inner side of the front surface portion 530, but is not limited thereto. For example, the detected portion 531 may be a constituent member of the storage station 500 and be positioned on the inner side of the side surface, inner side of the bottom surface, an inner side of an upper surface, or the like. The detected portion 531 may be an identification code attached to the inside of the storage station 500, instead of the constituent member of the storage station 500. The identification code is preferably one that can be easily identified and detected by the distance measuring sensor 282, and may be, for example, a barcode or a QR code (registered trademark). In this case, various types of information may be stored in the identification code and read by the sensor. In addition, it is preferable that a mounting position of the distance measuring sensor 282 is also adjusted according to a position of the detected portion 531.

### <<Determination of Stop Position>>

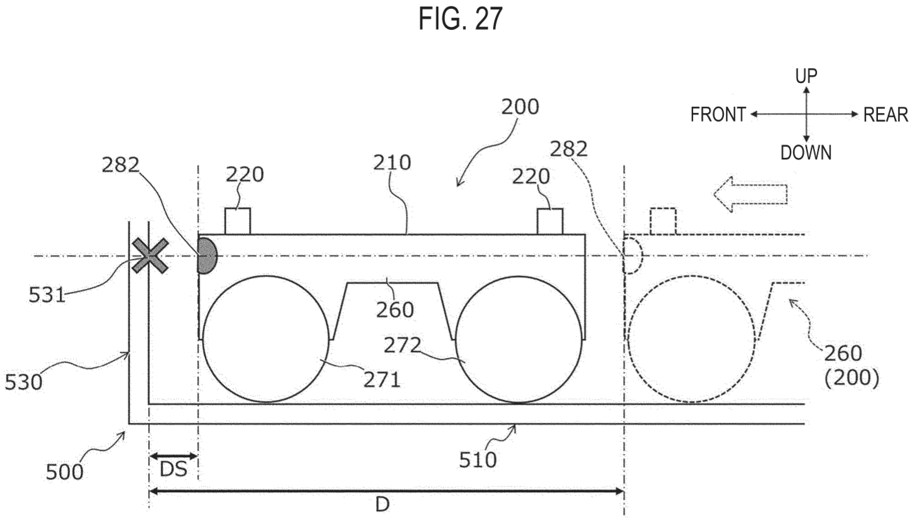

As illustrated in Fig. 27, in the present embodiment, the positional relationship between the detected portion 531 and the stop position is defined in advance. For example, it is assumed that a height of the detected portion 531 on the front surface portion 530 of the storage station 500 from the bottom surface portion 510 is the same as a height of the distance measuring sensor 282 at the front end of the vehicle body 260.

In this case, it is assumed that the traveling body 200 is stopped and positioned in the storage station 500, and a horizontal distance from the detected portion 531 to the distance measuring sensor 282 at the stop position is a reference distance DS as indicated by a solid line. It is assumed that the mounted body 300 is detached from the mounting surface 210 of the traveling body 200 at the stop position and is arranged on the arrangement portion 560 described above.

At this time, the distance measuring sensor 282 detects the horizontal distance from the detected portion 531, stores the detected horizontal distance as the reference distance DS in advance in a memory or the like, and determines the stop position corresponding to the reference distance DS. When attaching the mounted body 300 next time, it is only required to perform control to cause the traveling body 200 to travel and stop, targeting the determined stop position. As a result, it is possible to appropriately attach the mounted body 300.

According to such finding, in the present embodiment, the stop position determination unit 283c determines the stop position based on a result of detecting the detected portion 531. More specifically, when the traveling body 200 is stopped in the storage station 500 and the detachment of the mounting surface 210 is performed, the stop position determination unit 283c detects the horizontal distance from the detected portion 531 to the distance measuring sensor 282, and determines and stores the detected horizontal distance as the reference distance DS. That is, in the present embodiment, determining the reference distance DS corresponds to determining the stop position. Alternatively, the stop position may be directly determined by calculating coordinates and a vector.

It is assumed that the traveling body 200 travels out of the storage station 500 to the outside in a state in which only the mounted body 300 is arranged on the arrangement portion 560 after the reference distance DS is determined (that is, after the stop position is determined). Then, it is assumed that the traveling body 200 returns into the storage station 500 for reattaching the mounted body 300.

In this case, a horizontal distance D from the detected portion 531 to the distance measuring sensor 282 is detected by the distance measuring sensor 282 as indicated by a broken line. The detected horizontal distance D and the stored reference distance DS are sequentially compared. The traveling body 200 travels or stops based on a comparison result.

In the present embodiment, in a case where it is determined that the horizontal distance D > the reference distance DS, automated driving control is performed so as to travel forward in the first direction. When the horizontal distance D decreases to approach the reference distance DS and it is determined that the horizontal distance D = the reference distance DS, the automated driving control is performed so as to stop on the spot. In this way, the stop position is determined by the stop position determination unit 283c, and the traveling body 200 can be stopped at the determined stop position.

### <<Detachment Operation for Mounted Body>>

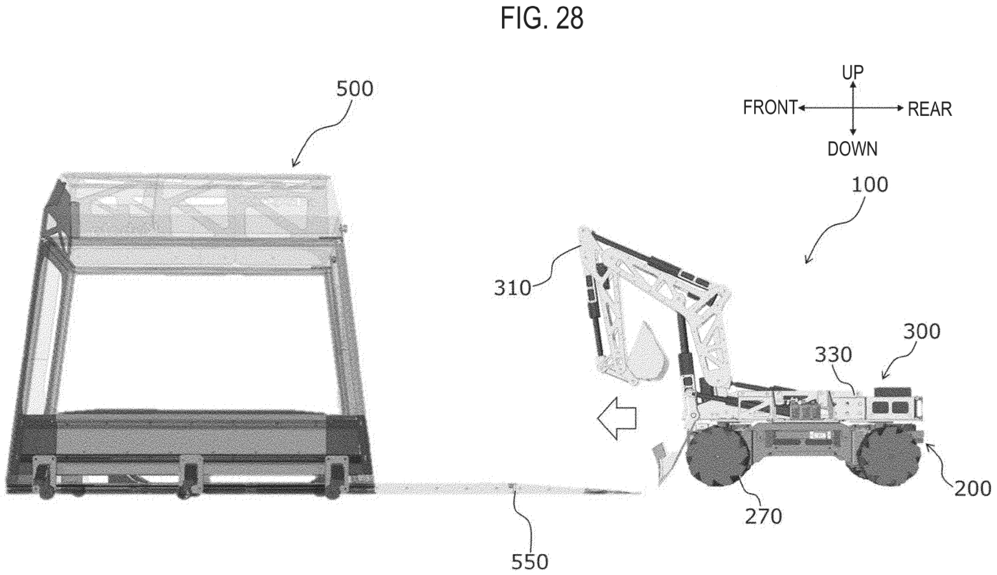

A series of operations for detaching the mounted body 300 from the traveling body 200 to which the mounted body 300 is attached and arranging the detached mounted body 300 on the arrangement portion 560 inside the storage station 500 will be described in time series with reference to the flowcharts of Figs. 28 to 34 and Fig. 42.

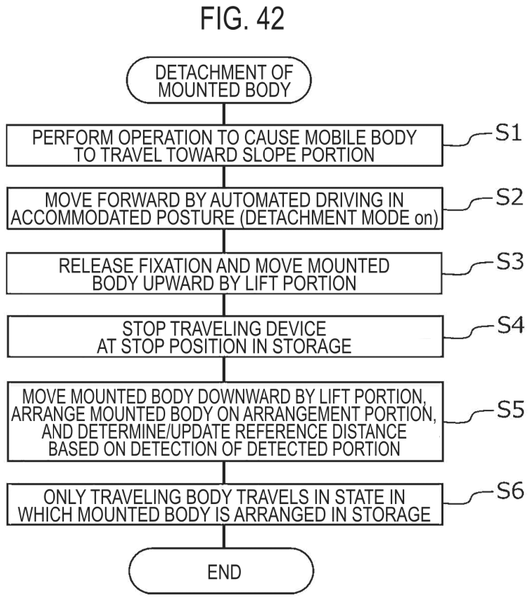

As illustrated in Fig. 28, it is assumed that neither the mounted body 300 nor the traveling body 200 is stored inside the storage station 500, and the mobile body 100 travels or works outside the storage station 500. In the case of detaching the mounted body 300, first, the traveling body 200 (mobile body 100) is caused to travel toward the slope portion 550 by the operator who has been operating via the external terminal (step S1 in Fig. 42).

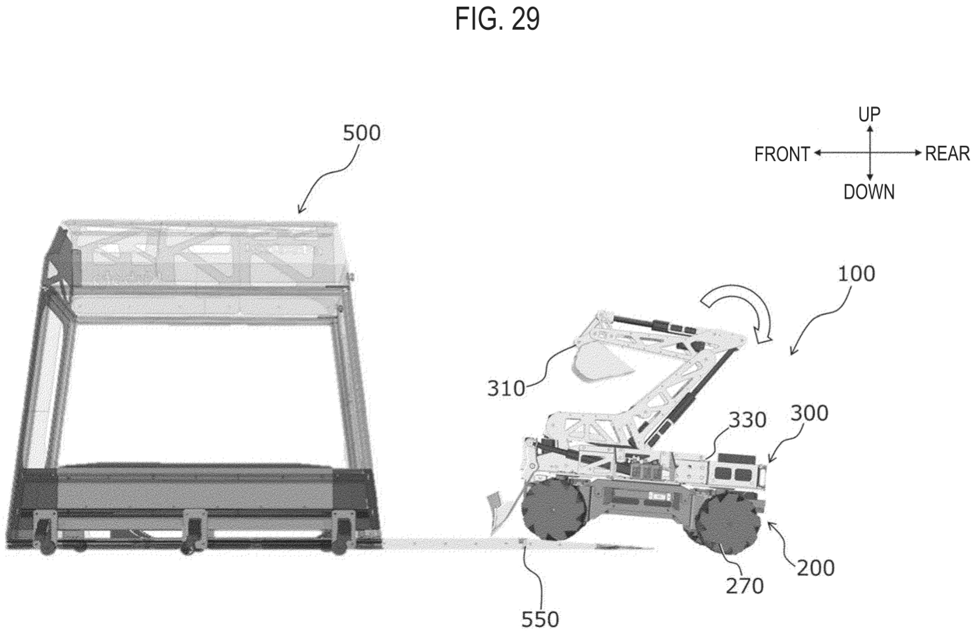

Next, as illustrated in Fig. 29, when the traveling device 270 approaches the slope portion, the operator instructs the traveling body 200 and the mounted body 300 through the external terminal to enter a detachment mode. In the mounted body 300, when the instruction for the detachment mode is received by the communication device 381, the control device 382 drives the drive unit 340a, the drive unit 340b, the drive unit 340c, and the drive unit 340d to tilt the first movable tool 310 clockwise as viewed in the drawing, and a posture in a state in which the first movable tool 310 is brought close to the base portion 330 as an accommodated posture is held (see Figs. 12 and 18) (step S2 in Fig. 42).

In the traveling body 200, when the instruction for the detachment mode is received by the communication device 281, switching to automated driving control is performed. In the control device 283, the automated driving control unit 283d causes the traveling device 270 to travel by automated driving so as to stop at the stop position in the storage station 500. As for the stop at the stop position, the reference distance DS determined and stored in the previous attachment may be used. The horizontal distance D from the detected portion 531 to the front end of the vehicle body 260 is detected by the distance measuring sensor 282. At this time, since the reference distance DS < the horizontal distance D, the traveling body 200 travels forward in the first direction (see Fig. 27).

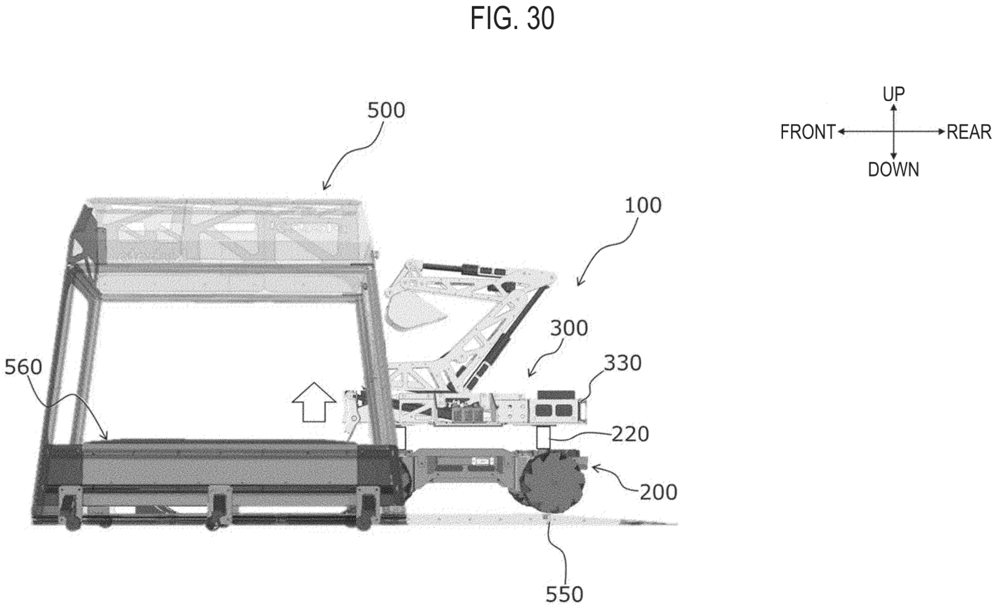

Next, as illustrated in Fig. 30, in the control device 283, the detachment control unit 283b controls the fixing portions 240a and 240b so as to release the fixation of the mounted body 300 to the traveling body 200 (performs control to switch the attraction portion 241a to the de-excited state), and controls the lift portion 220 so as to move the mounted body 300 attached to the mounting surface 210 upward from the arrangement portion 560 in the second direction while supporting the mounted body 300 (step S3 in Fig. 42).

Next, in the control device 283, the detachment control unit 283b and the automated driving control unit 283d control the traveling device 270 such that the traveling body 200 travels integrally with the mounted body 300 to the above-described stop position by automated driving in a state in which the mounted body 300 has shifted upward from the arrangement portion 560. At this time, since the reference distance DS < the horizontal distance D, the mobile body 100 travels forward in the first direction. The mobile body 100 enters through the entrance of the storage station 500, and the horizontal distance D detected by the distance measuring sensor 282 approaches the reference distance DS.

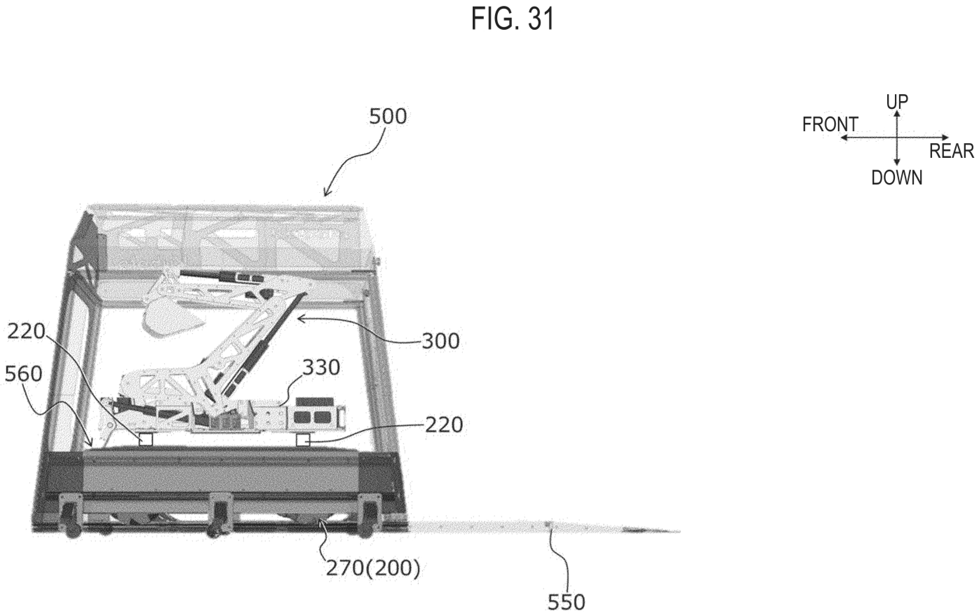

Next, as illustrated in Fig. 31, when the mobile body 100 enters the storage station 500 and the horizontal distance D = the reference distance DS, the automated driving control unit 283d in the control device 283 causes the traveling device 270 to stop (see Fig. 27) (step S4 in Fig. 42).

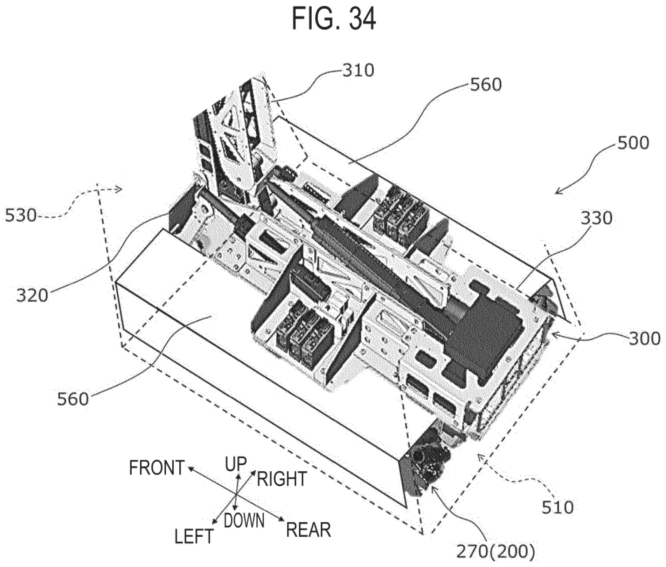

At this time, as illustrated in Fig. 34, the mounted body 300 is supported at a position upward of the arrangement portion 560 of the storage station 500 in the second direction by the lift portion 220. Therefore, the arrangement portion 560 is positioned between (the bottom surface 331 of) the mounted body 300 and (the mounting surface 210 of) the traveling body 200 in the up-down direction. The mounted body 300 shifts upward in the second direction from the arrangement portion 560.

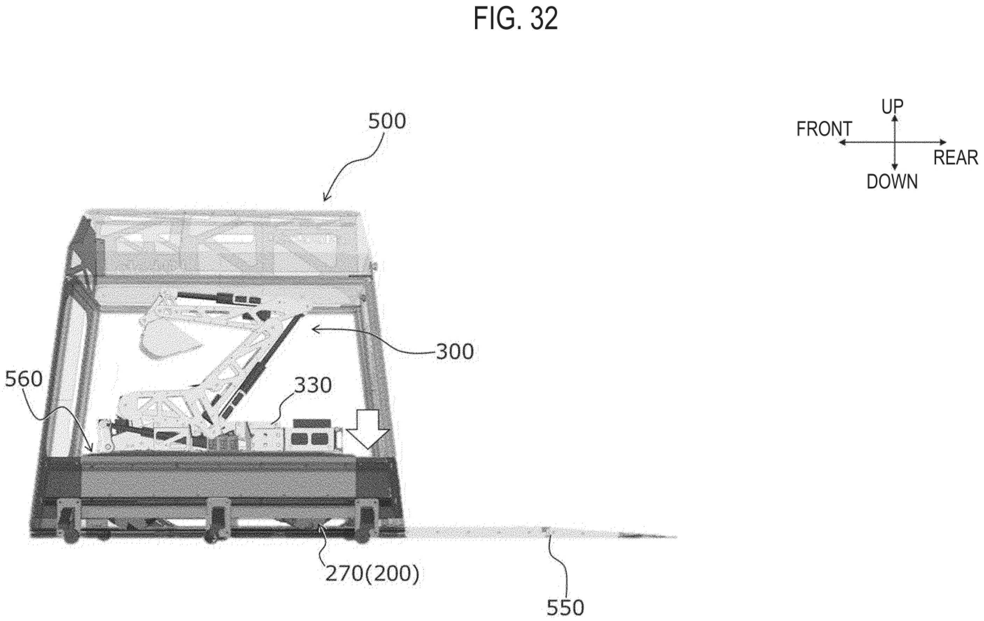

Next, as illustrated in Fig. 32, in the control device 283, the detachment control unit 283b controls the lift portion 220 so as to move the mounted body 300, which has shifted upward, in the third direction while supporting the mounted body 300 in a state in which the traveling body 200 is stopped at the stop position. As a result, the mounted body 300 is detached from the traveling body 200, and the mounted body 300 is arranged on the arrangement portion 560. As described above, the stop position of the traveling body 200 is positioned downward of the arrangement portion 560, and is a position for detaching the mounted body 300 from the traveling body 200 to which the mounted body 300 is attached and arranging the mounted body 300 on the arrangement portion 560 (step S5 in Fig. 42).

In addition, at this time, in the control device 283, the stop position determination unit 283c determines and stores the reference distance DS (that is, the stop position) from the detected portion 531 to the distance measuring sensor 282. The previously stored reference distance DS may be updated with the currently determined reference distance DS. The currently stored reference distance DS may be used at the time of the next attachment of the mounted body 300 (step S5 in Fig. 42).

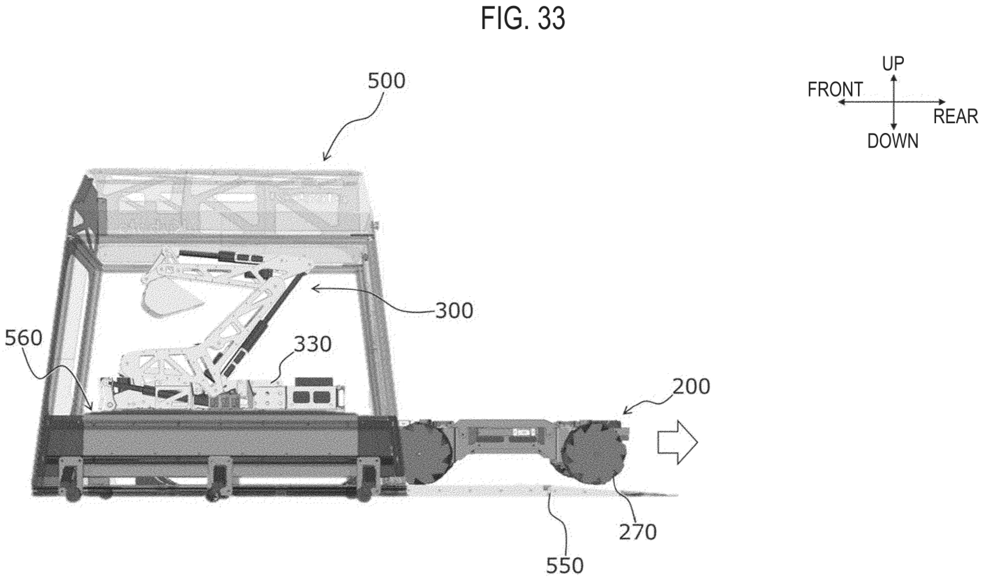

Next, as illustrated in Fig. 33, in a state in which the mounted body 300 is arranged on the arrangement portion 560, only the traveling body 200 travels with the rear side as the first direction, and travels out of the entrance of the storage station 500 (step S6 in Fig. 42). By the series of operations described above, the mounted body 300 is detached from the traveling body 200 to which the mounted body 300 is attached and is arranged on the arrangement portion 560.

### <<Attachment Operation for Mounted Body>>

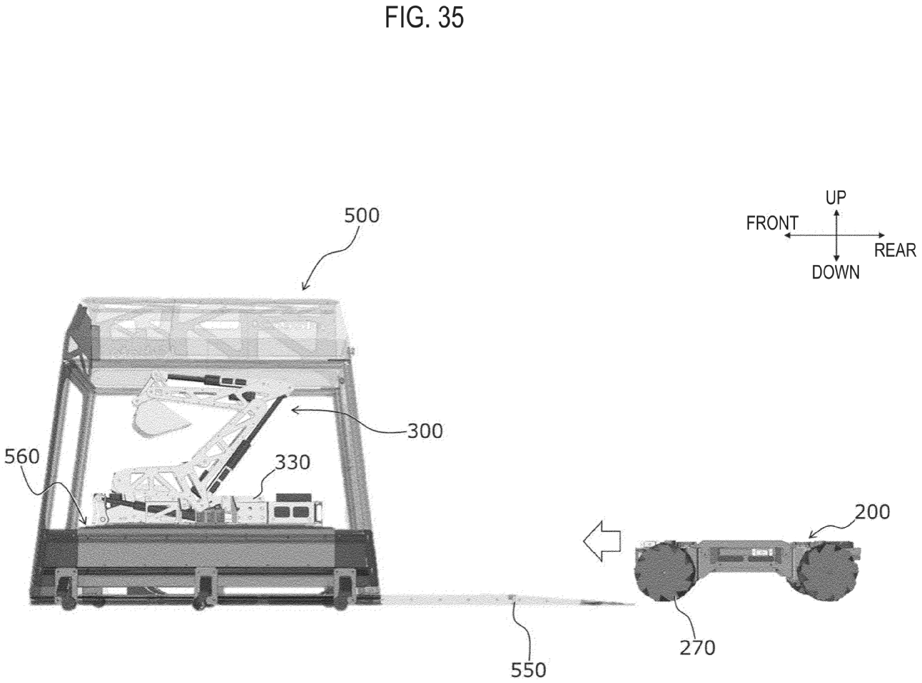

A series of operations for attaching the mounted body 300 arranged on the arrangement portion 560 to the traveling body 200 to which the mounted body 300 is not attached will be described in time series with reference to the flowcharts of Figs. 35 to 41 and 43.

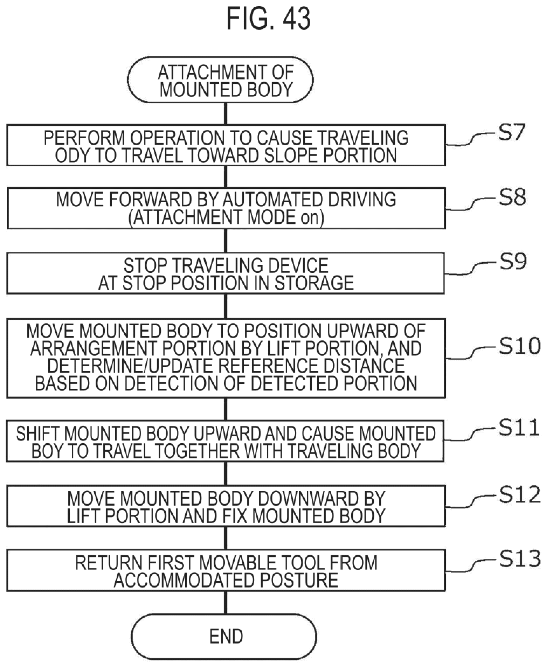

As illustrated in Fig. 35, it is assumed that the mounted body 300 is arranged and stored on the arrangement portion 560 inside the storage station 500, and the traveling body 200 travels outside the storage station 500. That is, it is assumed that a detachment operation for the mounted body 300 described above has been performed. In the case of attaching the mounted body 300, first, the traveling body 200 is caused to travel toward the slope portion 550 by the operator who has been operating via the external terminal (step S7 in Fig. 43).

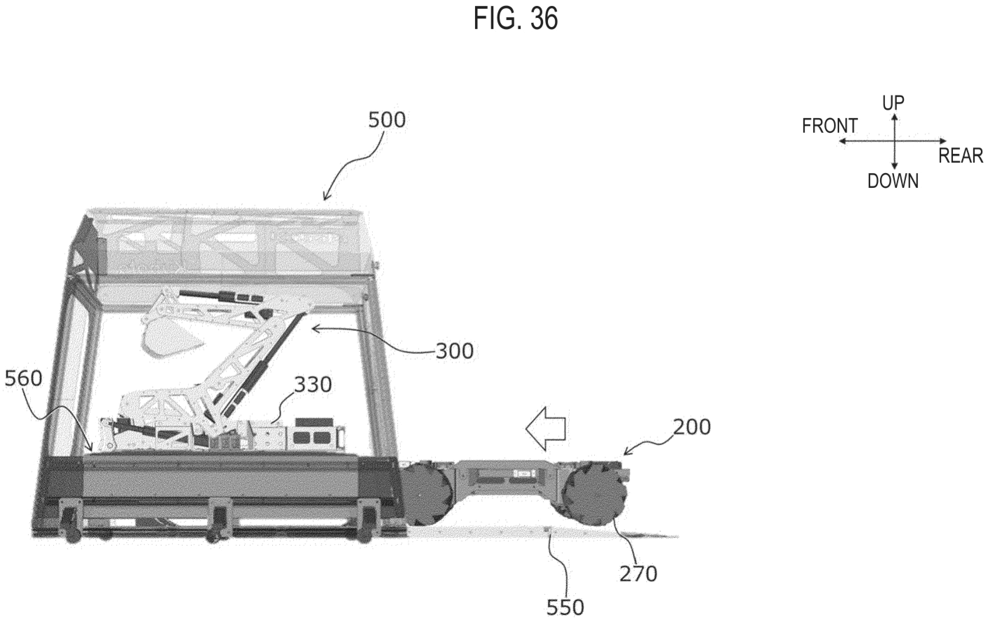

Next, as illustrated in Fig. 36, when the traveling device 270 approaches the slope portion, the operator instructs the traveling body 200 and the mounted body 300 through the external terminal to enter an attachment mode. In the traveling body 200, when the instruction for the attachment mode is received by the communication device 281, switching to the automated driving control is performed (step S8 in Fig. 43).

In the control device 283, the automated driving control unit 283d causes the traveling device 270 to travel by automated driving so as to stop at the stop position in the storage station 500. As for the stop at the stop position, the reference distance DS determined and stored in the previous detachment may be used.

The horizontal distance D from the detected portion 531 to the front end of the vehicle body 260 is detected by the distance measuring sensor 282. At this time, since the reference distance DS < the horizontal distance D, the traveling body 200 travels forward in the first direction (see Fig. 27). The traveling body 200 enters through the entrance of the storage station 500, and the horizontal distance D detected by the distance measuring sensor 282 approaches the reference distance DS.

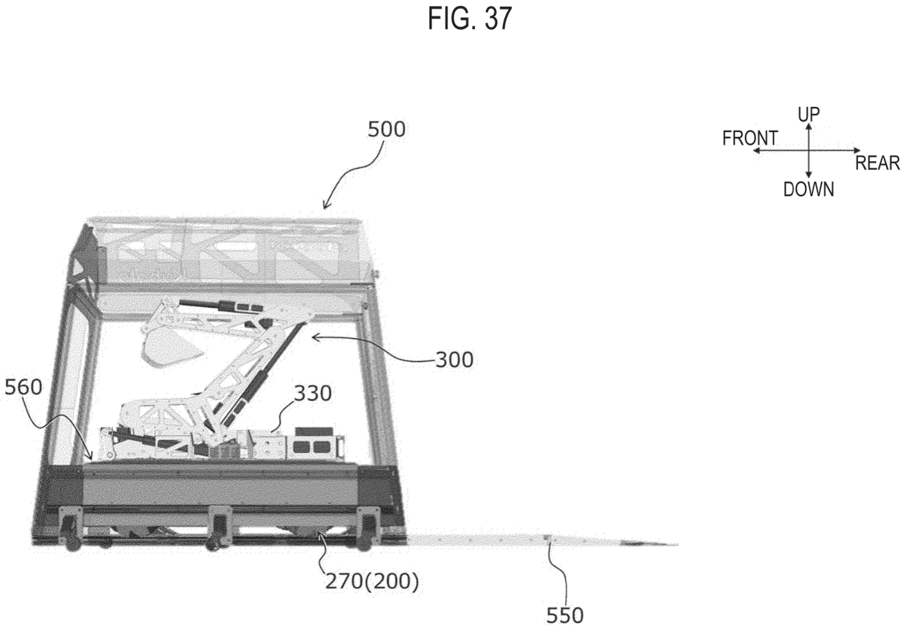

Next, as illustrated in Fig. 37, when the traveling body 200 enters the storage station 500 and the horizontal distance D = the reference distance DS, the automated driving control unit 283d in the control device 283 causes the traveling device 270 to stop (see Fig. 27). As a result, the traveling body 200 is positioned below the mounted body 300 arranged on the arrangement portion 560. At the stop position, the mounting surface 210 of the traveling body 200 faces the bottom surface 331 of the mounted body 300 with a gap (step S9 in Fig. 43).

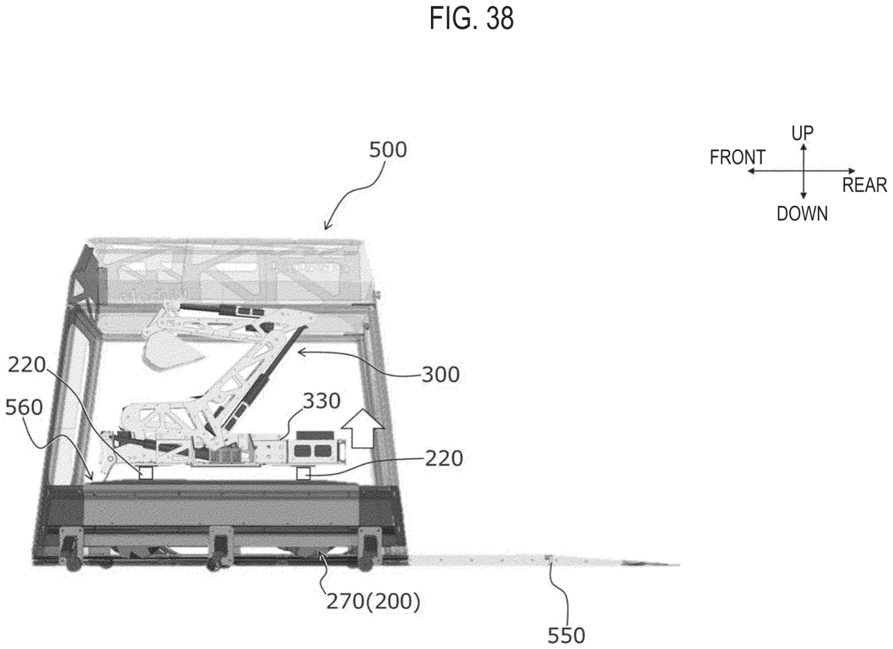

Next, as illustrated in Fig. 38, in the control device 283, the attachment control unit 283a controls the lift portion 220 so as to move the mounted body 300 facing the mounting surface 210 upward from the arrangement portion 560 in the second direction while supporting the mounted body 300 in a state in which the traveling body 200 is stopped at the stop position (step S10 in Fig. 43).

As a result, the traveling body 200 and the mounted body 300 are engaged with each other via the lift portion 220 (engagement portion 230). As described above, the stop position of the traveling body 200 is positioned downward of the arrangement portion 560, and is also a position for attaching the mounted body 300 arranged on the arrangement portion 560 to the traveling body 200 to which the mounted body 300 is not attached.

In a case where a position where the traveling body 200 is actually stopped is slightly shifted from an intended stop position, a case where the mounted body 300 arranged on the arrangement portion 560 is slightly moved during storage, or the like, a misalignment may occur between the axis of the lift portion 220 and the axis of the fitting portion 232 as illustrated in Fig. 10.

Even in this case, since the recessed shape of the fitting portion 232 is a shape (for example, a mortar shape or a cup shape in a bottom view) having a portion whose diameter decreases in the fitting direction (that is, the second direction), the misalignment between the respective axes is corrected when the lift portion 220 ascends. Therefore, reliable support and engagement are possible.

In addition, at this time, in the control device 283, the stop position determination unit 283c determines and stores the reference distance DS (that is, the stop position) from the detected portion 531 to the distance measuring sensor 282. The previously stored reference distance DS may be updated with the currently determined reference distance DS. The currently stored reference distance DS may be used at the time of the next detachment of the mounted body 300 (step S10 in Fig. 43).

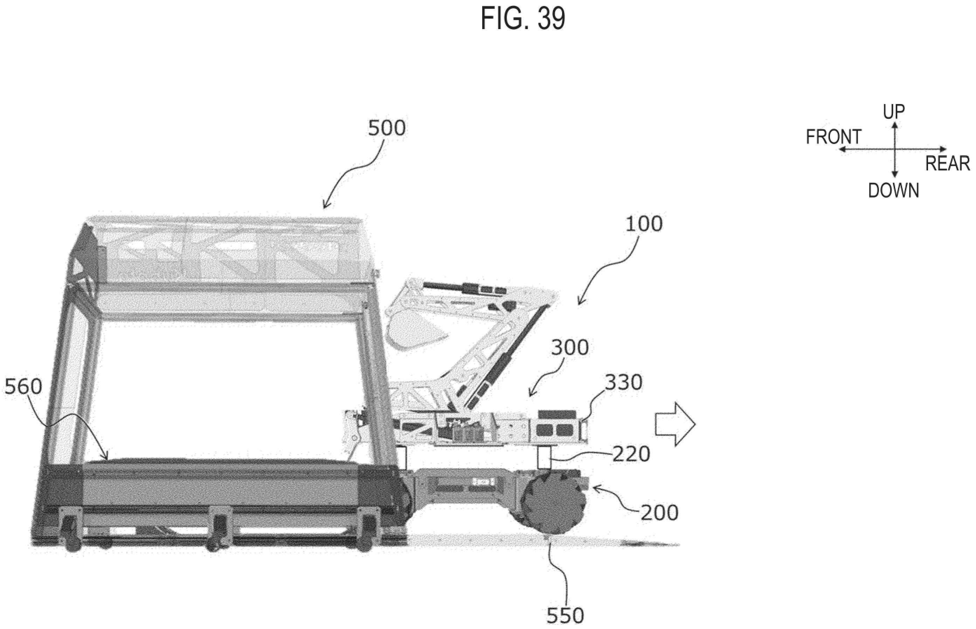

Next, as illustrated in Fig. 39, in the control device 283, the attachment control unit 283a and the automated driving control unit 283d control the traveling body 200 to travel integrally with the mounted body 300 with the rear side as the first direction in a state in which the mounted body 300 has shifted upward from the arrangement portion 560. As a result, the traveling body 200 travels out of the entrance of the storage station 500 together with the mounted body 300 (step S11 in Fig. 43).

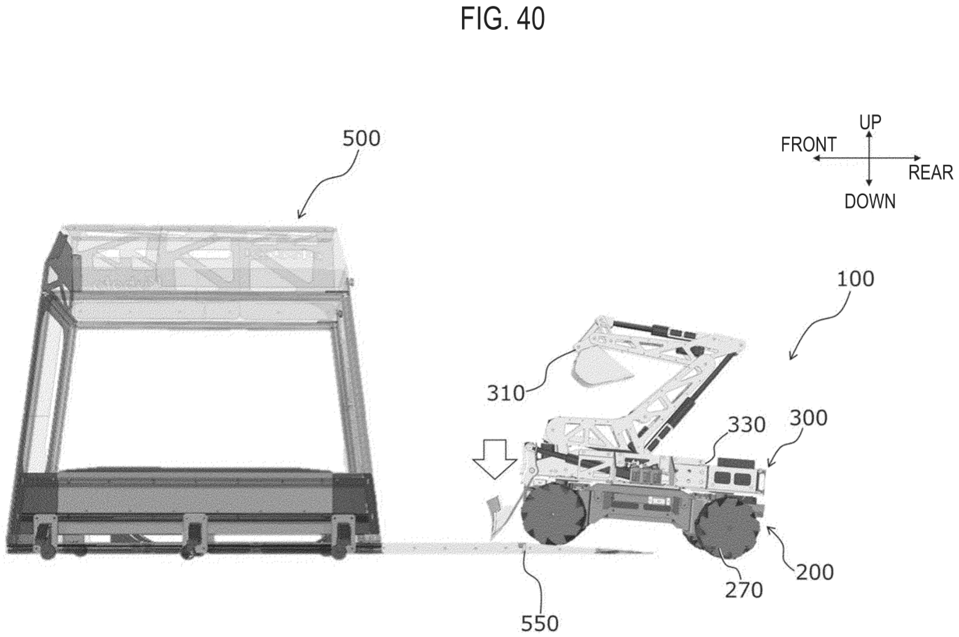

Next, as illustrated in Fig. 40, in the control device 283, the attachment control unit 283a controls the lift portion 220 so as to move the mounted body 300, which has shifted upward, in the third direction while supporting the mounted body 300. As a result, the engagement portion 230 and the fixing portions 240a and 240b are all fitted into the corresponding fitting portions 232 and 242, and the mounted body 300 is attached to the mounting surface 210 of the vehicle body 260. Next, in the control device 283, the attachment control unit 283a controls the fixing portions 240a and 240b so as to fix the mounted body 300 to the traveling body 200 (performs control to switch the attraction portion 241a to the excited state) (step S12 in Fig. 43).

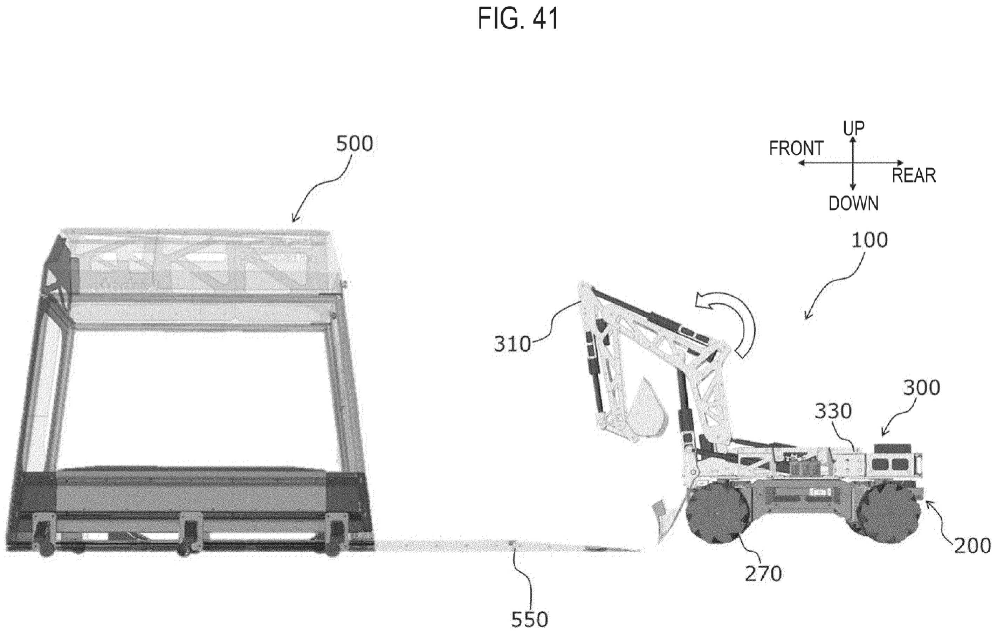

Next, as illustrated in Fig. 41, in the received mounted body 300 that has received the instruction for the attachment mode described above, the control device 382 drives the drive unit 340a, the drive unit 340b, the drive unit 340c, and the drive unit 340d to tilt the first movable tool 310 in the accommodated posture counterclockwise as viewed in the drawing. That is, the posture of the first movable tool 310 is returned so as to be workable (step S13 in Fig. 43).

As a result, the mobile body 100 can travel by the traveling body 200 and work by the first movable tool 310 and the second movable tool 320. By the series of operations described above, the mounted body 300 arranged on the arrangement portion 560 above the mounting surface 210 in the second direction is attached to the traveling body 200 to which the mounted body 300 is not attached.

### <Modification Example of Engagement Portion>

In the present embodiment, the engagement portion 230 includes the protruding portion 231 and the fitting portion 232. The protruding portion 231 protrudes in the second direction or the third direction. The fitting portion 232 has a shape having a portion whose diameter decreases in a direction in which the protruding portion 231 is fitted (see Figs. 9, 10, and 11).

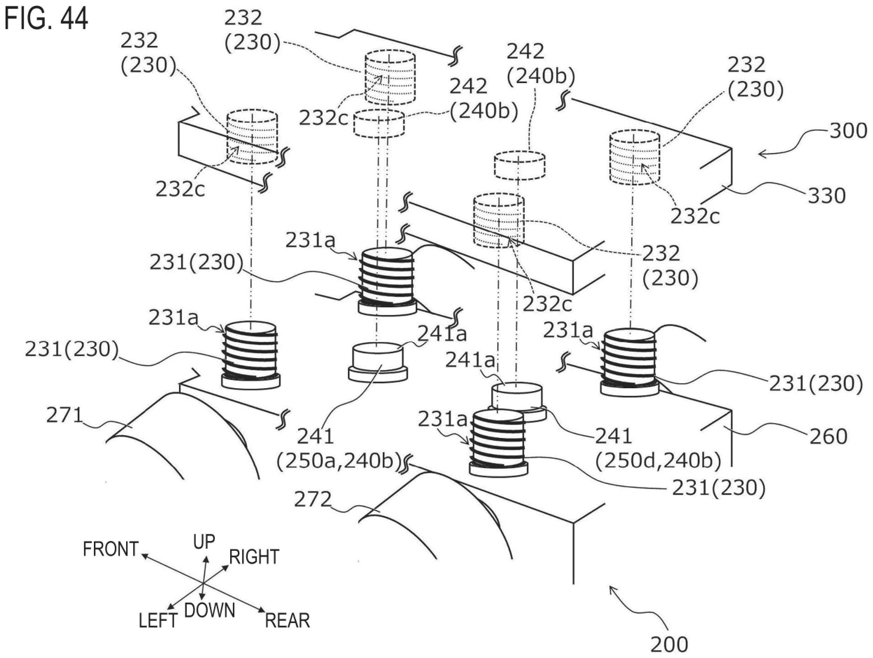

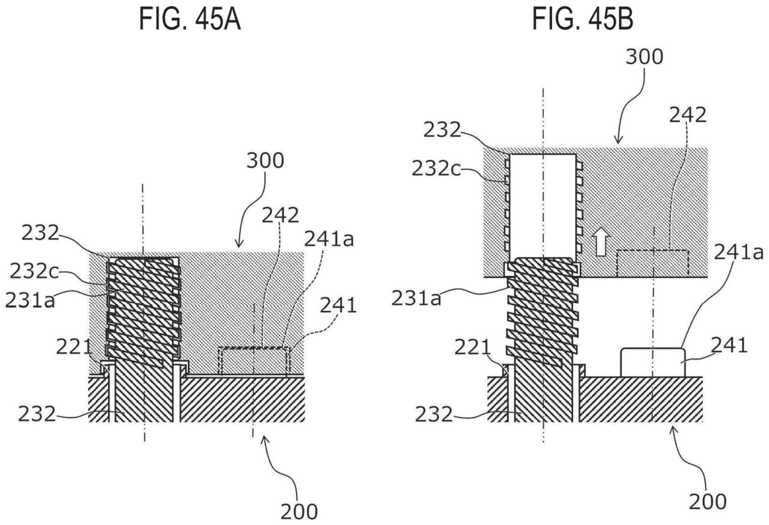

As illustrated in Figs. 44 and 45, the fitting portion 232 has a recessed shape into which the protruding portion 231 can be fitted, has a shape having a portion to be screwed when the protruding portion 231 is fitted, and may be engaged by being fitted with the protruding portion 231. A direction in which the protruding portion 231 protrudes may be similar to that of the first embodiment.

In this case, for example, the protruding portion 231 may include a male screw structure 231a, and the fitting portion 232 may include a female screw structure 232c that can be screwed to the protruding portion 231. The protruding portion 231 is preferably configured to be rotatable around an axis without changing in height.

The bottom surface 331 of the base portion 330 of the mounted body 300 faces the mounting surface 210 of the traveling body 200, and the protruding portion 231 and the fitting portion 232 can be screwed to each other in a state in which the axes of the protruding portion 231 and the fitting portion 232 are aligned with each other (see Fig. 45B). When the protruding portion 231 rotates in a forward direction in this state, the bottom surface 331 approaches the mounting surface 210 while the male screw structure 231a and the female screw structure 232c are screwed to each other. As a result, the mounted body 300 moves downward in the third direction. Then, the fixing portion 240b is also fitted into the fitting portion 242, and the mounted body 300 shifts to the lowest position to achieve engagement and fixation, so that the attachment is completed (see Fig. 45A).

When the protruding portion 231 rotates in a reverse direction in a state in which the mounted body 300 is attached (see Fig. 45A), the bottom surface 331 is separated from the mounting surface 210 while the male screw structure 231a and the female screw structure 232c are screwed to each other. As a result, the mounted body 300 moves upward in the second direction. Then, the fixing portion 240b also comes out of the fitting portion 242, the mounted body 300 shifts to the uppermost position to release the engagement and the fixation, so that the detachment is completed (see Fig. 45B).

### <Modification Example of Support Portion>

In the present embodiment, as described above, the plurality of support portions 250 are arranged at specific positions at the upper end of the vehicle body 260. In particular, the support portion 250a, the support portion 250b, the support portion 250c, the support portion 250d, the support portion 250e, and the support portion 250f are arranged with geometric regularity in a plan view of the vehicle body 260 (see Fig. 6).

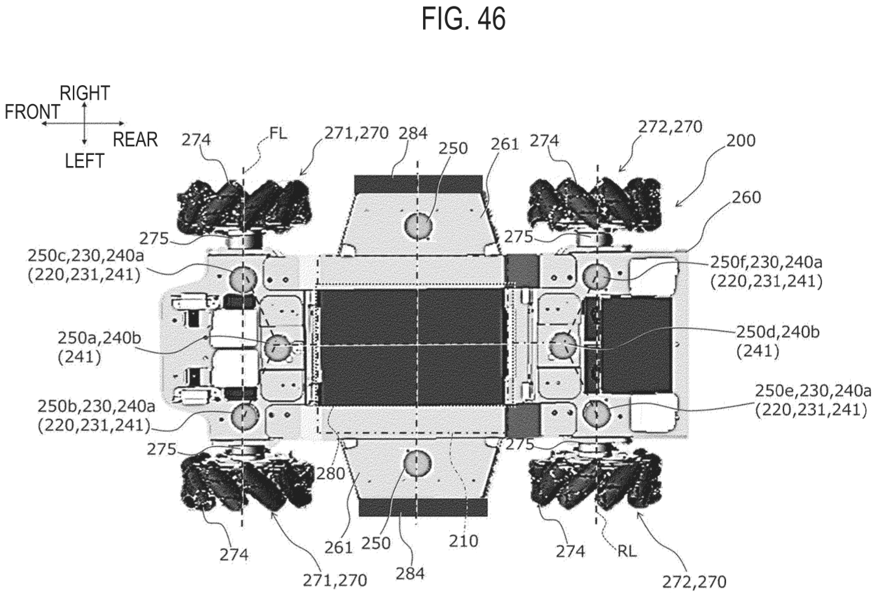

As illustrated in Fig. 46, the support portion 250 may be arranged at an upper end of the overhanging portion 261 instead of or in addition to the above-described arrangement. In this manner, a space of the overhanging portion 261 may be effectively utilized. In addition to arranging the support portion 250 on the overhanging portion 261, an electric device 284 related to the motor and/or driving of the motor may be further provided. In this case, the electric device 284 may be arranged, for example, on a side surface of the overhanging portion 261 or a lower end of the overhanging portion 261 to prevent structural interference with attachment of the mounted body 300. The electric device 284 arranged on the overhanging portion 261 may include an auxiliary power supply (auxiliary battery). As a result, the space of the overhanging portion 261 can be effectively used to increase a power supply capacity.

### [Second Embodiment]

A mobile body 100 according to a second embodiment of the present invention is different from the above-described first embodiment in that an aspect of engagement of a traveling body 200 and a mounted body 300 is different. In the first and second embodiments, an engagement portion 230 is configured to engage the traveling body 200 and the mounted body 300 with each other, the mounted body 300 is attached thereto by engagement, and the mounted body 300 is detached therefrom by disengagement. This point is common to the first and second embodiments.

The engagement portion 230 of the first embodiment includes a protruding portion 231 and a fitting portion 232, and as the aspect of engagement, the protruding portion 231 is fitted into the fitting portion 232 to achieve the engagement. On the other hand, the engagement portion 230 of the second embodiment is configured such that the mounted body 300 is attached by engagement in a state in which the traveling body 200 is traveling. The second embodiment is different from the first embodiment only in this point, and is the same as the first embodiment in other points.

Hereinafter, only differences of the second embodiment from the first embodiment will be described. In the second embodiment, the same reference numerals as those in the first embodiment and the like denote the same or equivalent components or parts as those in the first embodiment and the like.

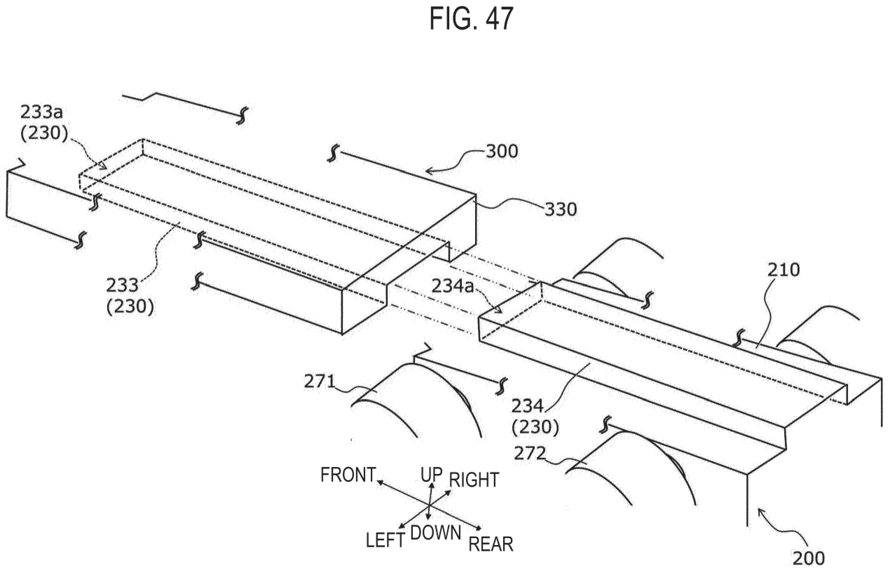

As illustrated in Fig. 47, the engagement portion 230 of the second embodiment includes an outer rail 233 and an inner rail 234. In the present embodiment, the outer rail 233 is provided on the mounted body 300, and the inner rail 234 is provided on the traveling body 200. Alternatively, an arrangement relationship between the outer rail 233 and the inner rail 234 may be reversed.

The outer rail 233 is formed as a recess on a bottom surface of a base portion 330 of the mounted body 300. The recess is recessed upward, and a cross-sectional shape thereof corresponds to a protrusion of the inner rail 234. The outer rail 233 extends in a first direction at a substantially central portion in a vehicle width direction. A rear end of the outer rail 233 is an opening end, so that a front end of the inner rail 234 can enter.

The inner rail 234 is formed as the protrusion on a mounting surface 210 at an upper end of the traveling body 200. The protrusion protrudes upward, and a cross-sectional shape thereof corresponds to the recess of the outer rail 233. The inner rail 234 extends in the first direction at a substantially central portion in the vehicle width direction. When entering the outer rail 233 from the front end, the inner rail 234 is guided in the first direction.

The engagement portion 230 of the second embodiment includes an erected portion 233a and a contact portion 234a. The erected portion 233a is erected in a second direction or a third direction, and has a surface facing the first direction. The contact portion 234a is configured to be able to come into contact with the surface of the erected portion 233a. In the present embodiment, the erected portion 233a is configured to be erected toward the third direction as the front end of the outer rail 233, and the contact portion 234a is formed as the front end of the inner rail 234. Alternatively, an arrangement relationship between the erected portion 233a and the contact portion 234a may be reversed.

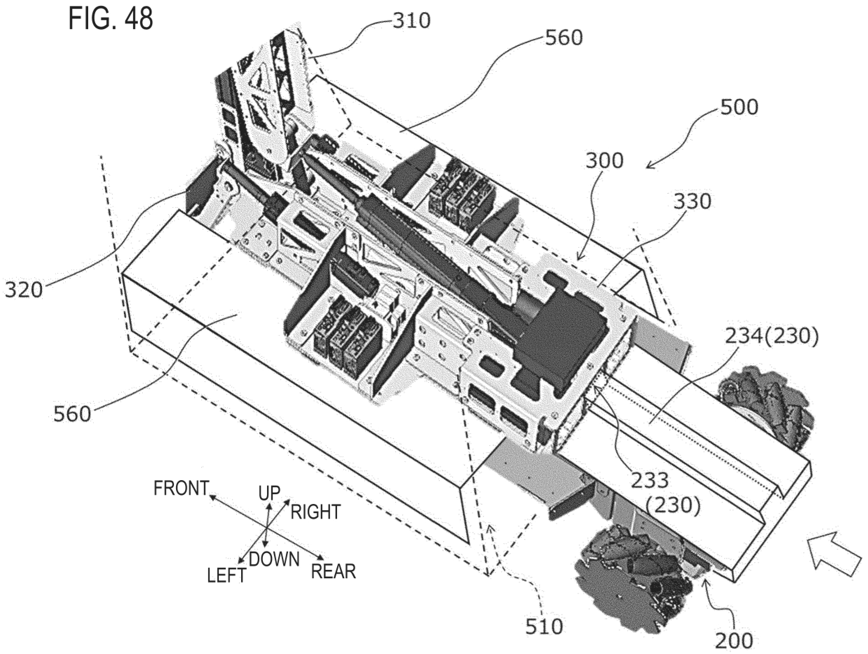

As illustrated in Fig. 48, it is assumed that, when engaging and attaching the traveling body 200 and the mounted body 300, the mounted body 300 is arranged while being supported by an arrangement portion 560 of a storage station 500. In the storage station 500 in the present embodiment, the traveling body 200 can enter from a rear end, and the traveling body 200 can travel out of a front end. That is, the rear end of the storage station 500 is formed as an inlet, and the front end is formed as an outlet.

An arrangement position (height and direction) of the mounted body 300 is adjusted on the arrangement portion 560 such that the front end of the inner rail 234 can enter the rear end of the outer rail 233. The traveling body 200 is subjected to automated driving control such that the front end of the inner rail 234 moves toward the rear end of the outer rail 233.

When the traveling body 200 enters the inside from the inlet of the rear end of the storage station 500, the front end of the inner rail 234 enters from the rear end of the outer rail 233 while the traveling body 200 travels below the mounted body 300. In this state, the inner rail 234 is guided by the outer rail 233 and engaged while sliding in the first direction.

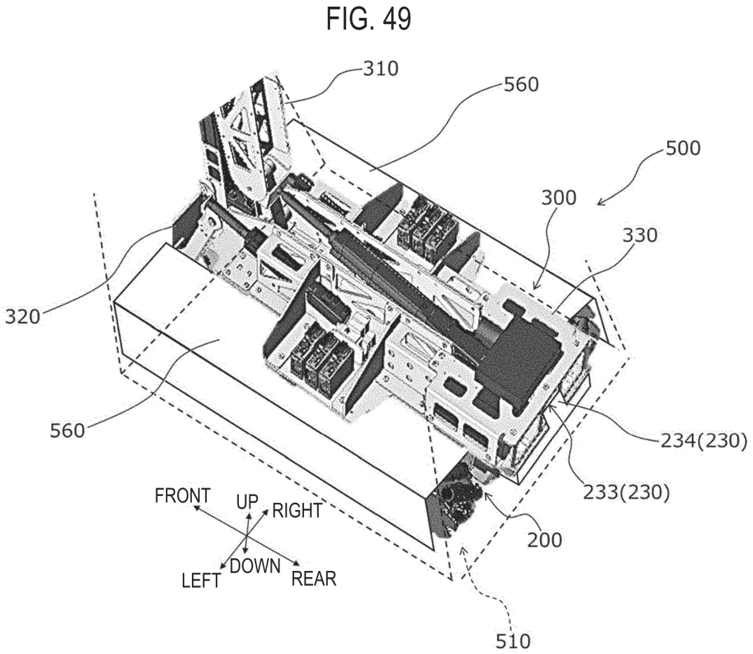

As illustrated in Fig. 49, when the inner rail 234 slides in a state in which the traveling body 200 is traveling, the erected portion 233a of the outer rail 233 comes into contact with the contact portion 234a of the inner rail 234 (see Fig. 48). At this time, the sliding of the inner rail 234 is stopped, and the engagement is achieved.

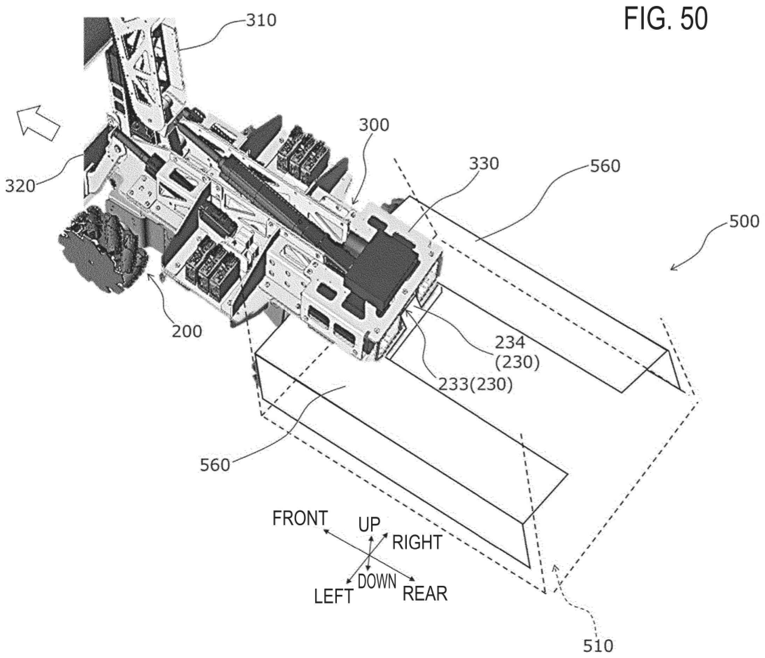

As illustrated in Fig. 50, when the traveling body 200 travels out of the outlet of the front end of the storage station 500, the mounted body 300 is separated from the arrangement portion 560 and is attached to the traveling body 200. In this manner, the traveling body 200 is engaged in a state of traveling, and the mounted body 300 is attached to the traveling body 200.

### <Modification Example of Engagement Portion>

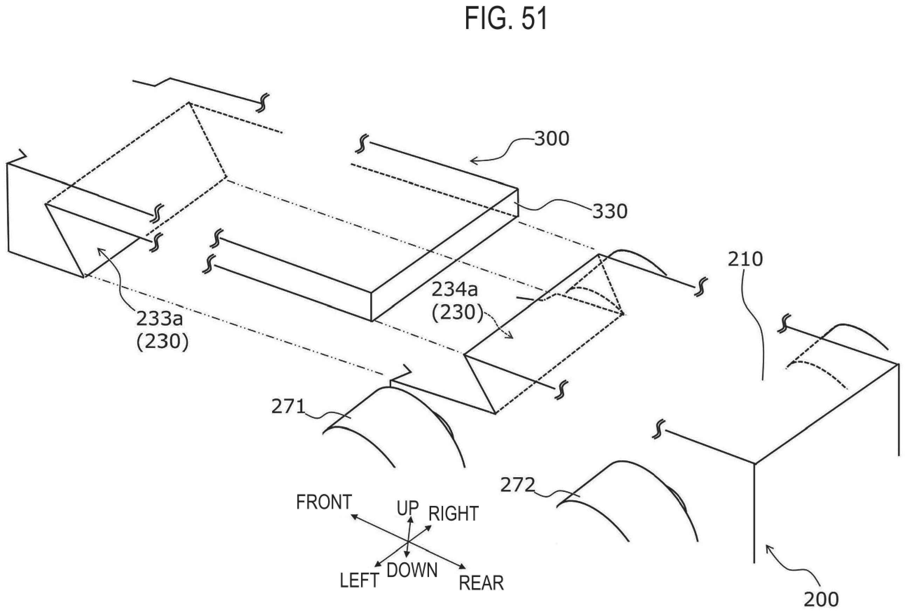

In the present embodiment, the engagement portion 230 includes the outer rail 233 and the inner rail 234. However, the engagement portion 230 does not have to include the outer rail 233 and the inner rail 234. As illustrated in Fig. 51, for example, the erected portion 233a may be provided at a front end of the base portion 330 of the mounted body 300, and the contact portion 234a may be provided at a front end of a vehicle body 260 of the traveling body 200.

The erected portion 233a may protrude downward in the third direction from a bottom surface 331 over the entire length in the vehicle width direction at the front end of the base portion 330 of the mounted body 300. The surface of the erected portion 233a that faces the first direction (a surface that comes into contact with the contact portion 234a) may be inclined with respect to a vertical direction. For example, the surface may be inclined such that the surface that comes into contact with the contact portion 234a extends rearward and obliquely downward.

The contact portion 234a may have a notch structure extending downward in the third direction from the mounting surface 210 and rearward from the front end of the vehicle body 260 of the traveling body 200 over the entire length in the vehicle width direction at the front end. A contact surface of the contact portion 234a may be inclined so as to correspond to a shape of the erected portion 233a. The erected portion 233a and the contact portion 234a formed as described above may have a Z shape or an inverted Z shape in a side view.

### [Third Embodiment]

A mobile body 100 according to a third embodiment of the present invention is different from that of the first embodiment described above in that an aspect of engagement and an aspect of fixation of a traveling body 200 and a mounted body 300 are different. In the first and third embodiments, an engagement portion 230 is configured to engage the traveling body 200 and the mounted body 300 with each other, the mounted body 300 is attached thereto by engagement, and the mounted body 300 is detached therefrom by disengagement.

Further, in the first and third embodiments, a fixing portion 240a is configured to be able to fix the mounted body 300 to the traveling body 200, restrict relative movement of the mounted body 300 with respect to the traveling body 200 by the fixation, and allow the relative movement by releasing the fixation. These points are common to the first and third embodiments.

The engagement portion 230 and the fixing portion 240a of the first embodiment each include a protruding portion 231 and a fitting portion 232, and as the aspect of engagement and fixation, the protruding portion 231 is fitted into the fitting portion 232 to achieve the engagement and fixation. The protruding portion 231 protrudes upward in a second direction.

On the other hand, the engagement portion 230 of the third embodiment includes an outer rail 233 and an inner rail 234, and is configured such that the mounted body 300 is attached by engagement in a state in which the traveling body 200 is traveling. The fixing portion 240a of the third embodiment includes a protruding portion 243 and a fitting portion 244, and as the aspect of fixation, the protruding portion 243 is fitted into the fitting portion 244 to achieve the fixation. The protruding portion 243 protrudes in a direction substantially perpendicular to the second direction. The third embodiment is different from the first embodiment only in these points, and is the same as the first embodiment in other points.

Hereinafter, only differences of the third embodiment from the first embodiment will be described. In the third embodiment, the same reference numerals as those in the first embodiment and the like denote the same or equivalent components or parts as those in the first embodiment and the like.

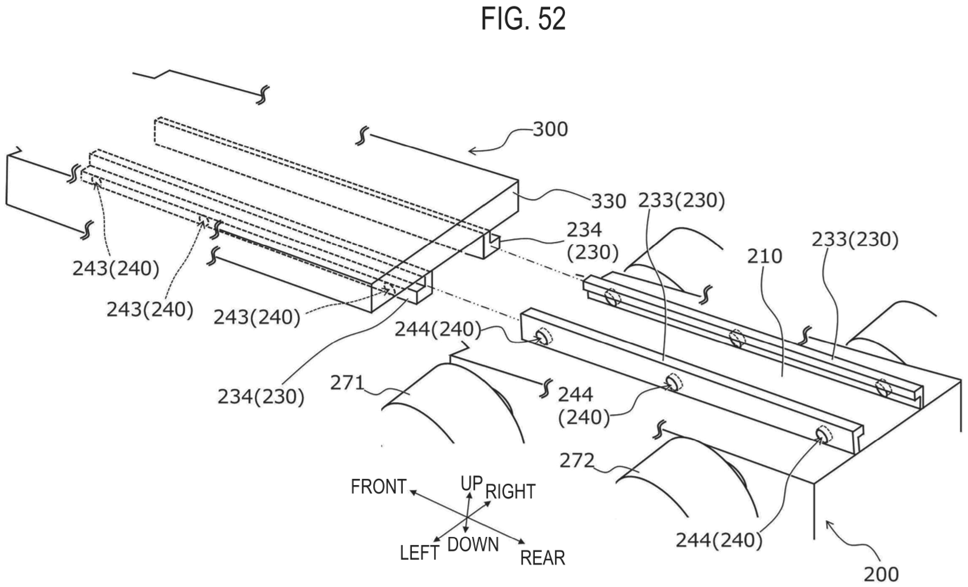

As illustrated in Fig. 52, the engagement portion 230 of the third embodiment includes the outer rail 233 and the inner rail 234. In the present embodiment, the outer rail 233 is provided on the traveling body 200, and the inner rail 234 is provided on the mounted body 300. Alternatively, an arrangement relationship between the outer rail 233 and the inner rail 234 may be reversed.

Two outer rails 233 are provided on a mounting surface 210 at an upper end of the traveling body 200. The outer rails 233 are installed so as to be separated from each other in a vehicle width direction and to be parallel to each other, and the outer rails 233 each extend in a first direction. The two outer rails 233 are each recessed outward in a vehicle width direction, and a cross-sectional shape thereof corresponds to a protrusion of the inner rail 234. A front end of the outer rail 233 is an opening end, so that a rear end of the inner rail 234 can enter.

Two inner rails 234 are provided on a bottom surface 331 at a lower end of the mounted body 300. The inner rails 234 are installed so as to be separated from each other in the vehicle width direction and to be parallel to each other at positions inward of the two outer rails 233, and each extend in the first direction. The two inner rails 234 each protrude outward in the vehicle width direction, and a cross-sectional shape thereof corresponds to a recess of the outer rail 233. When entering the outer rail 233 from the rear end, the inner rail 234 is guided in the first direction.

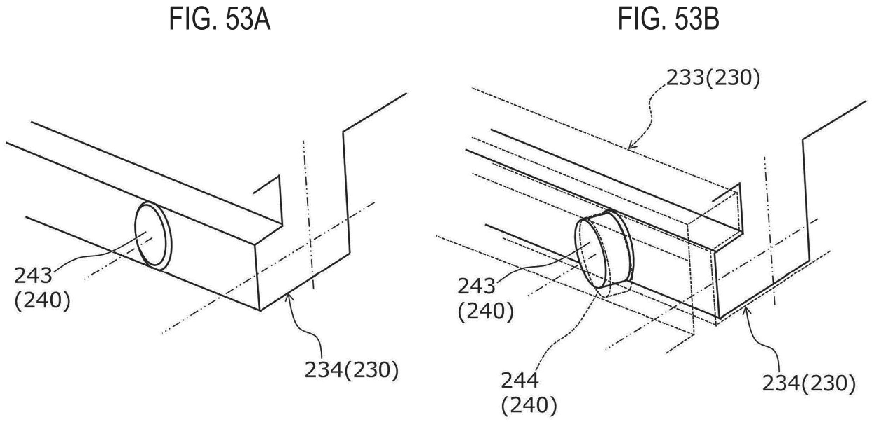

As illustrated in Figs. 52 and 53, a plurality of protruding portions 243 are provided in the first direction on outer surfaces of the protrusions of the two inner rails 234. Each of the protruding portions 243 can protrude in a direction substantially perpendicular to the second direction, that is, outward in the vehicle width direction (see Fig. 53(b)).

Each of the protruding portions 243 can be stored inward in the vehicle width direction inside the inner rail 234 (see Fig. 53A). A protruding operation and a storing operation for the protruding portion 231 may be controlled by a control device 382 via a built-in actuator, for example.

A plurality of fitting portions 244 are provided on side walls of the two outer rails 233 in the first direction. The respective fitting portions 244 are arranged so as to correspond to positions of the plurality of protruding portions 243. Each fitting portion 244 penetrates through the side wall of the outer rail 233 in a direction substantially perpendicular to the second direction, that is, in the vehicle width direction. Each fitting portion 244 serving as a through-hole is formed such that each protruding portion 231 can be fitted thereto (see Fig. 53B).

In the case of attaching the mounted body 300 to the traveling body 200, all of the plurality of protruding portions 231 are stored in the inner rails 234 (see Fig. 53(a)). When the traveling body 200 enters the inside from an entrance of a rear end of a storage station 500, a rear end of the inner rail 234 enters from the front end of the outer rail 233 while the traveling body 200 travels below the mounted body 300. In this state, the inner rail 234 is guided by the outer rail 233 and engaged while sliding in the first direction.

When the sliding described above progresses and the positions of the protruding portions 243 and the fitting portion 244 overlap each other in a side view, the traveling body 200 is considered to have reached a stop position and stops. Next, the stored protruding portion 243 is controlled to protrude outward in the vehicle width direction in a state in which the traveling body 200 is stopped at the stop position (see Fig. 53(b)). Accordingly, the engagement and fixation are achieved, and the mounted body 300 is attached to the traveling body 200. After the attachment, the mobile body 100 travels with a rear side as the first direction, and travels out of the entrance of the rear end of the storage station 500 to the outside.

### [Fourth Embodiment]

A storage station 500 (storage system 400) of a mobile body 100 according to a fourth embodiment of the present invention is different from the above-described first embodiment in that a power supply of a traveling body 200 and/or a power supply 380 of a mounted body 300 can be charged inside a storage station 500, and information corresponding to a state of charge can be displayed externally.

In the first and fourth embodiments, the storage system 400 includes a stop position determination unit 283c that determines a stop position inside the storage station 500, and the storage station 500 includes an arrangement portion 560 on which the detached mounted body 300 can be arranged. These points, including an aspect of attachment and detachment of the mounted body 300 in the storage station 500, are common to the first and fourth embodiments.

A bottom surface portion 510 of the storage station 500 of the first embodiment faces a bottom surface of a vehicle body 260 of the traveling body 200 when the traveling body 200 is stopped at the stop position. The addition of a function to the bottom surface portion 510 is arbitrary. When the mounted body 300 is arranged, the arrangement portion 560 in the storage station 500 of the first embodiment supports the mounted body 300 upward in a second direction from a bottom surface of a base portion 330 of the mounted body 300. Functions other than the support of the mounted body 300 may be added to the arrangement portion 560.

On the other hand, the storage station 500 of the fourth embodiment includes power feeding units 570a and 570b, and a display unit 580. Both a power supply 280 and a power supply 380 of the mobile body 100 according to the fourth embodiment are chargeable/dischargeable batteries (secondary batteries).

The power feeding units 570a and 570b are configured to be able to supply electric energy for charging to the power supply 280 of the traveling body 200 and the power supply 380 of the mounted body 300. The display unit 580 is configured to be capable of externally displaying information corresponding to states of charge of the power supply 280 and the power supply 380. The fourth embodiment is different from the first embodiment only in these points, and is the same as the first embodiment in other points.

Hereinafter, only differences of the fourth embodiment from the first embodiment will be described. In the fourth embodiment, the same reference numerals as those in the first embodiment and the like denote the same or equivalent components or parts as those in the first embodiment and the like.

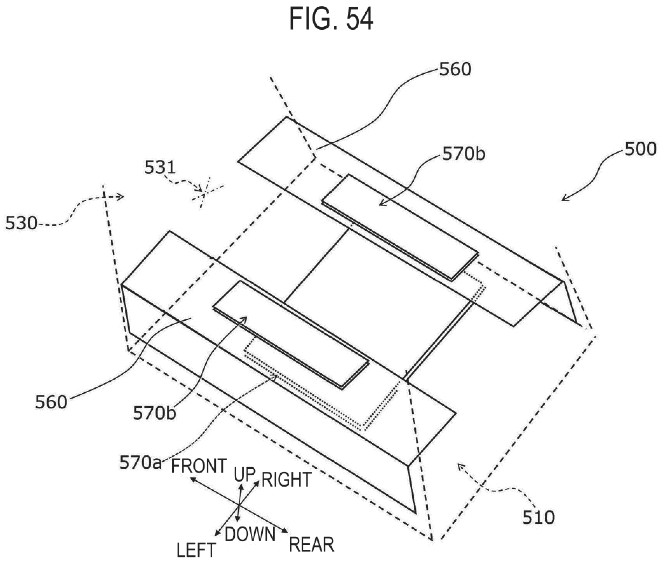

As illustrated in Fig. 54, the power feeding unit 570a is provided on the bottom surface portion 510 of the storage station 500. The power feeding unit 570a has a flat plate shape. When an upper surface of the power feeding unit 570a and a lower surface of a power receiving unit 285 described below overlap each other, electric energy is supplied from the power feeding unit 570a toward the power receiving unit 285.

The power feeding unit 570b is provided on the arrangement portion 560 of the storage station 500. The power feeding unit 570b has a flat plate shape. When an upper surface of the power feeding unit 570b and a lower surface of a power receiving unit 385 described below overlap each other, electric energy is supplied from the power feeding unit 570b toward the power receiving unit 385.

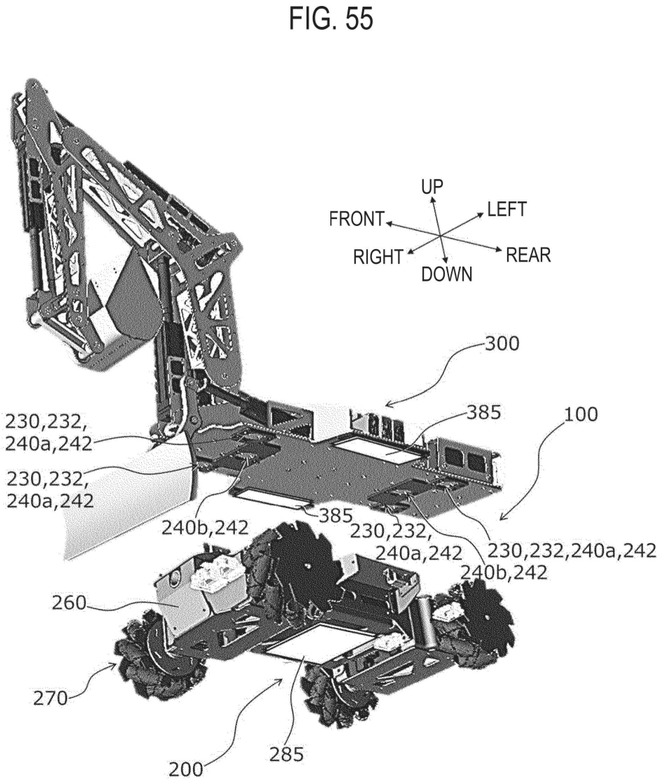

As illustrated in Fig. 55, the power receiving unit 285 is provided on the bottom surface of the vehicle body 260 of the traveling body 200. The power receiving unit 285 has a flat plate shape. The lower surface of the power receiving unit 285 is arranged so as to overlap the upper surface of the power feeding unit 570a when the traveling body 200 is stopped at the stop position. The power receiving unit 285 is electrically connected to the power supply 280 of the traveling body 200. The power receiving unit 285 can send electric energy for charging to the power supply 280.

The power receiving unit 385 is provided on the bottom surface of the base portion 330 of the mounted body 300. The power receiving unit 385 has a flat plate shape. The lower surface of the power receiving unit 385 is arranged so as to overlap the upper surface of the power feeding unit 570b when the mounted body 300 is arranged on the arrangement portion 560. The power receiving unit 385 is electrically connected to the power supply 380 of the mounted body 300. The power receiving unit 285 can send electric energy for charging to the power supply 280.

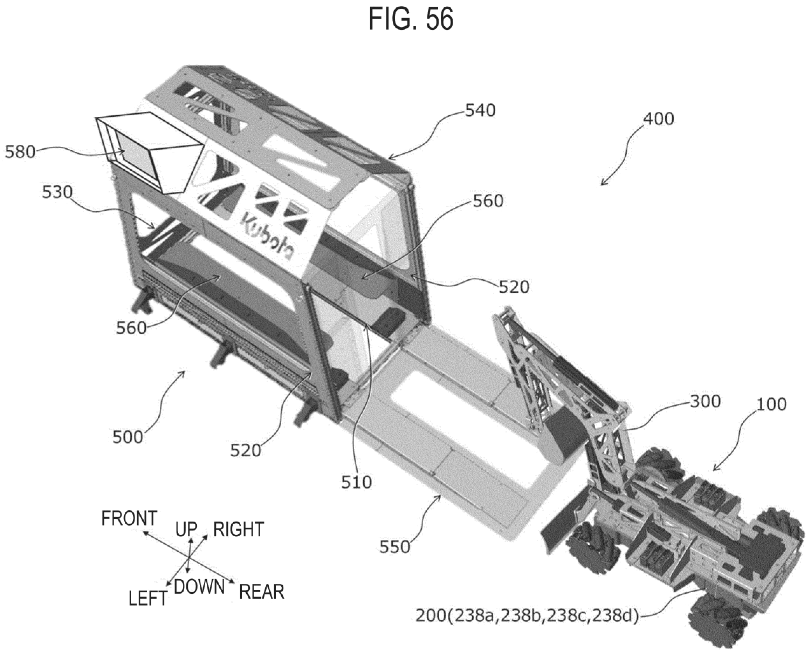

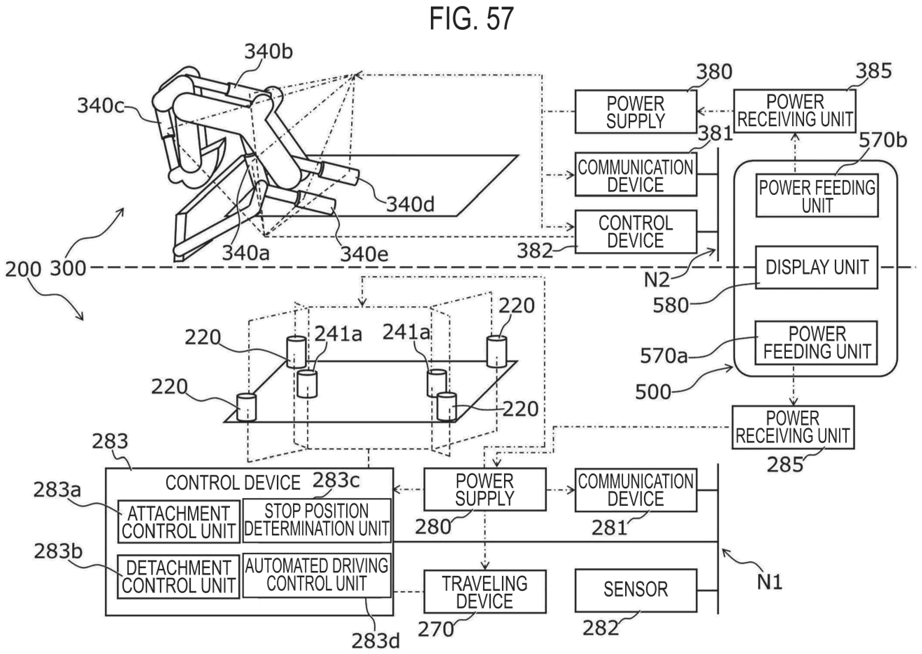

As illustrated in Figs. 56 and 57, the display unit 580 is arranged on an outer side of a roof portion 540 of the storage station 500, for example. The display unit 580 may be an external terminal including a communication device, a monitor device, an electric/electronic circuit, a CPU, and the like. The monitor device of the display unit 580 may be visually recognizable outside the storage station 500.

In a case where it is determined that the power supply 280 and the power supply 380 are being charged, the display unit 580 receives information regarding the remaining battery level from a communication device 281 and a communication device 381. The display unit 580 displays information corresponding to the state of charge via the monitor device based on the received information. Examples of the information to be displayed include a numerical value indicating a ratio (a percentage or the like) of the remaining battery level to a full capacity, a logo corresponding to a status (such as charging/charging completed), and the like.

The power feeding units 570a and 570b may be supplied with electric energy for charging that has undergone boosting or the like from the outside of the storage station 500 via, for example, a wire (not illustrated). A form of power feeding from the power feeding units 570a and 570b to the power receiving units 285 and 385 may be, for example, either contact power feeding or non-contact power feeding. The form of power feeding is arbitrary as long as the power feeding units 570a and 570b and the power feeding units 570a and 570b can be electrically connected.

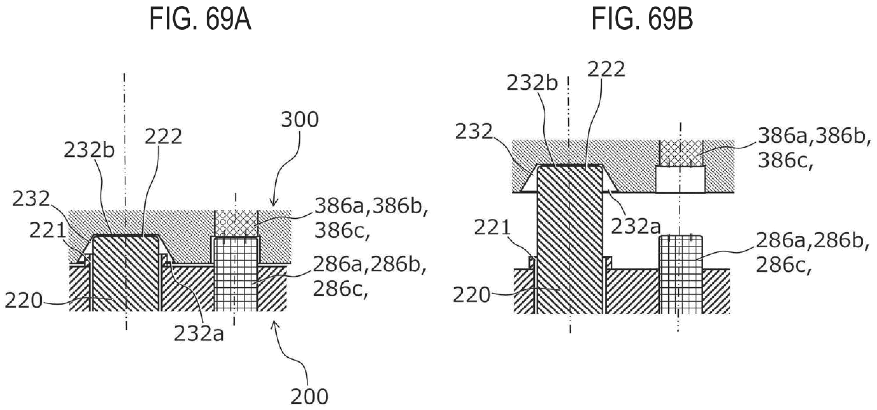

In a case where the form of power feeding is contact power feeding, for example, the power feeding units 570a and 570b, and the power receiving units 285 and 385 may include contact type terminals (see, for example, Fig. 69 of a fifth embodiment). In this case, the terminals of the power feeding units 570a and 570b and the terminals of the power receiving units 285 and 385 come into contact with each other, thereby allowing the respective energization.

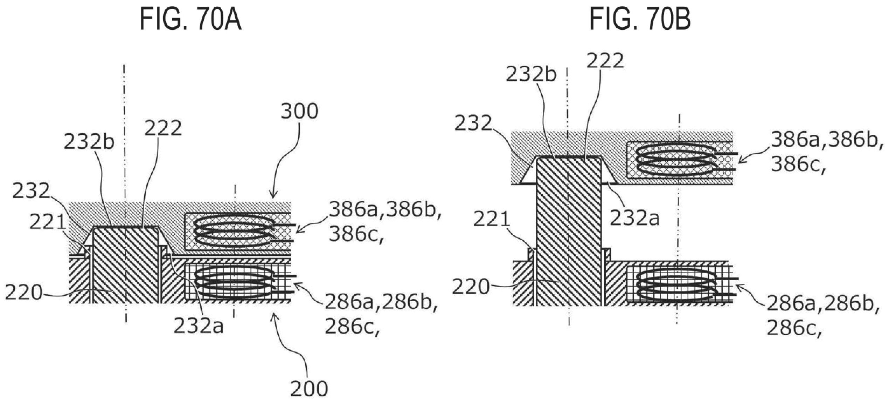

In a case where the form of power feeding is non-contact power feeding, for example, the power feeding units 570a and 570b, and the power receiving units 285 and 385 may include coils (see, for example, Fig. 70 of the fifth embodiment). In this case, the coils of the power feeding units 570a and 570b convert electricity into magnetism. The coils of the power receiving units 285 and 385 convert magnetism into electricity. Each of the power feeding units 570a and 570b and the power receiving units 285 and 385 are allowed to be energized through magnetism.

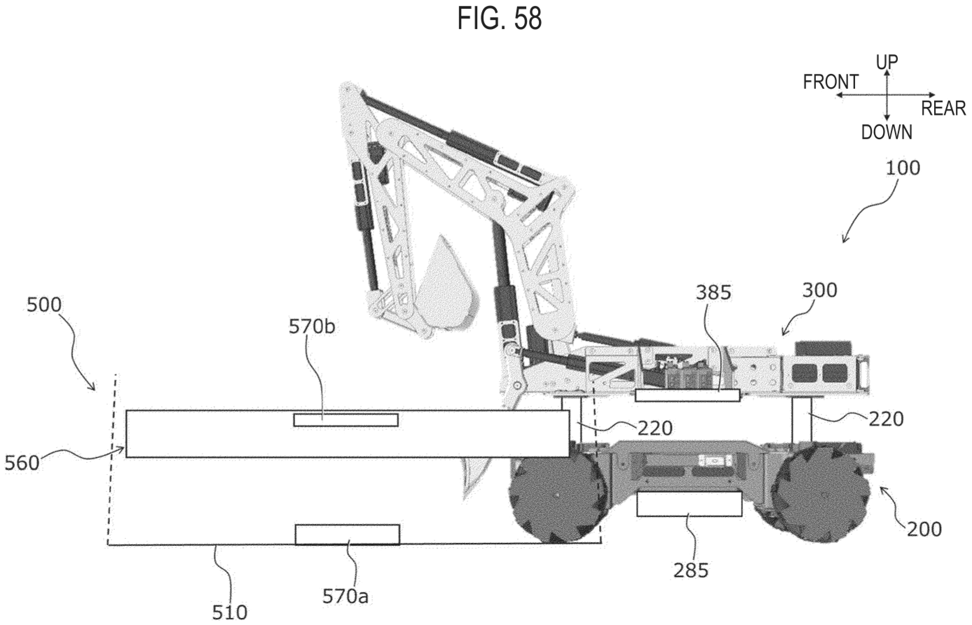

Hereinafter, an operation when the power supply 280 and the power supply 380 are charged in the storage station 500 will be described. As illustrated in Fig. 58, it is assumed that the mobile body 100 has entered the storage station 500 in order to detach the mounted body 300 from the traveling body 200. At this time, while the mounted body 300 is supported by a lift portion 220, the mobile body 100 travels in a state in which the mounted body 300 has shifted upward from a mounting surface 210 of the traveling body 200. In this state, the power feeding units 570a and 570b, and the power receiving units 285 and 385 are greatly separated from each other. Therefore, the energization is not allowed. As the traveling body 200 further travels toward the stop position, the power receiving unit 285 on the bottom surface of the vehicle body 260 approaches the power feeding unit 570a of the bottom surface portion 510.

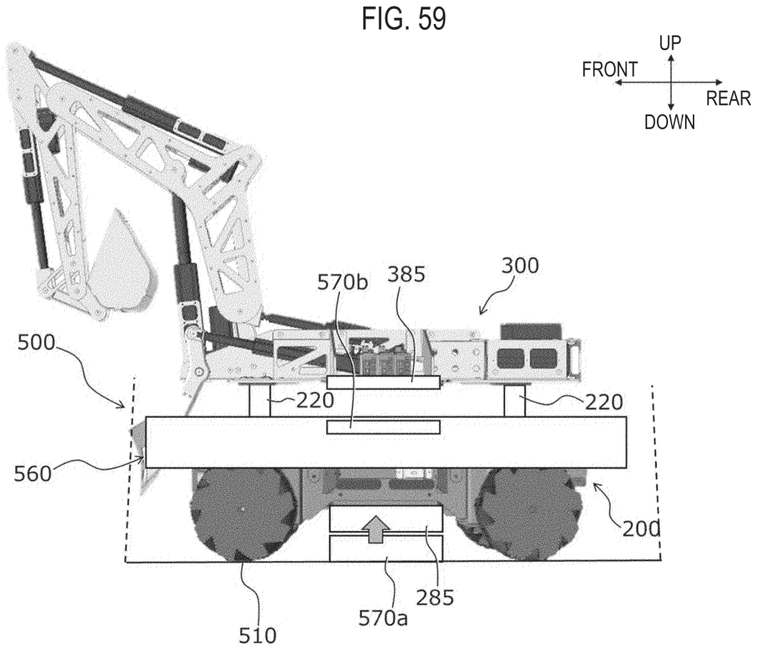

As illustrated in Fig. 59, when the traveling body 200 stops at the stop position in the storage station 500, the upper surface of the power feeding unit 570a and the lower surface of the power receiving unit 285 overlap each other. As a result, non-contact energization between the power feeding unit 570a and the power receiving unit 285 is allowed, and electric energy for charging is supplied to the power supply 280. At the same time, information regarding the remaining battery level of the power supply 280 is transmitted from the communication device 281 to the display unit 580. In the display unit 580, information corresponding to the state of charge of the power supply 280 is displayed via the monitor device.

In this state, the power receiving unit 385 on the bottom surface of the base portion 330 is positioned upward of the arrangement portion 560, and the power feeding unit 570b and the power receiving unit 385 are separated from each other. Therefore, the energization is not allowed. As the mounted body 300 is moved downward while being supported by the lift portion 220, the power receiving unit 385 on the bottom surface of the base portion 330 approaches the power feeding unit 570b of the arrangement portion 560.

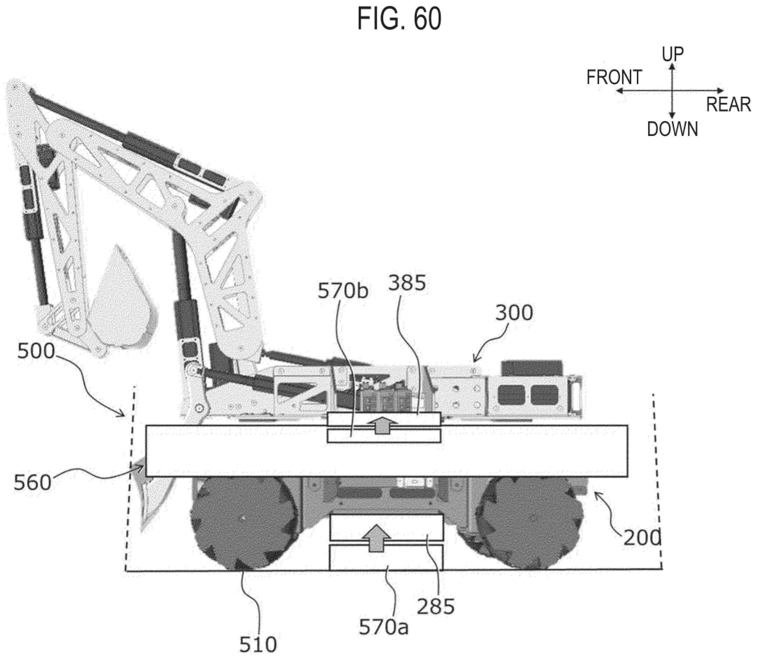

As illustrated in Fig. 60, when the mounted body 300 is arranged on the arrangement portion 560 in the storage station 500, the upper surface of the power feeding unit 570b and the lower surface of the power receiving unit 385 overlap each other. As a result, non-contact energization between the power feeding unit 570b and the power receiving unit 385 is allowed, and electric energy for charging is supplied to the power supply 380. At the same time, information regarding the remaining battery level of the power supply 380 is transmitted from the communication device 381 to the display unit 580. In the display unit 580, information corresponding to the state of charge of each of the power supply 280 and the power supply 380 is displayed via the monitor device.

In the present embodiment, both the power supply 280 and the power supply 380 can be charged in the storage station 500. However, instead of such a configuration, either one of the power supply 280 and the power supply 380 may be charged.

### [Fifth Embodiment]

In a mobile body 100 according to the fifth embodiment of the present invention, a traveling body 200 includes a first end portion 286, and a mounted body 300 includes a second end portion 386. When the mounted body 300 is attached to a mounting surface 210, contact or non-contact energization between the first end portion 286 and the second end portion 386 is allowed. When the mounted body 300 is detached from the mounting surface 210, contact or non-contact energization between the first end portion 286 and the second end portion 386 is restricted. The fifth embodiment is different from the first embodiment described above in this point.

In the first and fifth embodiments, each of the traveling body 200 and the mounted body 300 includes an electric device. These points, including an aspect of attachment and detachment of the mounted body 300 in the storage station 500, are common to the first and fifth embodiments.

In the first embodiment, no electrical connection is formed between the electric device (corresponding to a first electric device) of the traveling body 200 and the electric device (corresponding to a second electric device) of the mounted body 300 even when the mounted body 300 is attached to the traveling body 200.

On the other hand, in the fifth embodiment, the first end portion 286 of the traveling body 200 is electrically connected to the first electric device of the traveling body 200. The second end portion 386 of the mounted body 300 is electrically connected to the second electric device of the mounted body 300. As described above, when the energization between the first end portion 286 and the second end portion 386 is allowed, electrical connection between the first electric device of the traveling body 200 and the second electric device of the mounted body 300 is achieved.

On the other hand, when the energization between the first end portion 286 and the second end portion 386 is restricted as described above, the electrical connection between the first electric device of the traveling body 200 and the second electric device of the mounted body 300 is released. The fifth embodiment is different from the first embodiment only in these points, and is the same as the first embodiment in other points.

Hereinafter, only differences of the fifth embodiment from the first embodiment will be described. In the fifth embodiment, the same reference numerals as those in the first embodiment and the like denote the same or equivalent components or parts as those in the first embodiment and the like.

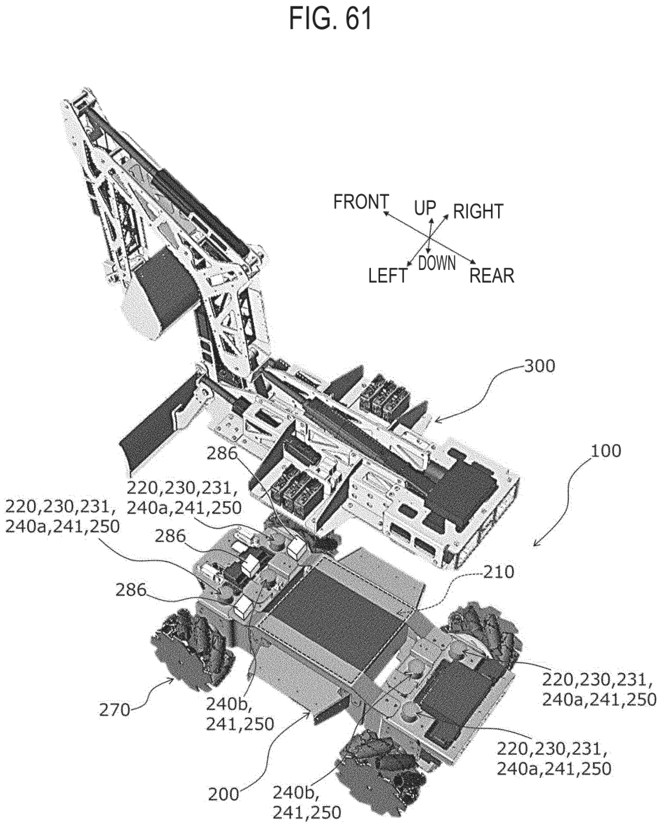

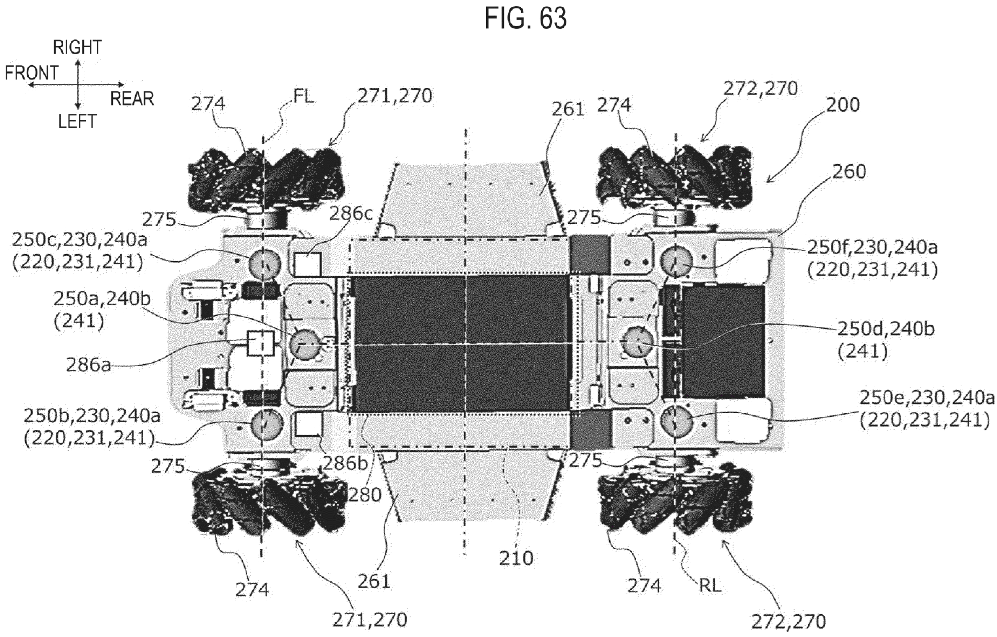

As illustrated in Figs. 61 and 63, three first end portions 286a, 286b, and 286c are provided on an upper surface (upper end) of the traveling body 200. The first end portion 286a, the first end portion 286b, and the first end portion 286c are arranged on a front side of a vehicle body 260 in a vehicle length direction in a plan view.

More specifically, for example, the first end portion 286a may be arranged between a support portion 250b and a support portion 250c. The first end portion 286b and the first end portion 286c may be arranged so as to sandwich a support portion 250a. The first end portion 286 only needs to be arranged on the front side of the vehicle body 260, and the number of first end portions 286 and a positional relationship between the first end portions 286 are arbitrary.

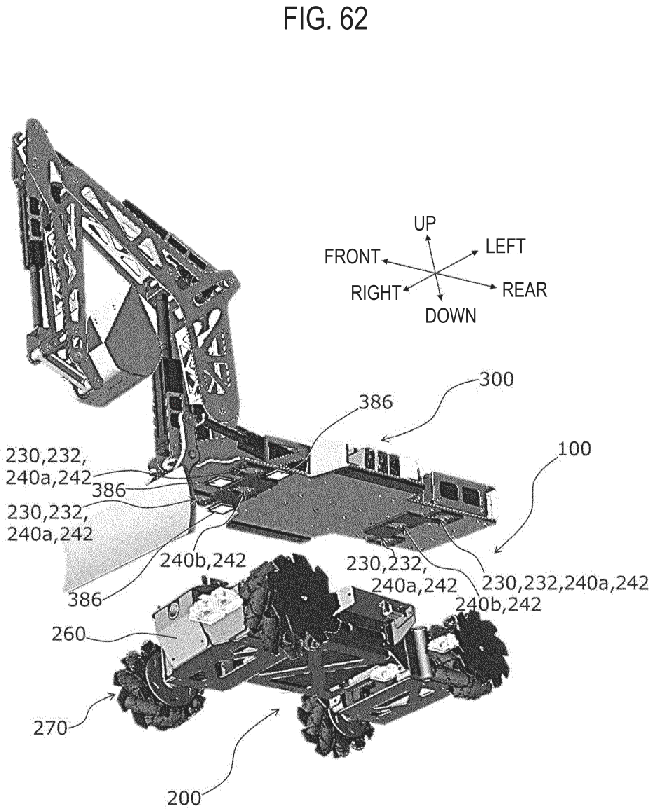

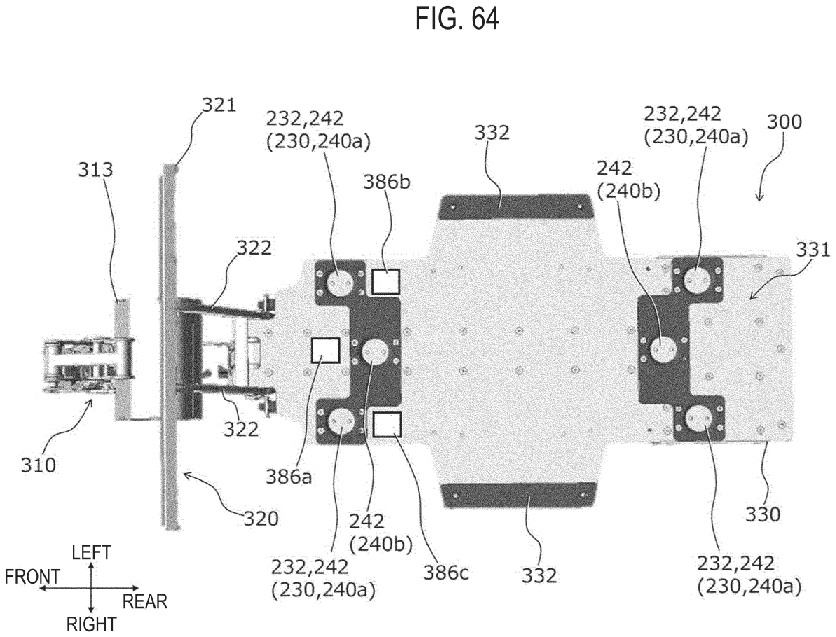

As illustrated in Figs. 62 and 64, three second end portions 386a, 386b, and 386c are provided on a low surface (lower end) of the mounted body 300. The second end portion 386a, the second end portion 386b, and the second end portion 386c are arranged on a front side of a base portion 330 in the vehicle length direction in a bottom view.

More specifically, the second end portion 386a, the second end portion 386b, and the second end portion 386c are arranged at positions corresponding to the first end portion 286a, the first end portion 286b, and the first end portion 286c, respectively. When the mounted body 300 is attached to the traveling body 200, the second end portion 386a, the second end portion 386b, and the second end portion 386c are arranged so as to overlap the first end portion 286a, the first end portion 286b, and the first end portion 286c, respectively. The second end portion 386 only needs to correspond to the first end portion 286, and the number of second end portions 386 and a positional relationship between the second end portions 386 are the same as those of the first end portions 286.

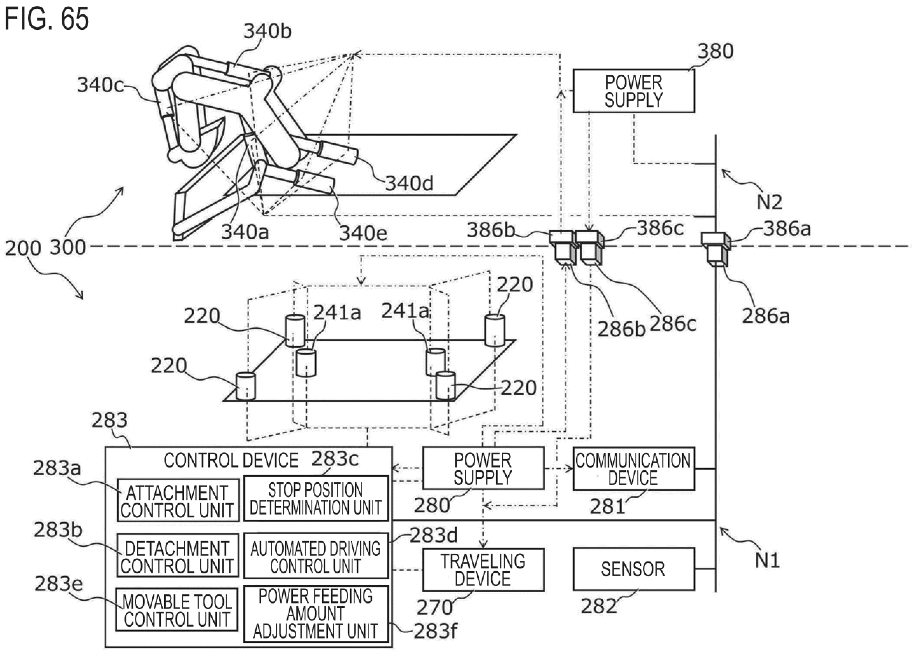

As illustrated in Fig. 65, the first end portion 286a is electrically connected to a control device 283, a communication device 281, and the like of the traveling body 200 via a communication network N1. The second end portion 386a is electrically connected to a drive unit 340a, a drive unit 340b, a drive unit 340c, a drive unit 340d, a drive unit 340e, a power supply 380, a battery sensor, and the like of the mounted body 300 via communication network N2.

When the energization between the first end portion 286a and the second end portion 386a is allowed, the communication network N1 and the communication network N2 are connected. Therefore, a control signal from the control device 283 of the traveling body 200 can be sent to the drive unit 340a, the drive unit 340b, the drive unit 340c, the drive unit 340d, the drive unit 340e, the power supply 380, and the like of the mounted body 300, and information of the battery sensor of the mounted body 300 can be sent to the communication device 281 of the traveling body 200.

Note that the control device 283 of the present embodiment further includes a movable tool control unit 283e and a power feeding amount adjustment unit 283f. The drive unit 340a, the drive unit 340b, the drive unit 340c, the drive unit 340d, and the drive unit 340e of the mounted body 300 are controlled by the movable tool control unit 283e in a state in which the energization between the first end portion 286a and the second end portion 386a is allowed. The power feeding amount adjustment unit 283f adjusts a power feeding amount for the power supply 380 of the mounted body 300 and the power supply 280 of the traveling body 200.

The first end portion 286b is electrically connected to the power supply 280 of the traveling body 200. The second end portion 386b is electrically connected to the drive unit 340a, the drive unit 340b, the drive unit 340c, the drive unit 340d, and the drive unit 340e of the mounted body 300. When the energization between the first end portion 286b and the second end portion 386b is allowed, electric energy for driving can be sent from both of the power supply 280 of the traveling body 200 and the power supply 380 of the mounted body 300 to the drive unit 340a, the drive unit 340b, the drive unit 340c, the drive unit 340d, and the drive unit 340e of the mounted body 300.

The first end portion 286c is electrically connected to a drive unit of a traveling device 270 of the traveling body 200. The second end portion 386c is electrically connected to the power supply 380 of the mounted body 300. When the energization between the first end portion 286c and the second end portion 386c is allowed, electric energy for driving can be sent to the traveling device 270 of the traveling body 200 from both of the power supply 380 of the mounted body 300 and the power supply 280 of the traveling body 200.

A form of the energization for the first end portions 286a, 286b, and 286c, and the second end portions 386a, 386b, and 386c may be, for example, either contact energization or non-contact energization. The form of energization is arbitrary as long as electrical connection is possible for the first end portions 286a, 286b, and 286c, and the second end portions 386a, 386b, and 386c.

When the form of energization is contact energization, for example, the first end portions 286a, 286b, and 286c, and the second end portions 386a, 386b, and 386c may be contact type terminals (see, for example, Fig. 69). In this case, the terminals of the first end portions 286a, 286b, and 286c, and the terminals of the second end portions 386a, 386b, and 386c come into contact with each other, so that the respective energization is allowed.

When the form of energization is non-contact energization, for example, the first end portions 286a, 286b, and 286c, and the second end portions 386a, 386b, and 386c may be coils (see, for example, Fig. 70). In this case, the coils of the first end portion 286b and the second end portion 386c convert electricity into magnetism. The coils of the first end portion 286c and the second end portion 386b convert magnetism into electricity.

As for the first end portion 286a and the second end portion 386a, in the case of energizing from the first end portion 286a toward the second end portion 386a, the coil of the first end portion 286a converts electricity into magnetism, and the coil of the second end portion 386a converts magnetism into electricity. In the case of energizing from the second end portion 386a toward the first end portion 286a, the coil of the second end portion 386a converts electricity into magnetism, and the coil of the first end portion 286a converts magnetism into electricity.

Therefore, the energization between each of the first end portions 286a, 286b, and 286c, and each of the second end portions 386a, 386b, and 386c is allowed through magnetism. The form of energization of some of the first end portions 286a, 286b, and 286c, and the second end portions 386a, 386b, and 386c may be contact energization, and the form of energization of the remaining ones of the first end portions 286a, 286b, and 286c, and the second end portions 386a, 386b, and 386c may be non-contact energization. That is, the contact energization and the non-contact energization may be used together.

Hereinafter, an operation when the mounted body 300 arranged on an arrangement portion 560 of the storage station 500 is attached to the traveling body 200 and the energization between the first end portion 286 and the second end portion 386 is allowed will be described. In the present embodiment, in a case where the traveling body 200 and the mounted body 300 are separated from each other, the energization between the first end portion 286 and the second end portion 386 is restricted.

Examples of the "case where the traveling body 200 and the mounted body 300 are separated from each other" include a case where the mounted body 300 is arranged on the arrangement portion 560 and the traveling body 200 is positioned outside the storage station 500, and a case where the traveling body 200 is positioned inside the storage station 500 and the mounting surface 210 of the traveling body 200 and a bottom surface of the mounted body 300 are separated. More specifically, in a state in which the mounted body 300 is detached from the traveling body 200, the energization between the first end portion 286 and the second end portion 386 is restricted.

On the other hand, in a case where the traveling body 200 to which the mounted body 300 is not attached approaches the mounted body 300 arranged on the arrangement portion 560, the energization between the first end portion 286 and the second end portion 386 is allowed. Examples of the "case where the traveling body 200 approaches" include a case where the first end portions 286a, 286b, and 286c, and the second end portions 386a, 386b, and 386c overlap each other. More specifically, in a state in which the mounted body 300 is attached to the traveling body 200, the energization between the first end portion 286 and the second end portion 386 is allowed.

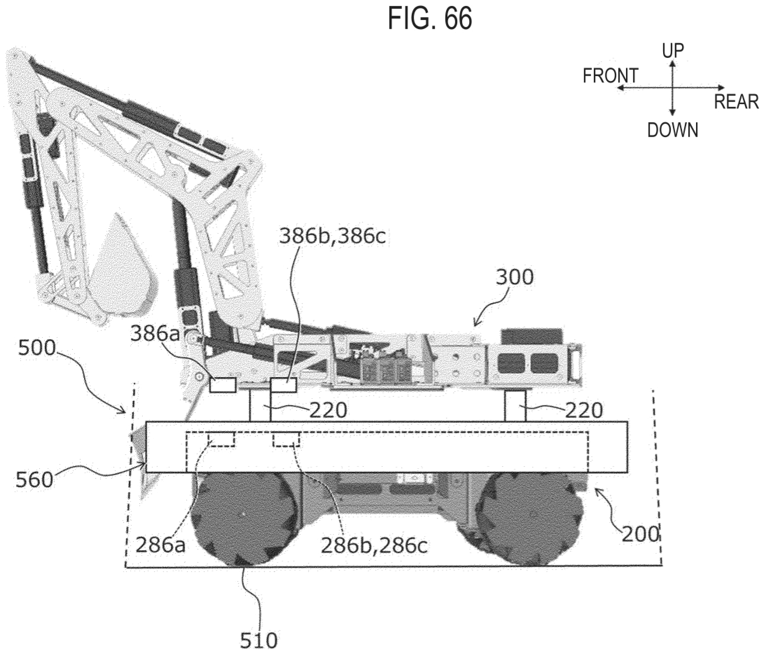

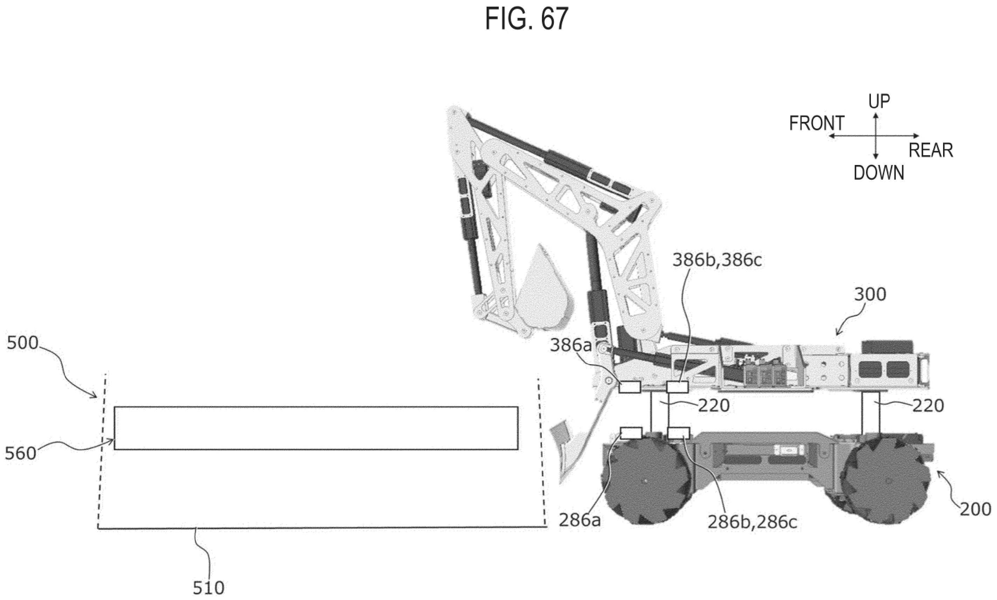

As illustrated in Fig. 66, it is assumed that the traveling body 200 to which the mounted body 300 is not attached is stopped at a stop position inside the storage station 500, and causes a lift portion 220 to move the mounted body 300 upward in a second direction from the arrangement portion 560 while supporting the mounted body 300. Next, as illustrated in Fig. 67, the traveling body 200 and the mounted body 300 integrally travel out of the storage station 500 with a rear side of the vehicle body 260 as a first direction in a state in which the mounted body 300 is shifted upward.

At this time, the traveling body 200 and the mounted body 300 are separated from each other. When the form of energization between the first end portion 286 and the second end portion 386 is contact energization, a state in which the respective terminals are not in contact with each other as illustrated in Fig. 69B is maintained. In addition, when the form of energization between the first end portion 286 and the second end portion 386 is non-contact energization, a state in which a magnetic field does not reach from one coil to the other coil as illustrated in Fig. 70B is maintained. Therefore, the energization between the first end portion 286 and the second end portion 386 is restricted.

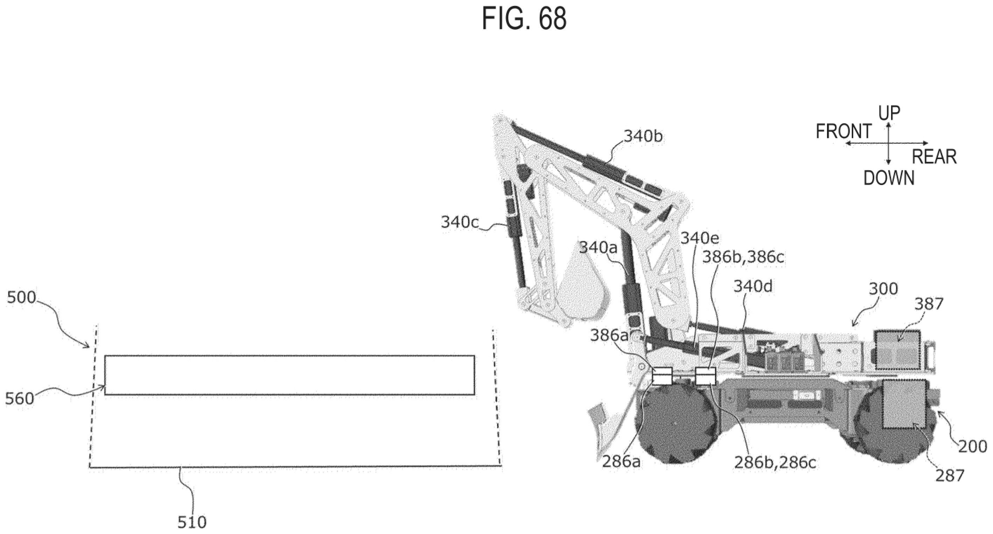

As illustrated in Fig. 68, the mounted body 300 that has shifted upward is moved downward in a third direction by the lift portion 220 while being supported, and the mounted body 300 is attached to the mounting surface 210. At this time, the first end portions 286a, 286b, and 286c, and the second end portions 386a, 386b, and 386c overlap each other.

When the form of energization between the first end portion 286 and the second end portion 386 is contact energization, a state in which the respective terminals are in contact with each other as illustrated in Fig. 69A is maintained. In addition, when the form of energization between the first end portion 286 and the second end portion 386 is non-contact energization, a state in which the magnetic field reaches from one coil to the other coil as illustrated in Fig. 70A is maintained. Therefore, the energization between the first end portion 286 and the second end portion 386 is allowed.

As described above, in a case where the mounted body 300 is attached to the mounting surface 210, the energization between the first end portion 286 and the second end portion 386 is allowed, and the electrical connection between the electric device of the traveling body 200 and the electric device of the mounted body 300 is achieved. More specifically, the energization between the first end portion 286a and the second end portion 386a is allowed, and communication of a control signal and information between the traveling body 200 and the mounted body 300 becomes possible (see Fig. 65).

The energization between the first end portion 286b and the second end portion 386b is allowed, and electric energy for driving can be sent from the power supply 280 of the traveling body 200 to the drive unit 340a, the drive unit 340b, the drive unit 340c, the drive unit 340d, and the drive unit 340e of the mounted body 300. The energization between the first end portion 286c and the second end portion 386c is allowed, and electric energy for driving can be sent from the power supply 380 of the mounted body 300 to the traveling device 270 of the traveling body 200 (see Fig. 65).

On the other hand, when the mounted body 300 is detached from the mounting surface 210, the energization between the first end portion 286 and the second end portion 386 is restricted, and the electrical connection between the electric device of the traveling body 200 and the electric device of the mounted body 300 is released. That is, communication of a control signal and information between the traveling body 200 and the mounted body 300 is restricted, and the supply of electricity from the power supply 280 of the traveling body 200 toward the mounted body 300 and the supply of electricity from the power supply 380 of the mounted body 300 toward the traveling body 200 are also restricted.

In the present embodiment, a power supply amount from each of the power supply 280 and the power supply 380 may be adjusted by the power feeding amount adjustment unit 283f of the control device 283 (see Fig. 65). In this case, the power feeding amount adjustment unit 283f adjusts the power feeding amount of either one or both of the power supply 280 and the power supply 380 based on remaining battery levels of the power supply 280 and the power supply 380. For example, a function of adjusting the respective power feeding amounts (voltage and current) and a function of switching may be provided in the power supply 280 and the power supply 380, and adjustment and switching may be performed according to a control signal from the control device 283 (power feeding amount adjustment unit 283f).

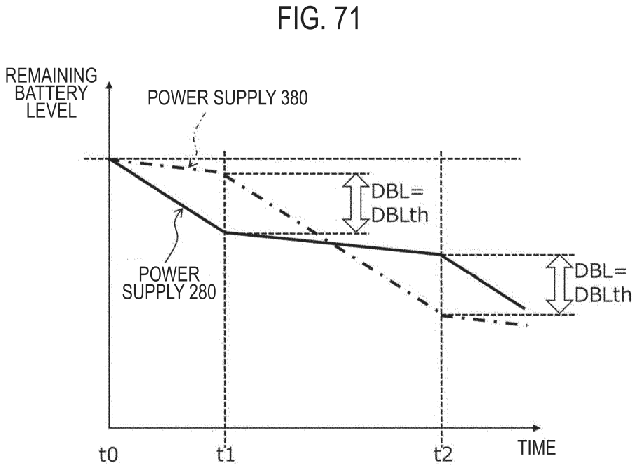

As illustrated in Fig. 71, for example, the power feeding amount adjustment unit 283f may adjust the power feeding amounts of the power supply 280 and the power supply 380 based on the remaining battery levels of the power supply 280 and the power supply 380. As an example, it is assumed that, in the mobile body 100 in which the mounted body 300 has been attached, a load during traveling of the traveling device 270 is large, and operations of a first movable tool 310 and a second movable tool 320 are slight.

Note that it is assumed that the above-described state starts from time t0, and the remaining battery levels of the power supply 280 and the power supply 380 are in a fully charged state at time t0. In addition, in Fig. 71, a solid line graph indicates a temporal change in the remaining battery level of the power supply 280, and a chain line graph indicates a temporal change in the remaining battery level of the power supply 380.

In this case, the power feeding amount adjustment unit 283f performs the following control. After time t0, the power feeding amount adjustment unit 283f adjusts each power feeding amount such that electric energy for driving is supplied from the power supply 280 of the traveling body 200 to the traveling device 270 and electric energy for driving is supplied from the power supply 380 of the mounted body 300 to drive units of the first movable tool 310 and the second movable tool 320.

After time t0, the remaining battery level of the power supply 280 greatly decreases, and the remaining battery level of the power supply 380 slightly decreases. As a result, a difference DBL in the remaining battery level increases. It is assumed that the difference DBL in the remaining battery level reaches a threshold DBLth at time t1. At this time, the power feeding amount adjustment unit 283f reduces the power feeding amount from the power supply 280 to the traveling device 270, and performs control to supply electric energy for driving from the power supply 380 to the traveling device 270 by the reduced amount.

After time t1, the remaining battery level of the power supply 280 slightly decreases, and the remaining battery level of the power supply 380 greatly decreases. As a result, the difference DBL in the remaining battery level decreases. Eventually, after the remaining battery levels of the power supply 280 and the power supply 380 are reversed, the difference DBL between the remaining battery levels increases again.

It is assumed that the difference DBL in the remaining battery level reaches the threshold DBLth again at time t2. At this time, the power feeding amount adjustment unit 283f reduces the power feeding amount from the power supply 380 to the traveling device 270, and performs control to supply electric energy for driving from the power supply 280 to the traveling device 270 by the reduced amount.

By adjusting the power feeding amounts of the power supply 280 and the power supply 380 in this manner, it is possible to reduce the remaining battery level of each of a plurality of power supplies in a well-balanced manner. Therefore, it is possible to suppress a situation in which the number of times charging is performed increases due to, for example, the remaining battery levels of some of the plurality of power supplies becoming zero at an early stage. Therefore, it is possible to suppress early deterioration of the power supply 280 and the power supply 380.

On the other hand, in the mobile body 100 in which the mounted body 300 has been attached, the power feeding amount adjustment unit 283f may be configured to have a control aspect opposite to the above-described control aspect in a state in which the load during traveling of the traveling device 270 is small and the operations of the first movable tool 310 and the second movable tool 320 are excessive.

In the present embodiment, electricity can be supplied from the power supply 280 of the traveling body 200 toward the mounted body 300 via the first end portion 286b and the second end portion 386b, and electricity can be supplied from the power supply 380 of the mounted body 300 toward the traveling body 200 via the first end portion 286c and the second end portion 386c. Alternatively, only one of a combination of the first end portion 286b and the second end portion 386b and a combination of the first end portion 286c and the second end portion 386c may be present.

Further, in the present embodiment, in a case where the form of energization between the first end portion 286 and the second end portion 386 is non-contact energization, and in particular, the energization is allowed through magnetism, an arrangement relationship among the first end portion 286 and the second end portion 386, the movable tools, the drive units, and the electric devices may be defined as follows.

As illustrated in Fig. 68, in a state in which the mounted body 300 is attached to the traveling body 200, for example, the first end portion 286 of the traveling body 200 is arranged on a front side of the traveling body 200 in the first direction (a front half portion of the vehicle body 260). In addition, the first movable tool 310, the second movable tool 320, the drive unit 340a, the drive unit 340b, the drive unit 340c, the drive unit 340d, the drive unit 340e, and the second end portion 386 of the mounted body 300 are arranged on a front side of the mounted body 300 in the first direction (for example, a front half portion of the base portion 330).

An electronic unit 287 including the control device 283 and the communication device 281 of the traveling body 200 is arranged on a rear side of the traveling body 200 in the first direction (a rear half portion of the vehicle body 260). An electronic unit 387 including the control device 382 and the communication device 381 of the mounted body 300 is arranged on a rear side of the mounted body 300 in the first direction (a rear half portion of the base portion 330).

More specifically, the first end portion 286 may be arranged such that a distance (shortest linear distance) from a position of any one of the first end portion 286a, the first end portion 286b, and the first end portion 286c to a position of any one of the electronic unit 287 and the electronic unit 387 is longer than a distance (shortest linear distance) from a position of any one of the first end portion 286a, the first end portion 286b, and the first end portion 286c to a position of any one of the drive unit 340a, the drive unit 340b, the drive unit 340c, the drive unit 340d, and the drive unit 340e.

In addition, the second end portion 386 may be arranged such that a distance (shortest linear distance) from a position of any one of the second end portion 386a, the second end portion 386b, and the second end portion 386c to a position of any one of the electronic unit 287 and the electronic unit 387 is longer than a distance (shortest linear distance) from a position of any one of the second end portion 386a, the second end portion 386b, and the second end portion 386c to a position of any one of the drive unit 340a, the drive unit 340b, the drive unit 340c, the drive unit 340d, and the drive unit 340e.

By defining the arrangement in this manner, a magnetic generation source (for example, a coil) can be moved away from the electronic unit 287 and the electronic unit 387. Therefore, a mechanism, a function, and the like for blocking electromagnetic wave can be simplified for the electronic unit 287 and the electronic unit 387. Therefore, the degree of freedom in designing the traveling body 200 and the mounted body 300 can be expanded while adopting the form of non-contact energization.

### [Sixth Embodiment]

In a mobile body 100 according to a sixth embodiment of the present invention, only a traveling body 200 includes a power supply 280, and a mounted body 300 does not include a power supply. In addition, the traveling body 200 includes a transmission portion 290. The transmission portion 290 is configured to transmit energy for driving from the traveling body 200 toward drive units of a first movable tool 310 and a second movable tool 320 in the mounted body 300. The sixth embodiment is different from the first embodiment described above in this point.

In the first and sixth embodiments, the traveling body 200 includes the power supply 280, and electric energy for driving is supplied from the power supply 280 toward a traveling device 270, a lift portion 220, and the like of the traveling body 200. These points, including an aspect of attachment and detachment of the mounted body 300 in the storage station 500, are common to the first and sixth embodiments.

In the first embodiment, the mounted body 300 also includes a power supply 380, and electric energy for driving is supplied from the power supply 380 to a drive unit 340a, a drive unit 340b, a drive unit 340c, a drive unit 340d, a drive unit 340e, and the like of the mounted body 300. Even when the mounted body 300 is attached to the traveling body 200, energy is not transmitted from the traveling body 200 toward the mounted body 300.

On the other hand, in the sixth embodiment, when the mounted body 300 is attached to the traveling body 200, the transmission portion 290 of the traveling body 200 transmits energy for driving from the traveling body 200 toward the drive units of the first movable tool 310 and the second movable tool 320 in the mounted body 300. In addition, a first end portion 286a and a second end portion 386a of the fifth embodiment are also provided to enable transmission of a control signal from the traveling body 200 to the mounted body 300. The sixth embodiment is different from the first embodiment only in these points, and is the same as the first embodiment in other points.

Hereinafter, only differences of the sixth embodiment from the first embodiment will be described. In the sixth embodiment, the same reference numerals as those in the first embodiment and the like denote the same or equivalent components or parts as those in the first embodiment and the like.

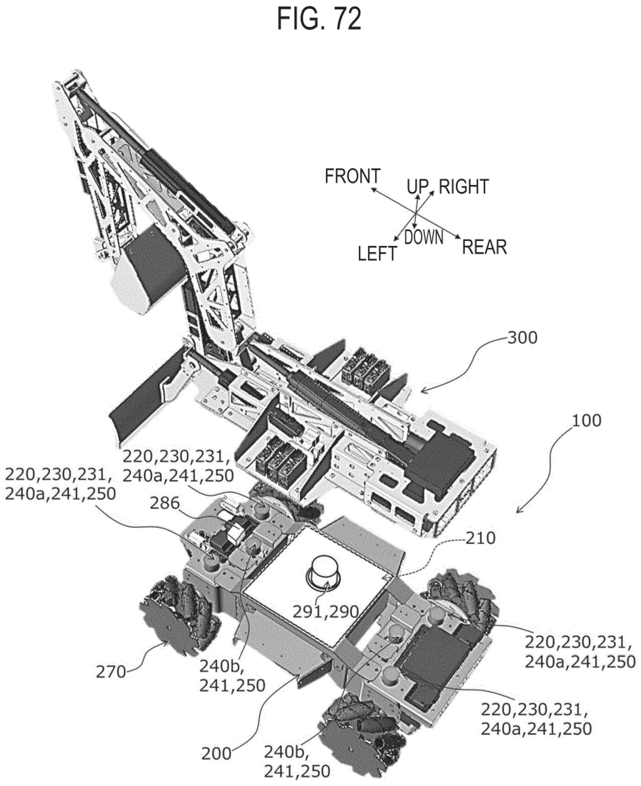

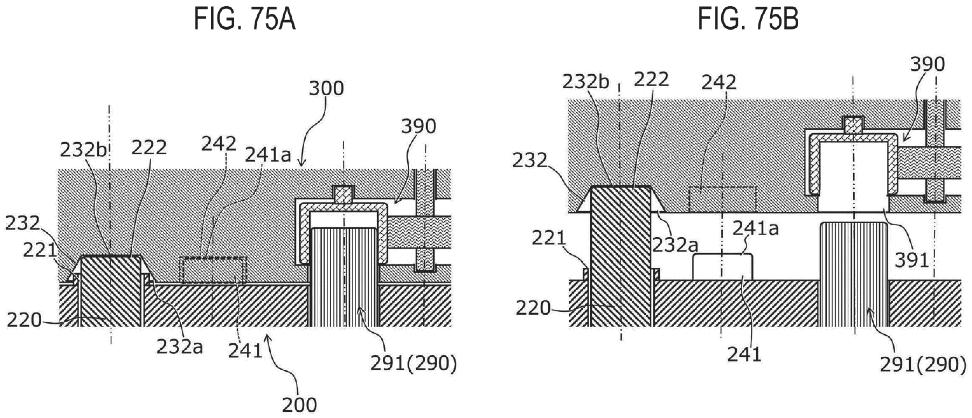

As illustrated in Fig. 72, the traveling body 200 includes the transmission portion 290. The transmission portion 290 includes a columnar shaft 291 and the like. The shaft 291 is provided on an upper surface (upper end) of a vehicle body 260 and at a substantially central portion of the vehicle body 260, and protrudes upward in a second direction from the vehicle body 260. An upper end portion of the shaft 291 can be fitted into a spline gear described below (see Fig. 75).

A lower end portion of the shaft 291 of the transmission portion 290 is accommodated inside the vehicle body 260. The lower end portion is rotationally driven based on driving of an actuator or the like by receiving power fed from the power supply 280. Note that a predetermined gear mechanism or the like may be interposed between the actuator and the lower end portion of the transmission portion 290 to appropriately decelerate. As a result, the shaft 291 of the transmission portion 290 is relatively rotatable about an axis with respect to the vehicle body 260.

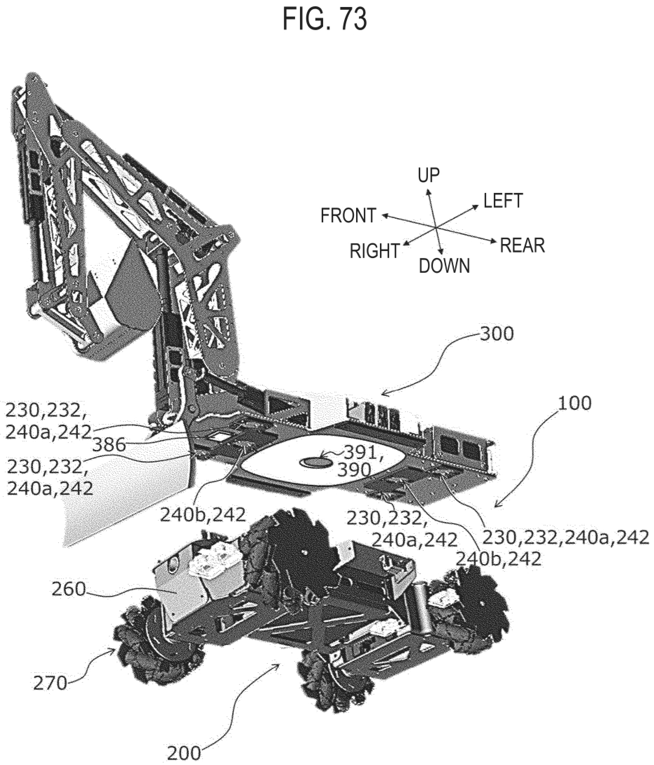

As illustrated in Fig. 73, the mounted body 300 includes a transmitted portion 390. The transmitted portion 390 includes a fitting portion 391 and the like having a circular cross section. The fitting portion 391 is provided on a bottom surface (lower end) of a base portion 330 and at a substantially central portion of the base portion 330 so as to correspond to a position of the shaft 291, and is recessed upward in the second direction from the bottom surface of the base portion 330.

The spline gear is coaxially accommodated inside the fitting portion 391, and the upper end portion of the shaft 291 can be fitted into the spline gear via the fitting portion 391 (see Fig. 75). A predetermined gear mechanism, a gear shifter, and the like are accommodated in the base portion 330, and motive power can be transmitted from the spline gear to the drive unit 340a, the drive unit 340b, the drive unit 340c, the drive unit 340d, and the drive unit 340e through the gear mechanism, the gear shifter, and the like.

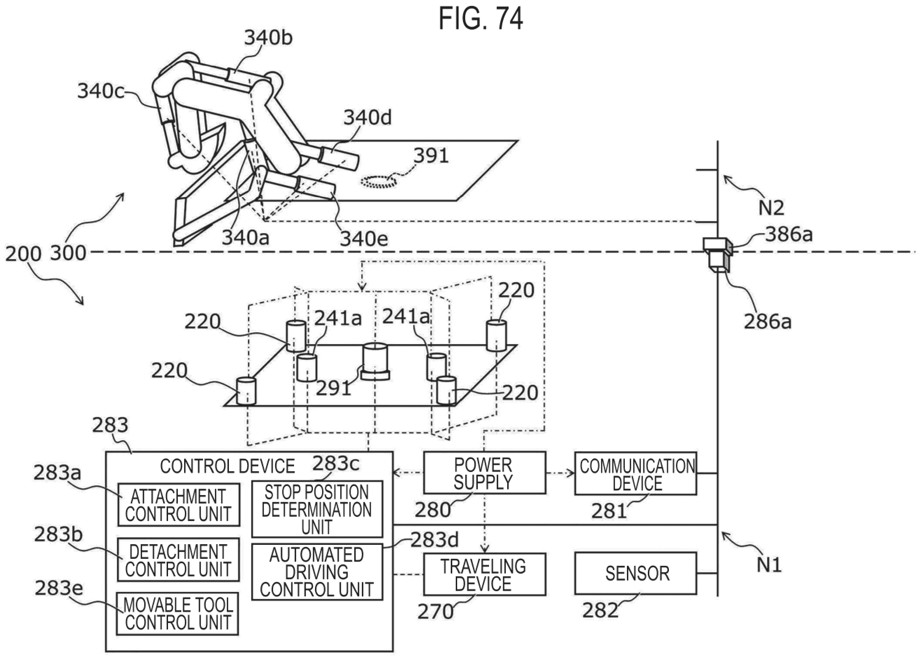

As illustrated in Fig. 74, driving of the transmission portion 290 is controlled by a movable tool control unit 283e of a control device 283. Similarly to the fifth embodiment, the first end portion 286a and the second end portion 386a are provided at predetermined positions on the traveling body 200 and the mounted body 300.

When energization between the first end portion 286a and the second end portion 386a is allowed, a control signal of the control device 283 can be transmitted toward the mounted body 300. For example, the movable tool control unit 283e of the control device 283 may be configured to control the gear shifter or the like attached to the transmitted portion 390 in order to control driving of the drive unit 340a, the drive unit 340b, the drive unit 340c, the drive unit 340d, and the drive unit 340e.

As illustrated in Fig. 75A, it is assumed that the lift portion 220 supporting the mounted body 300 descends and the mounted body 300 is attached to the traveling body 200. At this time, the shaft 291 of the transmission portion 290 is fitted into the fitting portion 391 of the transmitted portion 390, and a distal end portion of the shaft 291 is fitted and engaged with the spline gear coaxially accommodated in the fitting portion 391.

As a result, when the shaft 291 of the transmission portion 290 rotates, the spline gear also rotates integrally with the shaft 291. The rotational power is transmitted to the drive unit 340a, the drive unit 340b, the drive unit 340c, the drive unit 340d, and the drive unit 340e via the gear mechanism, the gear shifter, and the like built in the base portion 330 of the mounted body 300.

As illustrated in Fig. 75B, it is assumed that the lift portion 220 supporting the mounted body 300 ascends and the mounted body 300 is detached from the traveling body 200. At this time, the shaft 291 of the transmission portion 290 is removed from the fitting portion 391 of the transmitted portion 390, and the fitting and engagement between the distal end portion of the shaft 291 and the spline gear are released. As a result, transmission of a driving force toward the drive unit 340a, the drive unit 340b, the drive unit 340c, the drive unit 340d, and the drive unit 340e is also cut off.

### <Modification Example of Transmission Portion>

In the present embodiment, the transmission portion 290 transmits energy to the drive units of the first movable tool 310 and the second movable tool 320 via the shaft 291 and mechanisms such as various gears. Alternatively, for example, the transmission portion 290 may transmit energy toward the drive units of the first movable tool 310 and the second movable tool 320 through a fluid. As the fluid, for example, hydraulic oil or the like may be used, and a hydraulic circuit directed from the traveling body 200 to the mounted body 300 may be formed.

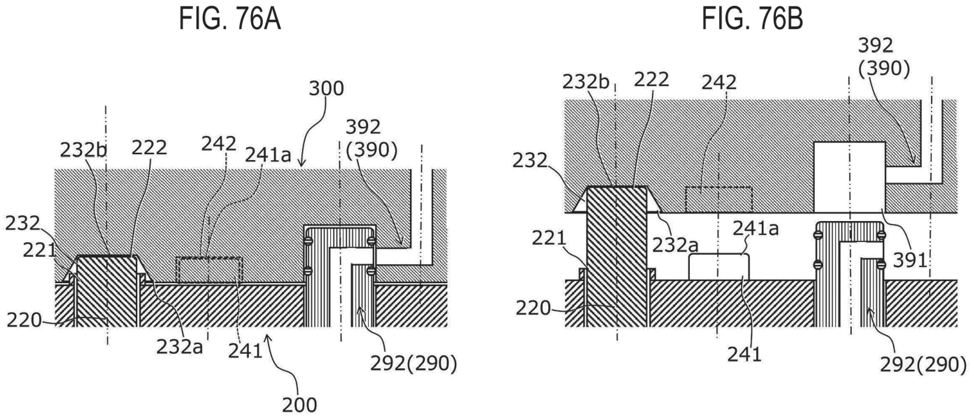

In this case, as illustrated in Fig. 76, for example, the transmission portion 290 may include a pipe portion 292 instead of the shaft 291, and the transmitted portion 390 may include a flow path portion 392 instead of the mechanism such as the spline gear. The pipe portion 292 can be fitted into the fitting portion 391 of the transmitted portion 390. Hydraulic oil can flow through each of the pipe portion 292 and the flow path portion 392.

The pipe portion 292 has a cylindrical shape and protrudes upward in the second direction. An opening end serving as an oil inlet/outlet port is provided on a side surface of the pipe portion 292. The traveling body 200 may be provided with a hydraulic circuit including a hydraulic pump and an electromagnetic valve, and may be configured such that an end portion thereof becomes an opening end of the pipe portion 292.

The flow path portion 392 is formed inside the base portion 330. An opening end of the flow path portion 392 is provided on an inner wall surface of the fitting portion 391 of the transmitted portion 390. When the pipe portion 292 is fitted into the fitting portion 391, positions of the opening ends are adjusted so as to overlap each other. The drive unit 340a, the drive unit 340b, the drive unit 340c, the drive unit 340d, and the drive unit 340e of the mounted body 300 are hydraulic cylinders, and the flow path portion 392 may be connected to each hydraulic cylinder via a switching spool or the like.

As illustrated in Fig. 76A, it is assumed that the lift portion 220 supporting the mounted body 300 descends and the mounted body 300 is attached to the traveling body 200. At this time, the pipe portion 292 of the transmission portion 290 is fitted into the fitting portion 391 of the transmitted portion 390, and the opening end of the pipe portion 292 overlaps the opening end of the flow path portion 392. The flow of oil between the pipe portion 292 and the flow path portion 392 is allowed.

As a result, when the hydraulic pump is driven, the pressurized oil flows through the pipe portion 292 and the flow path portion 392. The pressure is transmitted to the drive unit 340a, the drive unit 340b, the drive unit 340c, the drive unit 340d, and the drive unit 340e via the hydraulic circuit including the pipe portion 292 and the flow path portion 392.

As illustrated in Fig. 76B, it is assumed that the lift portion 220 supporting the mounted body 300 ascends and the mounted body 300 is detached from the traveling body 200. At this time, the pipe portion 292 of the transmission portion 290 is removed from the fitting portion 391 of the transmitted portion 390, and the flow of oil through the pipe portion 292 and the flow path portion 392 is blocked. As a result, the transmission of the pressure toward the drive unit 340a, the drive unit 340b, the drive unit 340c, the drive unit 340d, and the drive unit 340e is also cut off.

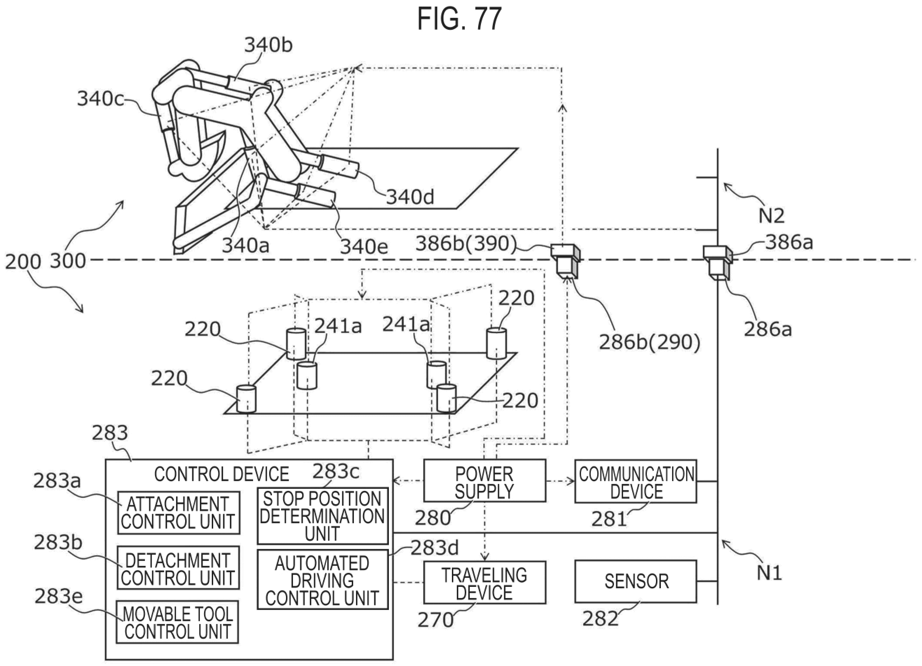

Alternatively, for example, the transmission portion 290 may transmit energy to the drive units of the first movable tool 310 and the second movable tool 320 through electricity or magnetism. In this case, as illustrated in Fig. 77, for example, the transmission portion 290 may include a first end portion 286b of the fifth embodiment instead of the shaft 291, and the transmitted portion 390 may include a second end portion 386b of the fifth embodiment instead of the fitting portion 391 (see Figs. 69 and 70).

In a case where energy is transmitted between the first end portion 286b and the second end portion 386b through electricity, a state in which terminals are in contact with each other as illustrated in Fig. 69A is maintained when the mounted body 300 is mounted. As a result, electric energy for driving is transmitted to the drive unit 340a, the drive unit 340b, the drive unit 340c, the drive unit 340d, and the drive unit 340e.

When the mounted body 300 is detached, a state in which the terminals are not in contact with each other as illustrated in Fig. 69B is maintained. As a result, the transmission of the electric energy toward the drive unit 340a, the drive unit 340b, the drive unit 340c, the drive unit 340d, and the drive unit 340e is cut off.

In a case where energy is transmitted between the first end portion 286b and the second end portion 386b through magnetism, a state in which a magnetic field reaches from one coil to the other coil as illustrated in Fig. 70A is maintained when the mounted body 300 is attached. As a result, electric energy for driving is transmitted to the drive unit 340a, the drive unit 340b, the drive unit 340c, the drive unit 340d, and the drive unit 340e through magnetism.

When the mounted body 300 is detached, a state in which the magnetic field does not reach from one coil to the other coil as illustrated in Fig. 70B is maintained. As a result, the transmission of electric energy toward the drive unit 340a, the drive unit 340b, the drive unit 340c, the drive unit 340d, and the drive unit 340e through magnetism is cut off.

### <Modification Example of Attachment>

In the present embodiment, the mounted body 300 is attached to the traveling body 200, and an attachment 300 functioning as a backhoe when attached is used as the mounted body 300. Instead of the above attachment 300, for example, an attachment 300 functioning as a mobility for carrying a person when attached may be used.

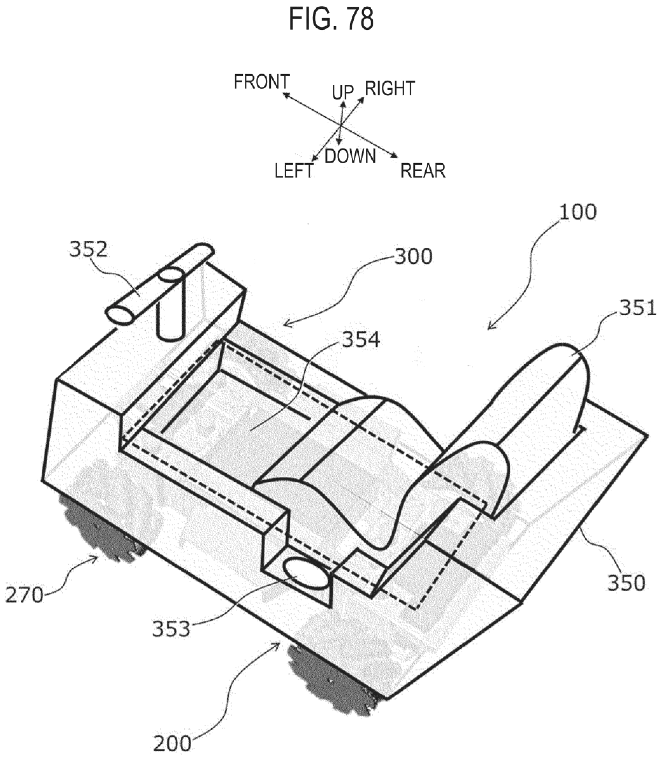

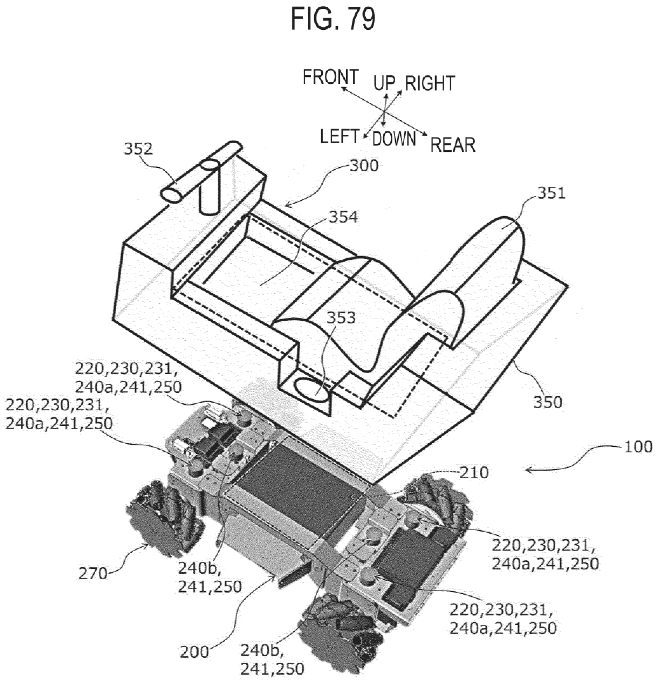

As illustrated in Figs. 78 and 79, the attachment 300 includes a housing portion 350, a seat portion 351, and a steering wheel 352. Note that the attachment 300 does not include a power supply. The housing portion 350 has a substantially rectangular parallelepiped shape. The housing portion 350 is configured such that a long side is along a vehicle length direction and a short side is along a vehicle width direction in a plan view.

An upper side of the housing portion 350 is open, and the seat portion 351 is provided inside the housing portion 350. The seat portion 351 is configured such that an inclination of a backrest is adjustable. Therefore, an occupant can get into the seat portion 351 in a sitting posture or a lying posture. Recesses 353 of the housing portion 350 are formed on both sides of the seat portion 351 in the vehicle width direction. By using the recesses 353 as steps and placing both feet in the respective recesses 353, the occupant can get into the seat portion 351 in a straddling manner.

The steering wheel 352 is provided on an upper side of a front end of the housing portion 350. The occupant can grip the steering wheel 352 during traveling. A floor portion 354 is formed between the steering wheel 352 and the seat portion 351. The occupant can get into the seat portion 351 in a standing posture while placing both feet on the floor portion 354.

A bottom surface of a lower end of the housing portion 350 faces a mounting surface 210 of the traveling body 200. Aspects of support, lift operation, engagement, and fixation for the bottom surface are similar to those described above. That is, an aspect of attachment and detachment of the attachment 300 is similar to that described above. The attachment 300 is configured such that a person can board in any of a sitting posture, a standing posture, a lying posture, and a straddling posture in a state in which the attachment 300 is attached to the mounting surface 210 of the traveling body 200.

In a state in which a person boards as the occupant on the attachment 300 attached to the mounting surface 210, the traveling body 200 travels integrally with the attachment 300, so that the person can also move. That is, by using the attachment 300 configured as described above, the mobile body 100 functions as a mobility for carrying a person.

### [Seventh Embodiment]

In a mobile body 100 according to a seventh embodiment of the present invention, an attachment 300 functioning as a movable hot/cold storage when attached is used as a mounted body 300. The seventh embodiment is different from the first embodiment described above in this point.

In the first and seventh embodiments, the attachment 300 is attachable to and detachable from a traveling body 200. These points, including an aspect of attachment and detachment of the mounted body 300 in the storage station 500, are common to the first and seventh embodiments.

In the first embodiment, the attachment 300 functioning as a backhoe when attached is used as the mounted body 300. A structure of an outer shell of the attachment 300, a positional relationship between the outer shell and an outer end of a vehicle body 260, an accommodation function, and the like are arbitrary.

On the other hand, in the seventh embodiment, the attachment 300 includes an outer shell portion 360 and an accommodation portion 361. The outer shell portion 360 is configured to be positioned outward of the outer end of the vehicle body 260 in a plan view when the attachment 300 is attached. The accommodation portion 361 is configured to be able to accommodate supplies inside the outer shell portion 360. The seventh embodiment is different from the first embodiment only in these points, and is the same as the first embodiment in other points.

Hereinafter, only differences of the seventh embodiment from the first embodiment will be described. In the seventh embodiment, the same reference numerals as those in the first embodiment and the like denote the same or equivalent components or parts as those in the first embodiment and the like.

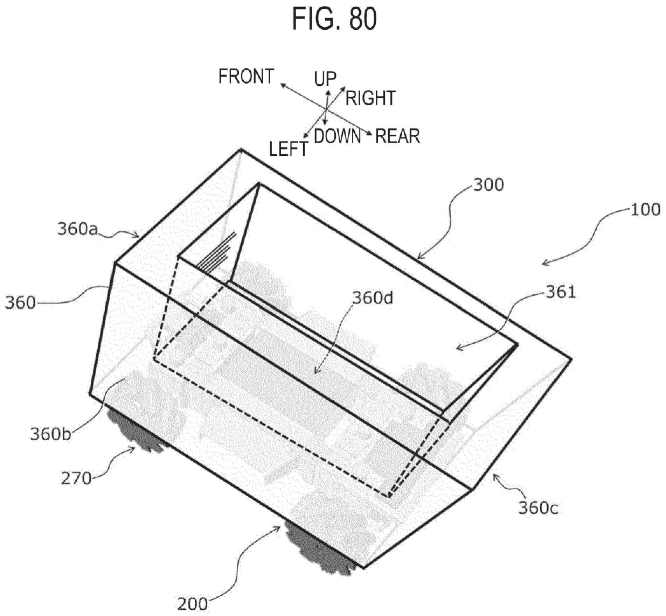

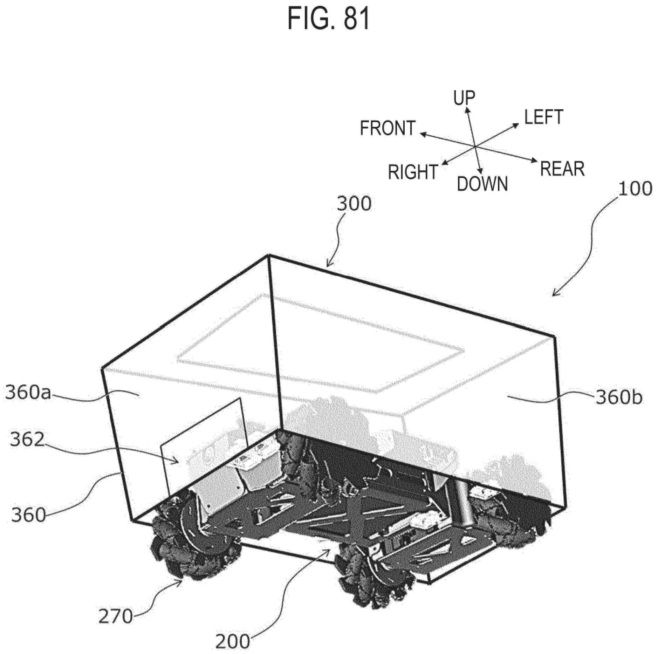

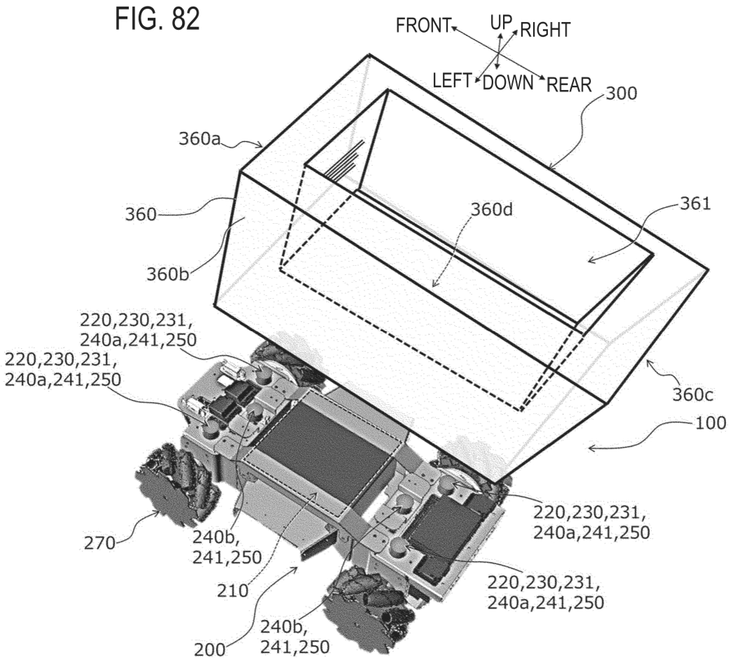

As illustrated in Figs. 80, 81, 82, and 83, the attachment 300 of the present embodiment is configured to be a rectangular parallelepiped housing. The housing includes a front wall portion 360a, side wall portions 360b, a rear wall portion 360c, and a bottom portion 360d. The bottom portion 360d has a rectangular plate shape, and is surrounded by the front wall portion 360a, the side wall portions 360b, and the rear wall portion 360c so as to correspond to four sides thereof. Such portions forming the housing may be made of a heat insulating material.

The bottom portion 360d is slightly raised in the entire attachment 300. The attachment 300 is divided into a lower side and an upper side with the bottom portion 360d as a boundary. On the lower side of the attachment 300, the front wall portion 360a, the side wall portions 360b, and the rear wall portion 360c extend downward from the bottom portion 360d.

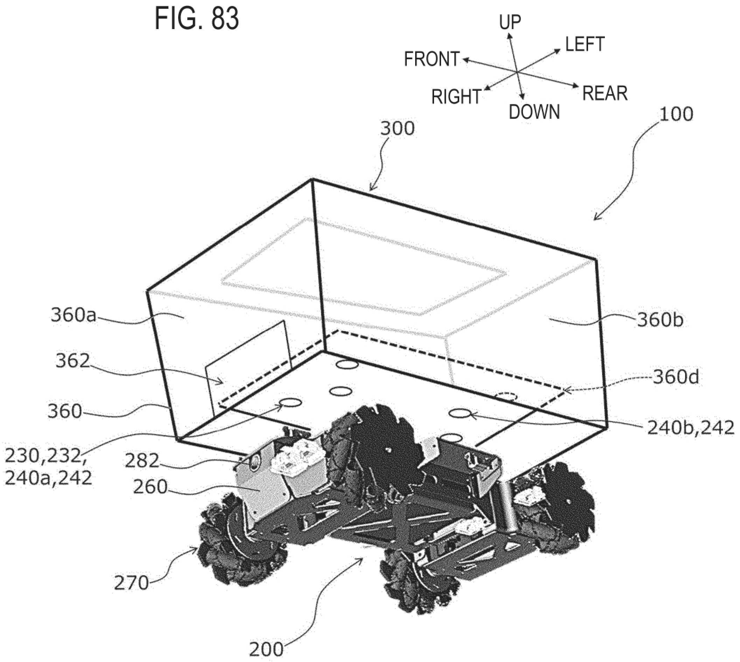

When the attachment 300 is attached to the traveling body 200, a lower surface of the bottom portion 360d and a mounting surface 210 at an upper end of the traveling body 200 face each other. On the lower surface of the bottom portion 360d, a fitting portion 232 is provided at a position corresponding to a lift portion 220 (see Fig. 83). The lift portion 220 and the fitting portion 232 are engaged to bring the bottom portion 360d close to the mounting surface 210 at the time of attachment. Accordingly, the traveling body 200 is fixed to the lower side of the attachment 300.

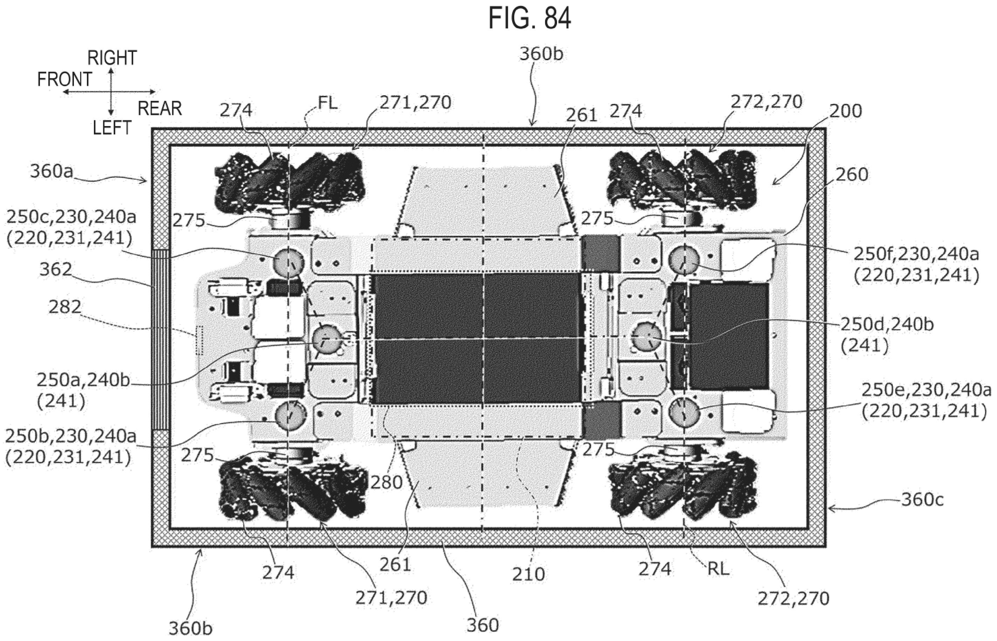

In a state in which the attachment 300 is attached, most of the traveling body 200 is covered by the bottom portion 360d, the front wall portion 360a, the side wall portions 360b, and the rear wall portion 360c. More specifically, a front end and a rear end of the vehicle body 260 in a vehicle length direction face inner sides of the front wall portion 360a and the rear wall portion 360c, respectively. Both ends of the vehicle body 260 in a vehicle width direction and both ends of front and rear traveling devices 270 face inner sides of the side wall portions 360b on both sides (see Fig. 84). The lower surface of the bottom portion 360d faces the entire upper surface of the vehicle body 260 and upper sides of the front and rear traveling devices 270.

As illustrated in Fig. 84, when the attachment 300 (mounted body 300) is attached to the mounting surface 210, a positional relationship between the attachment 300 and the vehicle body 260 is as follows. The front wall portion 360a, the side wall portions 360b, and the rear wall portion 360c are positioned outward of the outer end of the vehicle body 260. The bottom portion 360d is positioned above the traveling devices 270 in a second direction. That is, in the present embodiment, the front wall portion 360a, the side wall portions 360b, the rear wall portion 360c, and the bottom portion 360d correspond to the outer shell portion 360.

By forming the outer shell portion 360 in this manner, the traveling body 200 can be protected as a whole. Since the outer shell portion 360 itself can also serve as an outer side of the attachment 300, it is not necessary to separately add a guard or a fender to the traveling device 270. Therefore, a cohesive design for the mobile body 100 can be implemented as a whole.

An electric device that emits a beam to the outside is provided at the front end of the vehicle body 260 in the traveling body 200. In the present embodiment, the electric device is a sensor 282 described above. However, the electric device may also be a range sensor or distance sensor (distance measuring sensor) that emits a detection beam to the outside, or a light source that emits a viewing beam to the outside.

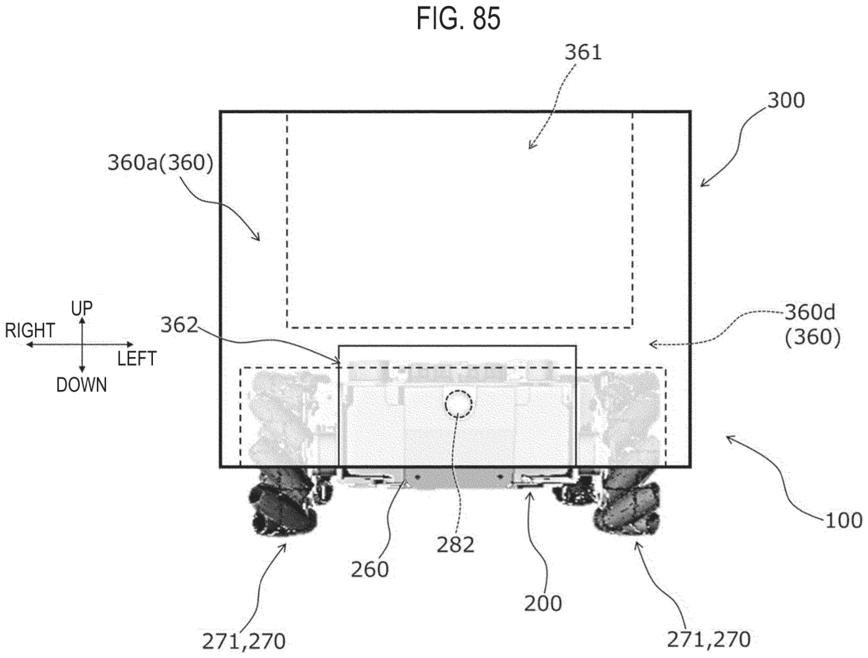

As illustrated in Figs. 83, 84, and 85, the outer shell portion 360 includes a transmissive portion 362. When the attachment 300 (mounted body 300) is attached to the mounting surface 210, the transmissive portion 362 is positioned outward of the sensor 282 in a plan view and is configured to allow transmission of the beam emitted from the sensor 282 to the outside.

More specifically, the transmissive portion 362 is provided in the front wall portion 360a, and an inner side thereof faces the sensor 282 and the front end of the vehicle body 260. The transmissive portion 362 may be arranged at a position below the entire front wall portion 360a, the position corresponding to the center of the entire front wall portion 360a in the vehicle width direction. A region occupied by the transmissive portion 362 with respect to the front wall portion 360a may be adjusted to be larger than a cross-sectional area of beam projection from the sensor 282.

A material forming the transmissive portion 362 may be any material as long as the material can transmit the beam, and can be changed according to a beam intensity and a wavelength. Further, the transmissive portion 362 may be a through-hole in the front wall portion 360a, and may be configured to be transmissive by allowing the beam to penetrate therethrough.

As illustrated in Figs. 80, 82, and 85, the attachment 300 includes the accommodation portion 361 on the upper side of the attachment 300 defined with the bottom portion 360d as a boundary. The accommodation portion 361 is surrounded by the front wall portion 360a, the side wall portions 360b, and the rear wall portion 360c with the bottom portion 360d as a lower end, and is formed as an internal space of the housing. That is, the accommodation portion 361 is configured to be able to accommodate supplies inside the outer shell portion 360.

In the accommodation portion 361, the supplies can be accommodated in the accommodation portion 361 through a rectangular opening formed at an upper end of the attachment 300. In addition, it is possible to take out the supplies accommodated in the accommodation portion 361 through the rectangular opening. The rectangular opening may be closed by a lid (not illustrated) or the like.

In addition, the accommodation portion 361 is configured to be able to cool or heat the accommodated supplies. More specifically, a temperature control device 370 may be built in the attachment 300. The temperature control device 370 may include, for example, a Peltier element, an electric heater, a heat pump, a fan, or the like, and may be capable of supplying hot/cold air to the supplies in the accommodation portion 361.

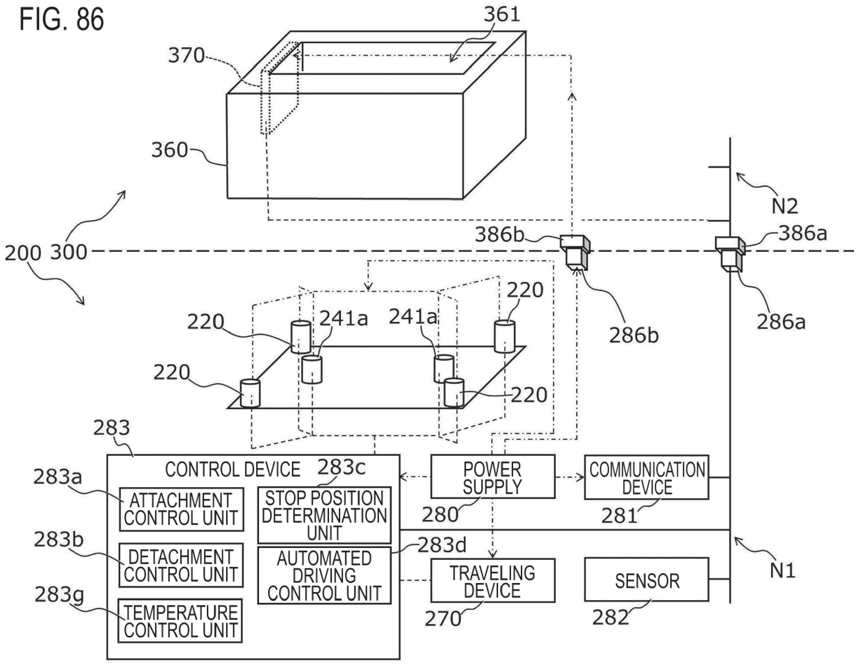

As illustrated in Fig. 86, a control device 283 of the traveling body 200 further includes a temperature control unit 283g. The temperature control unit 283g controls the temperature control device 370 so as to adjust a temperature, an air volume, and the like of the hot/cold air supplied by the temperature control device 370. In the present embodiment, the attachment 300 does not include a power supply. In this case, similarly to the modification example of the sixth embodiment described above, the traveling body 200 may include first end portions 286a and 286b, and the attachment 300 may include second end portions 386a and 386b (see Fig. 77).

When the attachment 300 is attached to the traveling body 200, a control signal is sent from the control device 283 of the traveling body 200 toward the temperature control device 370 via the first end portion 286a and the second end portion 386a. Electric energy for supplying hot/cold air is supplied from a power supply 280 of the traveling body 200 toward the temperature control device 370 via the first end portion 286b and the second end portion 386b.

The traveling body 200 travels integrally with the attachment 300 in a state in which the supplies are accommodated in the accommodation portion 361 in the attachment 300 attached to the mounting surface 210, so that the supplies can be moved while being temperature-controlled. That is, by using the attachment 300 configured as described above, the mobile body 100 functions as a movable hot/cold storage.

### <Modified Example of Outer Shell Portion>

In the present embodiment, the attachment 300 functioning as a movable hot/cold storage when attached is used as the mounted body 300, and the outer shell portion 360 is provided in the attachment. Alternatively, the attachment 300 functioning as a backhoe may be used as the mounted body 300, and the outer shell portion 360 may be provided in the attachment.

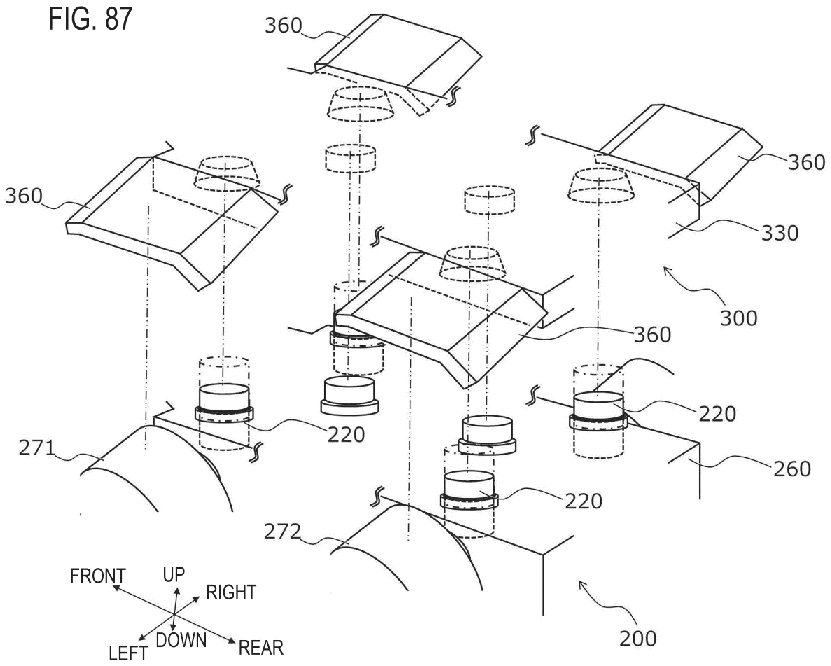

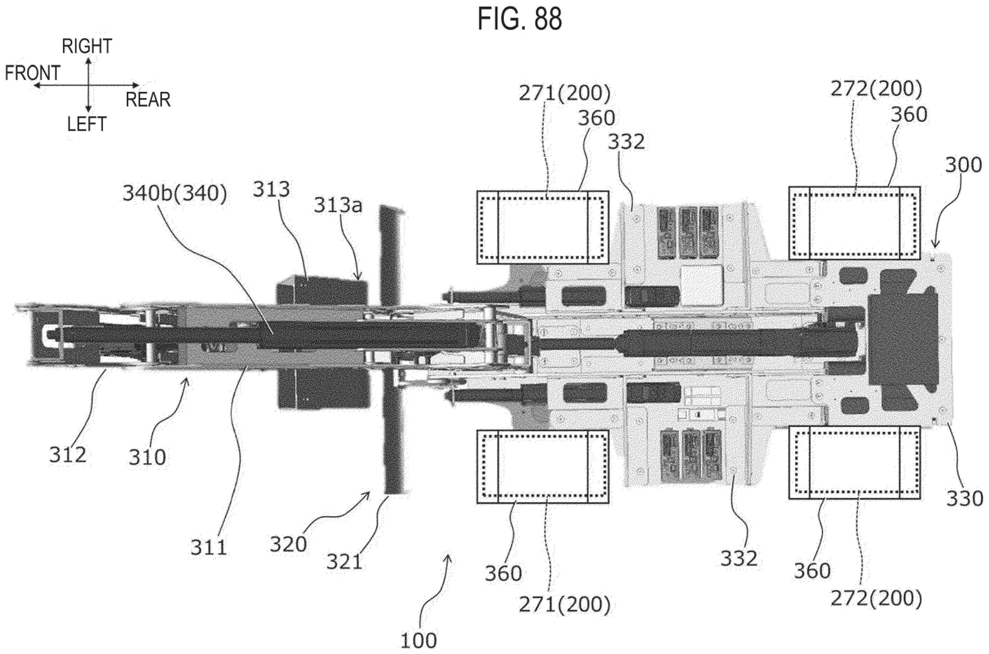

As illustrated in Figs. 87 and 88, the outer shell portion 360 is added to the configuration of the mounted body 300 of the first embodiment. When the mounted body 300 is attached to the traveling body, the outer shell portion 360 is positioned outward of the outer end of the vehicle body 260 in a plan view and is positioned above the traveling device 270 in the second direction.

More specifically, the outer shell portion 360 is divided into four portions, and one portion thereof is arranged at each of positions corresponding to front wheels 271 and rear wheels 272 in a base portion 330 of the mounted body 300. The outer shell portion 360 may be curved along a circumference of each of the front wheels 271 and the rear wheels 272.

When the mounted body 300 is attached, the outer shell portion 360 is positioned so as to cover upper sides of the front wheels 271 and the rear wheels 272. At this time, the outer shell portion 360 is positioned outward of both side ends of the vehicle body 260 in the vehicle width direction in a plan view. In a plan view, a region occupied by the outer shell portion 360 includes each of regions of the front wheels 271 and the rear wheels 272.

By configuring the outer shell portion 360 in this manner, the outer shell portion 360 can function as a fender for the front wheels 271 and the rear wheels 272. Since the outer shell portion 360 is arranged for each wheel of the traveling device 270, the region of the outer shell portion 360 can be minimized. Therefore, it is possible to increase the degree of freedom in arrangement and design of components without hindering an operation of a movable tool or the like of the mounted body 300.

### [Modification Example of Mounted Body]

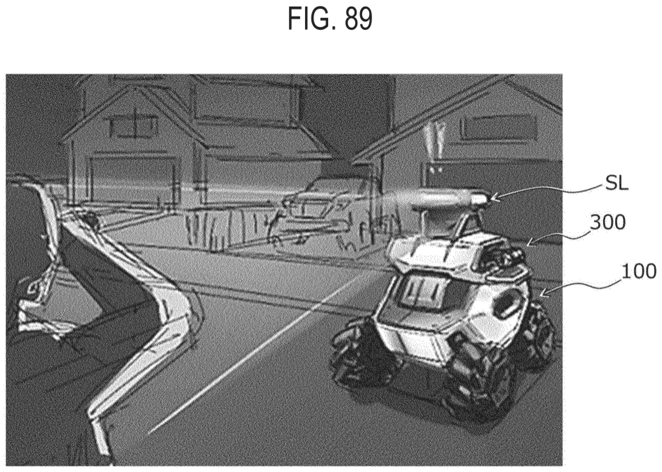

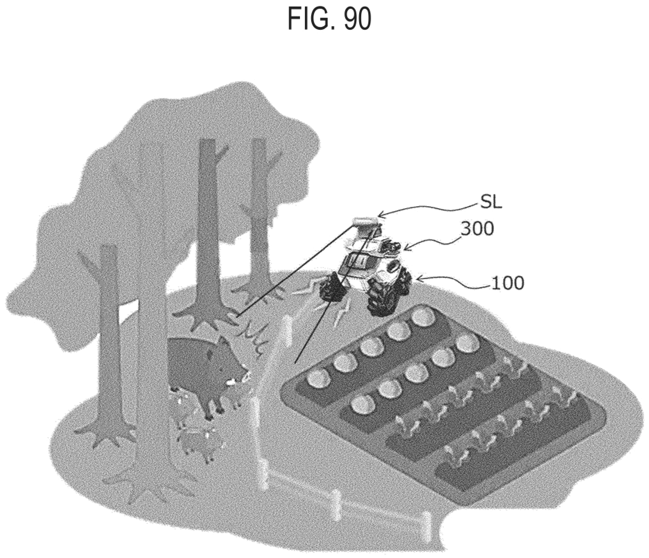

In each of the above embodiments, each mounted body 300 is configured as described above, but various aspects may be adopted as the configuration of each of the mounted bodies 300 instead of the above configurations. For example, as illustrated in Figs. 89 and 90, the mounted body 300 may include a search light SL. In this case, the search light SL may be positioned at an upper portion of the mounted body 300 and may emit light forward in the first direction. In a case where the mobile body 100 patrols by automated driving, the search light SL may perform light irradiation when detecting an object ahead.

As illustrated in Fig. 89, for example, the mobile body 100 of the present modification example may be caused to perform automated driving at night so as to patrol on a predetermined path around a residential place. In this case, when a suspicious person or the like is detected, the light is emitted from the search light SL toward the suspicious person or the like. As illustrated in Fig. 90, for example, the mobile body 100 of the present modification example may be caused to perform automated driving at night so as to patrol on a predetermined path around a farmland. In this case, when a vermin or the like is detected, the light is emitted from the search light SL toward the vermin or the like. As described above, the mobile body 100 can have functions such as crime prevention and monitoring by the light irradiation using the search light SL.

### [Summary: Application 1]

A mobile body 100 includes: a traveling body 200 that is configured to travel in a first direction and includes a mounting surface 210 directed in a second direction which is an upward direction relative to the first direction; a mounted body 300 that is configured to be attachable to and detachable from the mounting surface 210, moves integrally with the traveling body in a case where the mounted body 300 is attached to the mounting surface 210 and mounted on the traveling body 200, and is arranged separately from the traveling body 200 in a case where the mounted body 300 is detached from the mounting surface 210 and is not mounted on the traveling body 200; and a lift portion 220 that is provided in any one of the traveling body 200 and the mounted body 300 and is configured to move the mounted body 300 with respect to the mounting surface 210 in the second direction or a third direction opposite to the second direction while supporting the mounted body 300 (claim 1).

With such a configuration, the mounting surface 210 can be a portion of the traveling body 200 suitable for attaching the mounted body 300. For example, the mounting surface 210 may face the bottom surface of the base portion 330 of the mounted body 300 so as to be substantially parallel to the bottom surface, and may be configured to be capable of approaching and coming into contact with the bottom surface. Therefore, the arranged mounted body 300 can be reliably attached to the mounting surface 210 of the traveling body 200. Further, the mounted body 300 detached from the traveling body 200 can be arranged at a desired arrangement position. For example, the arrangement position of the mounted body 300 can be set to a position which is upward of the traveling body 200 and at which the bottom surface of the mounted body 300 can be maintained substantially horizontal so that the next attachment of the mounted body 300 can be smoothly performed. Therefore, both the attachment of the mounted body 300 and the detachment of the mounted body 300 can be appropriately performed.

Further, the mounted body 300 can be vertically moved with respect to the traveling body 200 by the lift portion 220 for the detachment/attachment. That is, the detachment/attachment can be easily performed by a simple operation using the lift portion 220.

The mobile body 100 includes an engagement portion 230 that is configured to engage the traveling body 200 and the mounted body 300 with each other, to attach the mounted body 300 by engagement, and to detach the mounted body 300 by disengagement (claim 2).

With such a configuration, when the attachment operation (for example, vertical movement of the mounted body 300 by the lift portion 220) is performed, a deviation of the mounted body 300 from a movement track can be suppressed by the engagement of the engagement portion 230. Accordingly, the mounted body 300 can be more reliably attached to the mounting surface 210 of the traveling body 200. Further, even after the attachment is completed, it is possible to prevent the attached mounted body 300 from deviating from the mounting surface 210 by the engagement of the engagement portion 230.

The lift portion 220 protrudes toward the engagement portion 230, and the engagement portion 230 is provided at a location corresponding to the lift portion 220 of the other one of the traveling body 200 and the mounted body 300, has a recessed shape into which the protruding lift portion 220 is fittable, has a shape having a portion whose diameter decreases in a direction in which the lift portion 220 is fitted, and is engaged by being fitted with the lift portion 220 (claim 3).

With such a configuration, when the lift portion 220 is fitted into the fitting portion 232, even if the axes of the fitting portion 232 and the lift portion 220 are misaligned, the lift portion 220 is guided by the specific reduced diameter shape, and the lift portion 220 can be fitted such that the axes are automatically aligned with each other. Therefore, the engagement can be more reliably achieved.

The mobile body 100 includes fixing portions 240a and 240b that are configured to fix the mounted body 300 to the traveling body 200, restrict relative movement of the mounted body 300 with respect to the traveling body 200 by the fixation, and allow the relative movement by releasing the fixation (claim 4).

With such a configuration, the attached mounted body 300 can be fixed to the mounting surface 210, and even when a force is applied to the mounted body 300 along with traveling or work of the mobile body 100, the mounted body 300 can be prevented from deviating from the mounting surface 210 or the mounted body 300 can be prevented from being unintentionally detached.

The fixing portion 240b is provided at a location different from an installation location of the lift portion 220, is configured to generate a magnetic-based attraction force between the traveling body 200 and the mounted body 300, and fixes the mounted body 300 to the traveling body 200 by an action of the attraction force (claim 5).

With such a configuration, a fixing action of the fixing portion 240b is based on magnetism, and thus, a mechanism for the fixation, a movable portion, and the like are unnecessary. Therefore, the fixing portion 240b can be freely installed. Therefore, in fixing the mounted body 300, the fixing portion 240b can be installed at an effective location. Further, it is possible to synergize with a function of engagement/fixation by the lift portion 220. As described above, the mounted body 300 can be more reliably fixed.

The traveling body 200 includes a first electric device and a first end portion 286 which is electrically connected to the first electric device, and the mounted body 300 includes a second electric device and a second end portion 386 which is electrically connected to the second electric device, for which contact or non-contact energization with the first end portion 286 is allowed to achieve electrical connection between the first and second electric devices when the mounted body 300 is attached to the mounting surface 210, and for which the contact or non-contact energization with the first end portion 286 is restricted to release the electrical connection between the first and second electric devices when the mounted body 300 is detached from the mounting surface 210 (claim 6).

With such a configuration, it is possible to supply electric energy from the traveling body 200 toward the mounted body 300 (or from the mounted body 300 toward the traveling body 200), transmit a control signal, transmit a sensor signal, and the like via the first end portion 286 and the second end portion 386 in a state in which the mounted body 300 is attached. Therefore, the power supply 280, the control device 283, the sensor 282, and the like can be concentrated on either the traveling body 200 or the mounted body 300. In addition, for example, the power supply 280 and the power supply 380 can be mounted on both the traveling body 200 and the mounted body 300, and the power feeding amounts from the power supply 280 and the power supply 380 can be flexibly distributed. Therefore, it is possible to greatly expand variations in mounting and usage of the electric device.

The mobile body 100 includes an attachment control unit 283a that controls the lift portion 220 so as to move the mounted body 300 facing the mounting surface 210 upward from an arrangement position in the second direction while supporting the mounted body 300 when the mounted body 300 arranged at the arrangement position upward of the mounting surface 210 in the second direction is attached to the traveling body 200 to which the mounted body is not attached, controls the traveling body 200 so as to travel in the first direction integrally with the mounted body 300 in a state in which the mounted body 300 has shifted upward from the arrangement position, and controls the lift portion 220 so as to move the mounted body 300 that has shifted upward in the third direction while supporting the mounted body 300 (claim 7).

With such a configuration, by controlling the lift portion 220, the mounted body 300 can be automatically attached to the traveling body 200. That is, the attachment of the mounted body 300 can be easily and reliably performed.

The mobile body 100 includes a detachment control unit 283b that controls the lift portion 220 to move the mounted body 300 upward from the arrangement position in the second direction while supporting the mounted body 300 attached to the mounting surface 210 when the mounted body 300 is detached from the traveling body 200 to which the mounted body is attached and is arranged at the arrangement position upward of the mounting surface 210 in the second direction, controls the traveling body 200 to travel to a position for arranging the mounted body 300 integrally with the mounted body 300 in a state in which the mounted body 300 has shifted upward from the arrangement position, and controls the lift portion 220 to move the mounted body 300 that has shifted upward in the third direction while supporting the mounted body 300 (claim 8).

With such a configuration, by controlling the lift portion 220, the mounted body 300 can be automatically detached from the traveling body 200. That is, the detachment of the mounted body 300 can be easily and reliably performed.

A mobile body 100 includes a traveling body 200; a mounted body 300 that moves integrally with the traveling body 200 when the mounted body 300 is mounted on the traveling body 200 and is configured to be arranged separately from the traveling body 200 when the mounted body 300 is detached from the traveling body 200; and a lift portion 220 that is provided in any one of the traveling body 200 and the mounted body 300 and is configured to move the mounted body 300 in a vertical direction (claim 9).

The mobile body 100 includes an engagement portion 230 that is configured to engage the traveling body 200 and the mounted body 300 with each other, to attach the mounted body 300 by engagement, and to detach the mounted body 300 by disengagement (claim 10).

The lift portion 220 protrudes toward the engagement portion 230, and the engagement portion 230 is provided at a location corresponding to the lift portion 220 of the other one of the traveling body 200 and the mounted body 300, has a recessed shape into which the protruding lift portion 220 is fittable, has a shape having a portion whose diameter decreases in a direction in which the lift portion 220 is fitted, and is engaged by being fitted with the lift portion 220 (claim 11).

### [Summary: Application 2]

A mobile body 100 includes: a traveling body 200 that is configured to travel in a first direction and includes a mounting surface 210 directed in a second direction which is an upward direction relative to the first direction; a mounted body 300 that is configured to be attachable to and detachable from the mounting surface 210, moves integrally with the traveling body 200 in a case where the mounted body 300 is attached to the mounting surface 210 and mounted on the traveling body 200, and is arranged separately from the traveling body 200 in a case where the mounted body 300 is detached from the mounting surface 210 and is not mounted on the traveling body 200; and an engagement portion 230 that is configured to engage the traveling body 200 and the mounted body 300 with each other, to attach the mounted body 300 by engagement, and to detach the mounted body 300 by disengagement (claim 1).

With such a configuration, the mounting surface 210 can be a portion of the traveling body 200 suitable for attaching the mounted body 300. For example, the mounting surface 210 may face the bottom surface of the base portion 330 of the mounted body 300 so as to be substantially parallel to the bottom surface, and may be configured to be capable of approaching and coming into contact with the bottom surface. Therefore, the arranged mounted body 300 can be reliably attached to the mounting surface 210 of the traveling body 200. Further, the mounted body 300 detached from the traveling body 200 can be arranged at a desired arrangement position. For example, the arrangement position of the mounted body 300 can be set to a position which is upward of the traveling body 200 and at which the bottom surface of the mounted body 300 can be maintained substantially horizontal so that the next attachment of the mounted body 300 can be smoothly performed. Therefore, both the attachment of the mounted body 300 and the detachment of the mounted body 300 can be appropriately performed.

With such a configuration, when the attachment operation (for example, vertical movement of the mounted body 300 by the lift portion 220 or sliding using rails) is performed, a deviation of the mounted body 300 from a movement track can be suppressed by the engagement of the engagement portion 230. Accordingly, the mounted body 300 can be more reliably attached to the mounting surface 210 of the traveling body 200. Further, even after the attachment is completed, it is possible to prevent the attached mounted body 300 from deviating from the mounting surface 210 by the engagement of the engagement portion 230.

The engagement portion 230 includes: a protruding portion 231; and a fitting portion 232 that is configured to be fitted with the protruding portion 231, and is engaged by being fitted with the protruding portion 231 (claim 2).

With such a configuration, the engagement can be reliably achieved with a simple configuration of the protruding portion 231 and the fitting portion 232.

The engagement portion 230 includes: a protruding portion 231 that protrudes in the second direction or a third direction opposite to the second direction; and a fitting portion 232 that has a recessed shape into which the protruding portion 231 is fittable and which has a portion whose diameter decreases in a direction in which the protruding portion 231 is fitted, and is engaged by being fitted with the protruding portion 231 (claim 3).

With such a configuration, when the protruding portion 231 is fitted into the fitting portion 232, even if the axes of the fitting portion 232 and the protruding portion 231 are misaligned, the protruding portion 231 is guided by the specific reduced diameter shape, and the protruding portion 231 can be fitted such that the axes are automatically aligned with each other. Therefore, the engagement can be more reliably achieved.

The engagement portion 230 includes: a protruding portion 231 that protrudes in the second direction or a third direction opposite to the second direction; and a fitting portion 232 that has a recessed shape into which the protruding portion 231 is fittable and which has a portion screwed when the protruding portion 231 is fitted, and is engaged by being fitted with the protruding portion 231 (claim 4).

With such a configuration, when the protruding portion 231 is fitted into the fitting portion 232, the fitting portion 232 and the protruding portion 231 are engaged with each other by screwing. Therefore, the engagement can be achieved, and the mounted body 300 can be fixed to the traveling body 200. In addition, the mounted body 300 can be moved in the up-down direction with respect to the traveling body 200 along with the screwing, so that the operation for the detachment/attachment can be assisted.

The engagement portion 230 is configured such that the mounted body 300 is attached by engagement in a state in which the traveling body 200 is traveling (claim 5).

With such a configuration, the mounted body 300 can be attached to the traveling body 200 through engagement by the engagement portion 230 in a state in which the traveling body 200 is traveling. Therefore, the attachment of the mounted body 300 can be promptly performed.

The engagement portion 230 includes: an outer rail 233 that extends in the first direction; and an inner rail 234 that is configured to be engaged on an inner side of the outer rail 233 and is guided by the outer rail 233 and engaged while moving in the first direction in a state in which the traveling body 200 is traveling (claim 6).

With such a configuration, even in a state in which the traveling body 200 is traveling, the engagement can be reliably achieved with a simple configuration of the outer rail 233 and the inner rail 234.

The engagement portion 230 includes: an erected portion 233a that is erected in the second direction or a third direction opposite to the second direction and has a surface facing the first direction; and a contact portion 234a that is configured to come into contact with the surface of the erected portion 233a and is engaged by coming into contact with the surface in a state in which the traveling body 200 is traveling (claim 7).

With such a configuration, even in a state in which the traveling body 200 is traveling, the engagement can be reliably achieved with a simple configuration of the erected portion 233a and the contact portion 234a.

A mobile body 100 includes a traveling body 200; a mounted body 300 that moves integrally with the traveling body 200 when the mounted body 300 is mounted on the traveling body 200 and is configured to be arranged separately from the traveling body 200 when the mounted body 300 is detached from the traveling body 200; and an engagement portion 230 that is configured to engage the traveling body 200 and the mounted body 300 with each other, to attach the mounted body 300 by engagement, and to detach the mounted body 300 by disengagement (claim 8).

The engagement portion 230 includes: a protruding portion 231; and a fitting portion 232 that is configured to be fitted with the protruding portion 231, and is engaged by being fitted with the protruding portion 231 (claim 9).

The engagement portion 230 includes: a protruding portion 231 that protrudes in a vertical direction; and a fitting portion 232 that has a recessed shape into which the protruding portion 231 is fittable and which has a portion whose diameter decreases in a direction in which the protruding portion 231 is fitted, and is engaged by being fitted with the protruding portion 231 (claim 10).

### [Summary: Application 3]

A mobile body 100 includes: a traveling body 200 that is configured to travel in a first direction and includes a mounting surface directed in a second direction which is an upward direction relative to the first direction; a mounted body 300 that is configured to be attachable to and detachable from the mounting surface 210, moves integrally with the traveling body 200 in a case where the mounted body 300 is attached to the mounting surface 210 and mounted on the traveling body 200, and is arranged separately from the traveling body 200 in a case where the mounted body 300 is detached from the mounting surface 210 and is not mounted on the traveling body 200; and fixing portions 240a and 240b that are configured to fix the mounted body 300 to the traveling body 200, restrict relative movement of the mounted body 300 with respect to the traveling body 200 by the fixation, and allow the relative movement by releasing the fixation (claim 1).

With such a configuration, the mounting surface 210 can be a portion of the traveling body 200 suitable for attaching the mounted body 300. For example, the mounting surface 210 may face the bottom surface of the base portion 330 of the mounted body 300 so as to be substantially parallel to the bottom surface, and may be configured to be capable of approaching and coming into contact with the bottom surface. Therefore, the arranged mounted body 300 can be reliably attached to the mounting surface 210 of the traveling body 200. Further, the mounted body 300 detached from the traveling body 200 can be arranged at a desired arrangement position. For example, the arrangement position of the mounted body 300 can be set to a position which is upward of the traveling body 200 and at which the bottom surface of the mounted body 300 can be maintained substantially horizontal so that the next attachment of the mounted body 300 can be smoothly performed. Therefore, both the attachment of the mounted body 300 and the detachment of the mounted body 300 can be appropriately performed.

In addition, the attached mounted body 300 can be fixed to the mounting surface 210 by the fixing portions 240a and 240b, and even when a force is applied to the mounted body 300 along with traveling or work of the mobile body 100, the mounted body 300 can be prevented from deviating from the mounting surface 210 or the mounted body 300 can be prevented from being unintentionally detached.

The fixing portion 240a includes: a protruding portion 241 that protrudes in the second direction or a third direction opposite to the second direction; and a fitting portion 242 that is configured to be fitted with the protruding portion 241 and fixes the mounted body 300 to the traveling body 200 by being fitted with the protruding portion 241 (claim 2).

With such a configuration, the fixation can be reliably achieved with a simple configuration of the protruding portion 241 and the fitting portion 242.

The fixing portion 240a includes: a protruding portion 241 that protrudes in a direction substantially perpendicular to the second direction; and a fitting portion 242 that is configured to be fitted with the protruding portion 241 and fixes the mounted body 300 to the traveling body 200 by being fitted with the protruding portion 241 (claim 3).

With such a configuration, the fixation can be reliably achieved with a simple configuration of the protruding portion 241 and the fitting portion 242.

The fixing portion 240b is configured to generate a magnetic-based attraction force between the traveling body 200 and the mounted body 300, and fixes the mounted body 300 to the traveling body 200 by an action of the attraction force (claim 4).

With such a configuration, a fixing action of the fixing portion 240b is based on magnetism, and thus, a mechanism for the fixation, a movable portion, and the like are unnecessary. Therefore, the fixing portion 240b can be freely installed. Therefore, in fixing the mounted body 300, the fixing portion 240b can be installed at an effective location.

The fixing portion 240a includes: a protruding portion 241 that protrudes in the second direction or a third direction opposite to the second direction; a fitting portion 242 that is configured to be fitted with the protruding portion 241 and fixes the mounted body to the traveling body by being fitted with the protruding portion 241; and an attraction portion 241a that is configured to generate a magnetic-based attraction force between the traveling body and the mounted body, and fixes the mounted body to the traveling body by an action of the attraction force (claim 5).

Accordingly, in fixing the mounted body 300, the attraction portion 241a of the fixing portion 240b can be installed at an effective location. In addition, it is possible to synergize with a function of fixation by the protruding portion 241 and the fitting portion 242. As described above, the mounted body 300 can be more reliably fixed.

A mobile body 100 includes a traveling body 200; a mounted body 300 that moves integrally with the traveling body 200 when the mounted body 300 is mounted on the traveling body 200 and is configured to be arranged separately from the traveling body 200 when the mounted body 300 is detached from the traveling body 200; and fixing portions 240a and 240b that are configured to fix the mounted body 300 to the traveling body 200, restrict relative movement of the mounted body 300 with respect to the traveling body 200 by the fixation, and allow the relative movement by releasing the fixation (claim 6).

The fixing portion 240a includes: a protruding portion 241 that protrudes in a vertical direction; and a fitting portion 242 that is configured to be fitted with the protruding portion 241 and fixes the mounted body 300 to the traveling body 200 by being fitted with the protruding portion 241 (claim 7).

The fixing portion 240b is configured to be able to generate a magnetic-based attraction force between the traveling body 200 and the mounted body 300, and fixes the mounted body 300 to the traveling body 200 by an action of the attraction force (claim 8).

### [Summary: Application 4]

A storage station 500 is a storage that stores a mobile body 100 including: a traveling body 200 that is configured to travel in a first direction and includes a mounting surface 210 directed in a second direction which is an upward direction relative to the first direction; and a mounted body 300 that is configured to be attachable to and detachable from the mounting surface 210, moves integrally with the traveling body 200 in a case where the mounted body 300 is attached to the mounting surface 210 and mounted on the traveling body 200, and is arranged separately from the traveling body 200 in a case where the mounted body 300 is detached from the mounting surface 210 and is not mounted on the traveling body 200. The storage station 500 includes an arrangement portion 560 that is positioned to be separated from the traveling body 200 in the first direction and a fourth direction orthogonal to each of the first direction and the second direction, and is configured such that the detached mounted body 300 is arrangeable (claim 1).

With such a configuration, the mounting surface 210 can be a portion of the traveling body 200 suitable for attaching the mounted body 300. For example, the mounting surface 210 may face the bottom surface of the base portion 330 of the mounted body 300 so as to be substantially parallel to the bottom surface, and may be configured to be capable of approaching and coming into contact with the bottom surface. Therefore, the arranged mounted body 300 can be reliably attached to the mounting surface 210 of the traveling body 200. Further, the mounted body 300 detached from the traveling body 200 can be arranged at a desired arrangement position. For example, the arrangement position of the mounted body 300 can be set to a position which is upward of the traveling body 200 and at which the bottom surface of the mounted body 300 can be maintained substantially horizontal so that the next attachment of the mounted body 300 can be smoothly performed. Therefore, both the attachment of the mounted body 300 and the detachment of the mounted body 300 can be appropriately performed.

Further, the detached mounted body 300 can be arranged in an appropriate posture such that the bottom surface of the mounted body 300 is substantially horizontal, and can be stored using the arrangement portion 560 of the storage station 500, for example. In addition, the mounted body 300 arranged on the arrangement portion 560 can be caused to stand by for the next attachment as it is.

The arrangement portion 560 is configured to support the mounted body 300 in the second direction to arrange the mounted body 300 (claim 2).

With such a configuration, even when a weight of the mounted body 300 is large, the mounted body 300 can be stably arranged on the arrangement portion 560.

The arrangement portion 560 has a planar shape configured to support a bottom surface of the mounted body 300 to be arranged, and has a shape facing the bottom surface of the mounted body 300 and extending in the first direction (claim 3).

With such a configuration, a region of the arrangement portion 560 can be expanded along the planar shape, and the arrangement portion 560 can have a margin for arrangement. Therefore, even when a size of the mounted body 300 is large or the weight of the mounted body 300 is large, the mounted body 300 can be stably arranged on the arrangement portion 560.

The storage station 500 includes a power feeding unit 570a that is configured to supply electric energy for charging to a battery provided in any one or both of the traveling body 200 and the mounted body 300 (claim 4).

With such a configuration, one or both of the power supply 280 of the traveling body 200 and the power supply 380 of the mounted body 300 can be charged when the mobile body 100 is stored in the storage station 500. Work such as battery replacement is unnecessary, and the power supply 280 and the power supply 380 can be easily brought into a fully charged state.

The storage station 500 includes a display unit 580 that externally displays information corresponding to a state of charge of the battery (claim 5).

As a result, it is possible to easily confirm the states of charge of the power supply 280 and the power supply 380. It is possible to determine a timing at which the stored mobile body 100 travels out of the storage station 500 according to the state of charge.

### [Summary: Application 5]

A storage system 400 of a mobile body 100 includes: a storage station 500 that stores the mobile body 100 including a traveling body 200 that is configured to travel in a first direction and includes a mounting surface 210 directed in a second direction which is an upward direction relative to the first direction, and a mounted body 300 that is configured to be attachable to and detachable from the mounting surface 210, moves integrally with the traveling body 200 in a case where the mounted body 300 is attached to the mounting surface 210 and mounted on the traveling body 200, and is arranged separately from the traveling body 200 in a case where the mounted body 300 is detached from the mounting surface 210 and is not mounted on the traveling body 200; and a stop position determination unit 283c that determines a stop position inside the storage station 500 as a stop position of the traveling body 200 that travels (claim 1).

With such a configuration, the mounting surface 210 can be a portion of the traveling body 200 suitable for attaching the mounted body 300. For example, the mounting surface 210 may face the bottom surface of the base portion 330 of the mounted body 300 so as to be substantially parallel to the bottom surface, and may be configured to be capable of approaching and coming into contact with the bottom surface. Therefore, the arranged mounted body 300 can be reliably attached to the mounting surface 210 of the traveling body 200. Further, the mounted body 300 detached from the traveling body 200 can be arranged at a desired arrangement position. For example, the arrangement position of the mounted body 300 can be set to a position which is upward of the traveling body 200 and at which the bottom surface of the mounted body 300 can be maintained substantially horizontal so that the next attachment of the mounted body 300 can be smoothly performed. Therefore, both the attachment of the mounted body 300 and the detachment of the mounted body 300 can be appropriately performed.

In addition, since the stop position determination unit 283c determines the stop position inside the storage station 500, the traveling body 200 outside the storage station 500 can be appropriately guided to the storage station 500.

The storage station 500 includes a detected portion 531 corresponding to a portion whose positional relationship with the stop position is defined, and the stop position determination unit 283c determines the stop position based on a result of detecting the detected portion 531 (claim 2).

Accordingly, a desired stop position can be accurately determined based on the result of detecting the detected portion 531. For example, the detected portion 531 is detected when the mounted body 300 is detached at a predetermined position inside the storage station 500, and the stop position at the time of the next attachment can be accurately determined based on the detection result.

The storage system 400 of the mobile body 100 includes an automated driving control unit 283d that causes the traveling body 200 to travel by automated driving so as to stop at the determined stop position (claim 3).

With such a configuration, the traveling body 200 can travel to the stop position by automated driving. Therefore, the traveling body 200 can be easily and reliably guided to the stop position and stopped at the stop position.

The storage station 500 includes an arrangement portion 560 that is positioned upward of the traveling body 200 in the second direction and is configured such that the detached mounted body 300 is arrangeable, and the stop position is positioned downward of the arrangement portion 560 and is a position for attaching the mounted body 300 arranged on the arrangement portion 560 to the traveling body 200 to which the mounted body 300 is not attached, and for detaching the mounted body 300 from the traveling body 200 to which the mounted body 300 is attached and arranging the mounted body 300 on the arrangement portion 560 (claim 4).

With such a configuration, the detached mounted body 300 can be arranged in an appropriate posture such that the bottom surface of the mounted body 300 is substantially horizontal, and can be stored using the arrangement portion 560 of the storage station 500, for example. In addition, the mounted body 300 arranged on the arrangement portion 560 can be caused to stand by for the next attachment as it is. Further, the traveling body 200 can be stopped at the stop position so that the mounted body 300 can be attached and detached using the arrangement portion 560 of the storage station 500.

The storage system 400 of the mobile body 100 includes an attachment control unit 283a that performs control to attach the mounted body 300 arranged on the arrangement portion 560 to the traveling body 200 to which the mounted body 300 is not attached in a state in which the traveling body 200 is stopped at the stop position (claim 5).

Accordingly, it is possible to automatically attach the mounted body 300 to the traveling body 200 when the traveling body 200 is stopped at the stop position inside the storage station 500. That is, the attachment of the mounted body 300 can be easily and reliably performed.

The storage system 400 of the mobile body 100 includes a detachment control unit 283b that performs control to detach the mounted body 300 from the traveling body 200 to which the mounted body 300 is attached and arrange the mounted body 300 on the arrangement portion 560 in a state in which the traveling body 200 is stopped at the stop position (claim 6).

Accordingly, it is possible to automatically detach the mounted body 300 from the traveling body 200 when the traveling body 200 is stopped at the stop position inside the storage station 500. That is, the detachment of the mounted body 300 can be easily and reliably performed.

The storage system 400 of the mobile body 100 includes: an attachment control unit 283a that performs control to attach the mounted body 300 arranged on the arrangement portion 560 to the traveling body 200 to which the mounted body 300 is not attached in a state in which the traveling body 200 is stopped at the stop position, and a detachment control unit 283b that performs control to detach the mounted body 300 from the traveling body 200 to which the mounted body 300 is attached and arrange the mounted body 300 on the arrangement portion 560 in a state in which the traveling body 200 is stopped at the stop position.

With such a configuration, it is possible to automatically attach the mounted body 300 to the traveling body 200 and automatically detach the mounted body 300 from the traveling body 200 when the traveling body 200 is stopped at the stop position inside the storage station 500. That is, both the attachment and the detachment of the mounted body 300 can be easily and reliably performed.

The storage station 500 includes a power feeding unit 570a configured to supply electric energy for charging to a battery provided in any one or both of the traveling body 200 and the mounted body 300 (claim 8).

With such a configuration, one or both of the power supply 280 of the traveling body 200 and the power supply 380 of the mounted body 300 can be charged when the mobile body 100 is stored in the storage station 500. Work such as battery replacement is unnecessary, and the power supply 280 and the power supply 380 can be easily brought into a fully charged state.

The storage station 500 includes a display unit 580 that externally displays information corresponding to a state of charge of the battery (claim 9).

As a result, it is possible to easily confirm the states of charge of the power supply 280 and the power supply 380. It is possible to determine a timing at which the stored mobile body 100 travels out of the storage station 500 according to the state of charge.

### [Summary: Application 6]

A mobile body 100 includes: a traveling body 200 that is configured to travel in a first direction and includes a mounting surface 210 directed in a second direction which is an upward direction relative to the first direction; and a mounted body 300 that is configured to be attachable to and detachable from the mounting surface 210, moves integrally with the traveling body 200 in a case where the mounted body 300 is attached to the mounting surface 210, and is arranged separately from the traveling body 200 when the mounted body 300 is detached from the mounting surface 210 and is not mounted on the traveling body 200, the mounted body 300 including a base portion 330 that is attachable to and detachable from the mounting surface 210; and a first movable tool 310 having an elongated shape, having one end supported by the base portion 330 so as to be relatively rotatable with respect to the base portion 330, configured to perform work at the other end extending from the base portion 330 in the first direction, and relatively rotating so as to approach the base portion 330 with the one end as a fulcrum when being accommodated (claim 1).

With such a configuration, the mounting surface 210 can be a portion of the traveling body 200 suitable for attaching the mounted body 300. For example, the mounting surface 210 may face the bottom surface of the base portion 330 of the mounted body 300 so as to be substantially parallel to the bottom surface, and may be configured to be capable of approaching and coming into contact with the bottom surface. Therefore, the arranged mounted body 300 can be reliably attached to the mounting surface 210 of the traveling body 200. Further, the mounted body 300 detached from the traveling body 200 can be arranged at a desired arrangement position. For example, the arrangement position of the mounted body 300 can be set to a position which is upward of the traveling body 200 and at which the bottom surface of the mounted body 300 can be maintained substantially horizontal so that the next attachment of the mounted body 300 can be smoothly performed. Therefore, both the attachment of the mounted body 300 and the detachment of the mounted body 300 can be appropriately performed.

In addition, even in a case where the first movable tool 310 of the mounted body 300 has an elongated shape suitable for work, it is possible to take the accommodated posture by bringing the first movable tool 310 close to the base portion 330 with the one end as a fulcrum when accommodated. For example, in a case where the mobile body 100 is accommodated in the storage station 500 or the like, it is possible to store the mobile body 100 in a state in which the accommodated posture is maintained, and thus, it is possible to store the mobile body in a space-saving manner.

The mounted body 300 includes a first drive unit 340d that relatively rotates the first movable tool 310 so as to approach the base portion 330 by pulling the first movable tool 310 to a side opposite to the first direction with the one end as a fulcrum (claim 2).

With such a configuration, the drive unit 340d can be, for example, a simple actuator capable of extension and retraction operation. Therefore, it is possible to easily and reliably take the accommodated posture.

The mounted body 300 includes a second movable tool 320 that has a plate shape, is supported by the base portion 330 so as to be relatively movable with respect to the base portion 330, is arranged at a position forward of the traveling body 200, and performs work on a surface directed in the first direction (claim 3).

With such a configuration, the second movable tool 320 can function as, for example, a dozer. Work by the first movable tool 310 and the second movable tool 320 becomes possible, so that the mobile body 100 can function as a so-called backhoe.

The mounted body 300 includes a second drive unit 340e that is provided at a position upward of the second movable tool 320 in the second direction and is driven to relatively move the second movable tool 320 (claim 4).

With such a configuration, the drive unit 340e of the second movable tool 320 is arranged at a position upward of the second movable tool 320 in the second direction, so that the lower side of the second movable tool 320 in the third direction is not interfered with the drive unit 340e. Therefore, the degree of freedom in design can be expanded. For example, the lower side of the second movable tool 320 can be extended with respect to the ground surface to expand a work surface as the dozer, and the lower end of the second movable tool 320 can be effectively used.

The second movable tool 320 is configured to come into contact with a ground surface of the traveling body 200 when work by the first movable tool 310 is performed in a state in which the mounted body 300 is attached to the traveling body 200 (claim 5).

With such a configuration, the second movable tool 320 can function as an outrigger. Therefore, the work by the first movable tool 310 can be stably performed while the tilting of the mounted body 300 is suppressed.

### [Summary: Application 7]

A mobile body 100 includes: a traveling body 200 that is configured to travel in a first direction and includes a mounting surface 210 directed in a second direction which is an upward direction relative to the first direction; and a mounted body 300 that is configured to be attachable to and detachable from the mounting surface 210, moves integrally with the traveling body 200 in a case where the mounted body 300 is attached to the mounting surface 210 and mounted on the traveling body 200, and is arranged separately from the traveling body 200 in a case where the mounted body 300 is detached from the mounting surface 210 and is not mounted on the traveling body 200, the mounted body 300 including a first power supply 380 and a first consumption unit that consumes power fed from the first power supply 380 (claim 1).

With such a configuration, the mounting surface 210 can be a portion of the traveling body 200 suitable for attaching the mounted body 300. For example, the mounting surface 210 may face the bottom surface of the base portion 330 of the mounted body 300 so as to be substantially parallel to the bottom surface, and may be configured to be capable of approaching and coming into contact with the bottom surface. Therefore, the arranged mounted body 300 can be reliably attached to the mounting surface 210 of the traveling body 200. Further, the mounted body 300 detached from the traveling body 200 can be arranged at a desired arrangement position. For example, the arrangement position of the mounted body 300 can be set to a position which is upward of the traveling body 200 and at which the bottom surface of the mounted body 300 can be maintained substantially horizontal so that the next attachment of the mounted body 300 can be smoothly performed. Therefore, both the attachment of the mounted body 300 and the detachment of the mounted body 300 can be appropriately performed.

In addition, since power can be fed from the power supply 380 of the mounted body 300 to the drive unit 340 that drive the movable tools of the mounted body 300, the control device 382, the communication device 381, and the like, each element of the mounted body 300 can be operated independently of the traveling body 200.

The traveling body 200 includes a second power supply 280 different from the first power supply 380, and a second consumption unit that consumes power fed from the second power supply 280 (claim 2).

With such a configuration, power can be fed from the power supply 280 of the traveling body 200 to the traveling device 270, the lift portion 220, the attraction portion 241a, the control device 283, the communication device 281, and the like of the traveling body 200, and thus, each element of the traveling body 200 can be operated independently of the mounted body 300.

The second consumption unit of the traveling body 200 consumes power fed from the first power supply 380 of the mounted body 300 (claim 3).

With such a configuration, power can be fed from the power supply 380 of the mounted body 300 to the traveling device 270, the lift portion 220, the attraction portion 241a, the control device 283, the communication device 281, and the like of the traveling body 200. Therefore, each element of the traveling body 200 can be operated by power fed from the power supply 380 of the mounted body 300 in addition to or instead of power fed from the power supply 280 of the traveling body 200.

The first consumption unit of the mounted body 300 consumes power fed from the second power supply 280 of the traveling body 200 (claim 4).

With such a configuration, power can be fed from the power supply 280 of the traveling body 200 to the drive unit 340, the control device 382, the communication device 381, and the like that drive the movable tools of the mounted body 300. Therefore, each element of the mounted body 300 can be operated by power fed from the power supply 280 of the traveling body 200 in addition to or instead of power fed from the power supply 380 of the mounted body 300.

The second consumption unit of the traveling body 200 consumes power fed from the first power supply 380 of the mounted body 300, and the first consumption unit of the mounted body 300 consumes power fed from the second power supply 280 of the traveling body 200 (claim 5).

With such a configuration, power can be fed from the power supply 380 of the mounted body 300 to the traveling device 270, the lift portion 220, the attraction portion 241a, the control device 283, the communication device 281, and the like of the traveling body 200. Therefore, each element of the traveling body 200 can be operated by power fed from the power supply 380 of the mounted body 300 in addition to or instead of power fed from the power supply 280 of the traveling body 200.

In addition, power can be fed from the power supply 280 of the traveling body 200 to the drive unit 340, the control device 382, the communication device 381, and the like that drive the movable tools of the mounted body 300. Therefore, each element of the mounted body 300 can be operated by power fed from the power supply 280 of the traveling body 200 in addition to or instead of power fed from the power supply 380 of the mounted body 300. As described above, since power can be fed from one to the other between the traveling body 200 and the mounted body 300, the fed power can be flexibly distributed as appropriate.

The mounted body 300 includes a first movable tool 310 and a second movable tool 320, and the first consumption unit of the mounted body 300 is a drive unit 340 that consumes power and generates motive power to drive the first movable tool 310 and the second movable tool 320 (claim 6).

With such a configuration, in the mounted body 300, in addition to the power feeding from the power supply 380 of the mounted body 300, the power feeding from the power supply 280 of the traveling body 200 can also be performed for the drive unit 340 having a particularly large load. For example, in a case where the remaining battery level in the power supply 380 of the mounted body 300 is low and the load of the drive unit 340 is large, the power feeding from the power supply 280 of the traveling body 200 enables assistance, allowing work by the first movable tool 310 and the second movable tool 320 to be continued without interruption.

The traveling body 200 includes a traveling device 270, and the second consumption unit of the traveling body 200 is a drive unit that consumes fed power and generates motive power to drive the traveling device 270 (claim 7).

With such a configuration, in the traveling body 200, in addition to the power feeding from the power supply 280 of the traveling body 200, the power feeding from the power supply 380 of the mounted body 300 can also be performed for the motor of the traveling device 270 having a particularly large load. For example, in a case where the remaining battery level in the power supply 280 of the traveling body 200 is low and the load of the traveling device 270 is large, the power feeding from the power supply 380 of the mounted body 300 enables assistance, allowing the traveling by the traveling device 270 to be continued without interruption.

Each of the first power supply 380 and the second power supply 280 is a battery, and the mobile body 100 includes a power feeding amount adjustment unit 283f that adjusts a power feeding amount of either one or both of the first power supply 380 and the second power supply 280 based on the remaining battery level (claim 8).

With such a configuration, the power feeding amount adjustment unit 283f adjusts the power feeding amounts of the power supply 280 and the power supply 380, so that it is possible to reduce the remaining battery level of each of a plurality of power supplies in a well-balanced manner. Therefore, it is possible to suppress a situation in which the number of times charging is performed increases due to, for example, the remaining battery levels of some of the plurality of power supplies becoming zero at an early stage. Therefore, it is possible to suppress early deterioration of the power supply 280 and the power supply 380.

### [Summary: Application 8]

A mobile body 100 includes: a traveling body 200 that is configured to travel in a first direction and includes a mounting surface 210 directed in a second direction which is an upward direction relative to the first direction; and a mounted body 300 that is configured to be attachable to and detachable from the mounting surface 210, moves integrally with the traveling body 200 in a case where the mounted body 300 is attached to the mounting surface 210 and mounted on the traveling body 200, is arranged separately from the traveling body 200 in a case where the mounted body 300 is detached from the mounting surface 210 and is not mounted on the traveling body 200, and does not include a power supply (claim 1).

With such a configuration, the mounting surface 210 can be a portion of the traveling body 200 suitable for attaching the mounted body 300. For example, the mounting surface 210 may face the bottom surface of the base portion 330 of the mounted body 300 so as to be substantially parallel to the bottom surface, and may be configured to be capable of approaching and coming into contact with the bottom surface. Therefore, the arranged mounted body 300 can be reliably attached to the mounting surface 210 of the traveling body 200. Further, the mounted body 300 detached from the traveling body 200 can be arranged at a desired arrangement position. For example, the arrangement position of the mounted body 300 can be set to a position which is upward of the traveling body 200 and at which the bottom surface of the mounted body 300 can be maintained substantially horizontal so that the next attachment of the mounted body 300 can be smoothly performed. Therefore, both the attachment of the mounted body 300 and the detachment of the mounted body 300 can be appropriately performed.

In addition, since the mounted body 300 does not include a power supply, the weight of the mounted body 300 can be reduced as compared with the case of including a power supply. In addition, the mounted body 300 can take an aspect in which power feeding from a power supply is unnecessary, the configuration of the mounted body 300 can be simplified, and the cost of the mounted body 300 can be reduced.

The mounted body 300 includes a first movable tool 310 and a second movable tool 320, and a drive unit 340 that is supplied with energy and drives the first movable tool 310 and the second movable tool 320, and the traveling body 200 includes a transmission portion 290 that transmits energy toward the drive unit 340 (claim 2).

Accordingly, energy can be supplied toward the drive unit 340 of the mounted body 300 by the transmission portion 290. Therefore, even when the mounted body 300 does not include a power supply, the first movable tool 310 and the second movable tool 320 of the mounted body 300 can be operated.

The transmission portion 290 is configured such that the energy is transmitted via a mechanism (claim 3).

With such a configuration, the mounted body 300 includes, for example, a gear or the like capable of receiving motive power from the transmission portion 290, so that energy can be reliably transmitted.

The transmission portion 290 is configured such that the energy is transmitted through electricity or magnetism (claim 4).

With such a configuration, the mounted body 300 includes, for example, a terminal, a coil, or the like capable of receiving electricity or magnetism from the transmission portion 290, so that energy can be reliably transmitted.

The transmission portion 290 is configured such that the energy is transmitted through a fluid (claim 5).

With such a configuration, the mounted body 300 includes, for example, a hydraulic circuit or the like capable of receiving oil from the transmission portion 290, so that energy can be reliably transmitted.

The mounted body 300 is configured such that a person boards in any of a sitting posture, a standing posture, a lying posture, and a straddling posture (claim 6).

With such a configuration, by attaching the mounted body 300 to the traveling body 200, the mobile body 100 can be caused to function as a mobility for carrying a person.

### [Summary: Application 9]

A mobile body 100 includes: a traveling body 200 that is configured to travel in a first direction and includes a mounting surface 210 directed in a second direction which is an upward direction relative to the first direction and a vehicle body 260 provided with the mounting surface 210; and a mounted body 300 that is configured to be attachable to and detachable from the mounting surface 210, moves integrally with the traveling body 200 when the mounted body 300 is attached to the mounting surface 210 and is mounted on the traveling body 200, and is arranged separately from the traveling body 200 in a case where the mounted body 300 is detached from the mounting surface 210 and is not mounted on the traveling body 200, the mounted body 300 including an outer shell portion 360 positioned outward of an outer end of the vehicle body 260 in a plan view when the mounted body 300 is attached to the mounting surface 210 (claim 1).

With such a configuration, the mounting surface 210 can be a portion of the traveling body 200 suitable for attaching the mounted body 300. For example, the mounting surface 210 may face the bottom surface of the base portion 330 of the mounted body 300 so as to be substantially parallel to the bottom surface, and may be configured to be capable of approaching and coming into contact with the bottom surface. Therefore, the arranged mounted body 300 can be reliably attached to the mounting surface 210 of the traveling body 200. Further, the mounted body 300 detached from the traveling body 200 can be arranged at a desired arrangement position. For example, the arrangement position of the mounted body 300 can be set to a position which is upward of the traveling body 200 and at which the bottom surface of the mounted body 300 can be maintained substantially horizontal so that the next attachment of the mounted body 300 can be smoothly performed. Therefore, both the attachment of the mounted body 300 and the detachment of the mounted body 300 can be appropriately performed.

Since the outer shell portion 360 is positioned outward of the vehicle body 260, the traveling body 200 can be protected by the outer shell portion 360. The outer shell portion 360 itself can also serve as the outer side of the mounted body 300. Therefore, it is not necessary to additionally add a guard or a fender to the traveling body 200. Therefore, a cohesive design for the mobile body 100 can be implemented as a whole.

The traveling body 200 includes a traveling device 270 arranged on the vehicle body 260 so as to support the vehicle body 260, and the outer shell portion 360 is positioned outward of the outer end of the vehicle body 260 in a plan view and positioned above the traveling device 270 in the second direction when the mounted body 300 is attached to the mounting surface 210 (claim 2).

With such a configuration, the outer shell portion 360 can function as a fender for the traveling device 270. For example, the outer shell portion 360 is arranged for each wheel of the traveling device 270, so that it is possible to minimize the region of the outer shell portion 360.

The traveling body 200 includes an electric device that emits a beam toward the outside, and the outer shell portion 360 includes a transmissive portion 362 that is positioned outward of the electric device in a plan view and allows transmission of the beam emitted from the electric device to the outside when the mounted body 300 is attached to the mounting surface 210 (claim 3).

With such a configuration, it is possible to suppress attenuation of the beam emitted from the electric device through the outer shell portion 360 by the transmissive portion 362 while maintaining a cohesive design for the mobile body 100 as a whole.

The electric device is a range sensor or distance sensor that emits a detection beam to the outside, or a light source that emits a viewing beam to the outside (claim 4).

With such a configuration, even in a case where the mobile body 100 includes a range sensor, a distance sensor, a light source, and the like, it is possible to suppress deterioration of functions of the range sensor, the distance sensor, the light source, and the like while maintaining a cohesive design as a whole.

The mounted body 300 includes an accommodation portion 361 configured to accommodate supplies inside the outer shell portion 360 (claim 5).

With such a configuration, even in a case where the accommodation portion 361 is provided in the mounted body 300, the supplies accommodated inside can be protected by the outer shell portion 360.

The accommodation portion 361 is configured to cool or heat the accommodated supplies (claim 6).

With such a configuration, by attaching the mounted body 300 on the traveling body 200, the mobile body 100 can be caused to function as a movable hot/cold storage.

### [Summary: Application 10]

A mobile body 100 includes: a traveling body 200 that is configured to travel in a first direction and includes a mounting surface 210 directed in a second direction which is an upward direction relative to the first direction; a mounted body 300 that is configured to be attachable to and detachable from the mounting surface 210, moves integrally with the traveling body 200 in a case where the mounted body 300 is attached to the mounting surface 210 and mounted on the traveling body 200, and is arranged separately from the traveling body 200 in a case where the mounted body 300 is detached from the mounting surface 210 and is not mounted on the traveling body 200; and support portions 250 that are provided on the traveling body 200, support the mounted body 300 when the mounted body 300 is attached to the mounting surface 210, and are respectively arranged at positions corresponding to vertices of a polygon in a plan view (claim 1).

With such a configuration, the mounting surface 210 can be a portion of the traveling body 200 suitable for attaching the mounted body 300. For example, the mounting surface 210 may face the bottom surface of the base portion 330 of the mounted body 300 so as to be substantially parallel to the bottom surface, and may be configured to be capable of approaching and coming into contact with the bottom surface. Therefore, the arranged mounted body 300 can be reliably attached to the mounting surface 210 of the traveling body 200. Further, the mounted body 300 detached from the traveling body 200 can be arranged at a desired arrangement position. For example, the arrangement position of the mounted body 300 can be set to a position which is upward of the traveling body 200 and at which the bottom surface of the mounted body 300 can be maintained substantially horizontal so that the next attachment of the mounted body 300 can be smoothly performed. Therefore, both the attachment of the mounted body 300 and the detachment of the mounted body 300 can be appropriately performed.

Further, when the mounted body 300 attached to the support portions 250 is supported, the support portions 250 are arranged at positions corresponding to the respective vertices of the polygon, so that stable support can be implemented. Therefore, it is possible to suppress deviation or detachment of the mounted body 300 attached to the traveling body 200 from the traveling body 200.

The support portions 250 are arranged such that a plurality of regions of the polygons defined by the respective vertices exist in a plan view (claim 2).

With such a configuration, when the mounted body 300 attached to the support portions 250 is supported, a plurality of regions of the polygons whose vertices are the support portions 250 can exist. Therefore, more stable support can be implemented.

The support portions 250 are arranged such that the plurality of regions of the polygons are positioned symmetrically in a plan view (claim 3).

With such a configuration, when the mounted body 300 attached to the support portions 250 is supported, a plurality of regions of the polygons whose vertices are the support portions 250 can be arranged symmetrically. Therefore, balanced and stable support can be implemented.

The traveling body 200 includes a vehicle body 260 provided with the mounting surface 210 and an overhanging portion 261 overhanging in a vehicle width direction of the vehicle body 260, and the support portion is arranged on the overhanging portion 261 (claim 4).

With such a configuration, when the overhanging portion 261 is provided in the traveling body 200, the support portion 250 can be arranged by utilizing a region of the overhanging portion 261. Therefore, stable support can be implemented outside in the vehicle width direction.

The traveling body 200 includes a vehicle body 260 provided with the mounting surface 210, traveling devices 270 respectively arranged at both ends of the vehicle body 260 in the vehicle width direction so as to support the vehicle body 260, and a power supply 280 arranged between the traveling devices 270 at both ends of the vehicle body 260 in the vehicle width direction, and the support portion 250 is arranged outward of the power supply 280 in the vehicle width direction of the vehicle body 260 (claim 5).

With such a configuration, the relatively heavy power supply 280 can be arranged inside, and the mounted body 300 can be supported by the support portion 250 outside the power supply 280. Therefore, stable support can be implemented while appropriately adjusting the center of gravity.

The traveling devices 270 include wheels which are respectively arranged on front and rear sides of the vehicle body 260 in a vehicle length direction, which are rotationally driven to travel, and of which axles serving as shafts of a center of rotation are respectively defined, the power supply 280 is arranged between the axles on the front and rear sides of the vehicle body 260 in the vehicle length direction, and the support portions 250 are arranged outward of the power supply 280 in the vehicle length direction of the vehicle body 260 (claim 6).

With such a configuration, the relatively heavy power supply 280 can be arranged on the inner sides of the front and rear axles, so that stable traveling of the traveling body 200 can be implemented. Further, the mounted body 300 can be supported by the support portions 250 on an outer side of the power supply 280. Therefore, stable traveling and support can be implemented.

The support portions 250 are arranged on an imaginary line coaxially passing through the axle of the wheels arranged at both ends of the vehicle body 260 in the vehicle width direction in a plan view (claim 7).

With such a configuration, when a load from the mounted body 300 is applied to the traveling body 200 through the support portions 250, the load can be transferred to the axle by arranging the support portions 250 on the imaginary line. Therefore, it is possible to implement stable support while alleviating an influence of the load on the vehicle body 260.

The power supply 280 is arranged such that a center of gravity of the power supply 280 is positioned upward of the axle in the second direction in a side view (claim 8).

With such a configuration, a distance from the ground surface of the traveling device 270 to the power supply 280 can be increased. Therefore, even in a case where the traveling body 200 travels on an inclined road, a bad road, or the like, it is possible to prevent the power supply 280 from coming into contact with the ground surface.

The traveling body 200 includes a vehicle body 260 provided with the mounting surface 210, traveling devices 270 respectively arranged at both ends of the vehicle body 260 in the vehicle width direction so as to support the vehicle body 260, a power supply 280 arranged between the traveling devices 270 at both ends of the vehicle body 260 in the vehicle width direction, and an overhanging portion 261 overhanging in the vehicle width direction of the vehicle body, and the overhanging portion 261 is provided with a motor and/or electric device related to driving of the motor, and the support portion 250 (claim 9).

With such a configuration, in a case where the overhanging portion 261 is provided on the traveling body 200, it is possible to arrange the motor and/or the electric device related to the driving of the motor, and the support portion 250 by utilizing a region of the overhanging portion 261. Therefore, in the vehicle body 260, for example, it is possible to provide room for mounting an additional power supply or the like other than the power supply 280. In addition, stable support can be implemented outside in the vehicle width direction.

The mounted body 300 includes a power supply 380 separate from the power supply 280 included in the vehicle body 260 (claim 10).

With such a configuration, the power supply 380 that is separate from the power supply 280 of the vehicle body 260 can be added to the mounted body 300. Therefore, the mobile body 100 can be operated for a longer time by an amount corresponding to the added power supply 380.

The traveling body 200 includes a range sensor or a distance sensor (claim 11).

With such a configuration, information obtained by a range sensor or a distance sensor can be used, for example, for controlling the traveling body 200.

The traveling body 200 includes a camera that captures an image of the outside of the traveling body (claim 12).

With such a configuration, information obtained by the camera can be transmitted to, for example, an external terminal, and a video can be displayed on the terminal.

The traveling body 200 includes a vehicle body 260 provided with the mounting surface 210, and traveling devices 270 arranged at both ends of the vehicle body 260 in the vehicle width direction so as to support the vehicle body 260, and configured to travel in all directions in a plan view (claim 13).

With such a configuration, since the traveling body 200 can travel in all directions, the degree of freedom in the operation of the entire mobile body 100 can be increased.

The traveling devices 270 include wheels respectively arranged on front and rear sides of the vehicle body 260 in a vehicle length direction, rotationally driven for traveling, and of which axles serving as shafts of a center of rotation are defined, and tires configured to rotate integrally with the wheels in a state of being in contact with a ground surface and having a solid portion (claim 14).

With such a configuration, the traveling device 270 can be configured as, for example, a Mecanum wheel, and a traveling aspect specific to the Mecanum wheel can be utilized for the operation of the mobile body 100.

The wheel is rotationally driven based on motive power of a motor, and is provided with the motor and/or an electric device related to driving of the motor (claim 15).

With such a configuration, the wheel can be configured as, for example, an in-wheel motor, and it is possible to increase the room for mounting the power supply 280 and the like in the vehicle body 260.

The traveling device 270 is detachably arranged with respect to the vehicle body 260, and the vehicle body 260 is configured such that when the attached traveling device 270 is detached, the traveling device 270 of an aspect different from the detached traveling device 270 is attachable (claim 16).

With such a configuration, wheels, crawlers, and the like can be replaced according to the use of the mounted body 300 and traveling conditions, and the traveling body 200 can be configured after selecting the traveling device 270 in an optimum aspect.

### [Summary: Application 11]

A mobile body 100 includes: a traveling body 200 that is configured to travel in a first direction, includes a mounting surface 210 directed in a second direction which is an upward direction relative to the first direction, and includes a first electric device and a first end portion 286 electrically connected to the first electric device; and a mounted body 300 that is configured to be attachable to and detachable from the mounting surface 210, moves integrally with the traveling body 200 when the mounted body 300 is attached to the mounting surface 210 and is mounted on the traveling body 200, and is arranged separately from the traveling body 200 in a case where the mounted body 300 is detached from the mounting surface 210 and is not mounted on the traveling body 200, the mounted body 300 including a second electric device and a second end portion 386 that is electrically connected to the second electric device and allows non-contact energization with the first end portion (claim 1).

With such a configuration, the mounting surface 210 can be a portion of the traveling body 200 suitable for attaching the mounted body 300. For example, the mounting surface 210 may face the bottom surface of the base portion 330 of the mounted body 300 so as to be substantially parallel to the bottom surface, and may be configured to be capable of approaching and coming into contact with the bottom surface. Therefore, the arranged mounted body 300 can be reliably attached to the mounting surface 210 of the traveling body 200. Further, the mounted body 300 detached from the traveling body 200 can be arranged at a desired arrangement position. For example, the arrangement position of the mounted body 300 can be set to a position which is upward of the traveling body 200 and at which the bottom surface of the mounted body 300 can be maintained substantially horizontal so that the next attachment of the mounted body 300 can be smoothly performed. Therefore, both the attachment of the mounted body 300 and the detachment of the mounted body 300 can be appropriately performed.

In addition, it is possible to supply electric energy from the traveling body 200 toward the mounted body 300 (or from the mounted body 300 toward the traveling body 200), transmit a control signal, transmit a sensor signal, and the like via the first end portion 286 and the second end portion 386 in a state in which the mounted body 300 is attached. Therefore, the power supply 280, the control device 283, the sensor 282, and the like can be concentrated on either the traveling body 200 or the mounted body 300. In addition, for example, the power supply 280 and the power supply 380 can be mounted on both the traveling body 200 and the mounted body 300, and the power feeding amounts from the power supply 280 and the power supply 380 can be flexibly distributed. Therefore, it is possible to greatly expand variations in mounting and usage of the electric device.

In addition, since the first end portion 286 and the second end portion 386 allow non-contact energization therebetween, for example, strict alignment becomes unnecessary as compared with a case where a contact type electrode, a terminal, or the like is used. Therefore, energization between the traveling body 200 and the mounted body 300 can be easily performed.

When the traveling body 200 to which the mounted body 300 is not attached approaches the arranged mounted body 300, the non-contact energization between the second end portion 386 and the first end portion 286 is allowed to achieve electrical connection between the first and second electric devices (claim 2).

With such a configuration, the energization between the first end portion 286 and the second end portion 386 is allowed as the traveling body 200 and the mounted body 300 approach each other, so that the energization between the traveling body 200 and the mounted body 300 can be more easily performed. On the other hand, by separating the traveling body 200 and the mounted body 300 from each other, the energization can be easily restricted.

When the mounted body 300 is attached to the mounting surface 210, the non-contact energization between the second end portion 386 and the first end portion 286 is allowed to achieve electrical connection between the first and second electric devices, and when the mounted body 300 is detached from the mounting surface 210, the non-contact energization between the second end portion 386 and the first end portion 286 is restricted to release the electrical connection between the first and second electric devices (claim 3).

With such a configuration, the energization between the first end portion 286 and the second end portion 386 is allowed by attachment of the mounted body 300 to the traveling body 200, and it is thus possible to easily and reliably perform the energization between the traveling body 200 and the mounted body 300 when the mounted body 300 is attached to the traveling body 200. On the other hand, since the energization between the first end portion 286 and the second end portion is restricted by detachment of the mounted body 300 from the traveling body 200, it is possible to easily and reliably restrict the energization between the traveling body 200 and the mounted body 300 when the mounted body 300 is detached from the traveling body 200. That is, the energization between the first end portion 286 and the second end portion 386 can be allowed at the time of attachment in which electrical connection between the traveling body 200 and the mounted body 300 is necessary, and the energization between the first end portion 286 and the second end portion 386 can be restricted at the time of detachment in which the electrical connection between the traveling body 200 and the mounted body 300 is unnecessary.

One of the first electric device and the second electric device is a power supply 280 or a power supply 380, the other of the first electric device and the second electric device is configured to consume power fed from the power supply 280 or the power supply 380, and the energization between the first end portion 286 and the second end portion 386 through magnetism is allowed (claim 4).

With such a configuration, even if a consumption destination of power feeding is a device that easily consumes a large amount of energy, magnetic coupling using a coil, magnetic resonance, and the like can be utilized between the first end portion 286 and the second end portion 386. Therefore, a large amount of electric energy can be reliably and easily supplied from the power supply 280 or the power supply 380.

The first electric device of the traveling body 200 is the power supply 280, the mounted body 300 includes a first movable tool 310 and a second movable tool 320, and the second electric device of the mounted body 300 is a drive unit 340 that consumes fed power to generate motive power and drives the first movable tool 310 and the second movable tool 320 (claim 5).

With such a configuration, a large amount of electric energy can be reliably and easily supplied from the power supply 280 of the traveling body 200 to the drive unit 340 (for example, a motor or an actuator) which has a large motive power load and easily consumes a large amount of energy.

The first end portion 286 of the traveling body 200 is arranged on a front side of the traveling body 200 in the first direction, and the first movable tool 310 and the second movable tool 320 of the mounted body 300, the drive unit 340, and the second end portion 386 are arranged on a front side of the mounted body 300 in the first direction (claim 6).

With such a configuration, on the front side of the mounted body 300, the second end portion 386, which is a supply source of the power feeding, can be brought close to the first movable tool 310 and the second movable tool 320, and the drive unit 340, which are supply destinations of the power feeding. For this reason, efficient design can be implemented on the front side of the mounted body 300, and room for mounting other electric devices can be increased on the rear side of the mounted body 300.

An electronic unit 287 or an electronic unit 387 including a control device or a communication device is provided in any one of the traveling body 200 and the mounted body 300, and the first end portion 286 and the second end portion 386 are arranged such that a distance from the first end portion 286 to the electronic unit 287 or the electronic unit 387 is longer than a distance from the first end portion 286 to the drive unit 340, and a distance from the second end portion 386 to the electronic unit 287 or the electronic unit 387 is longer than a distance from the second end portion 386 to the drive unit 340 (claim 7).

With such a configuration, the arrangement is defined as described above, so that the first end portion 286 and the second end portion 386 serving as magnetic generation sources (for example, coils) can be moved away from the electronic unit 287 or the electronic unit 387. Therefore, a mechanism, a function, and the like for blocking electromagnetic wave can be simplified for the electronic unit 287 and the electronic unit 387. Therefore, the degree of freedom in designing the traveling body 200 and the mounted body 300 can be expanded while adopting the form of non-contact energization using magnetism.

It should be understood that the respective embodiments disclosed herein are illustrative in all respects and not restrictive. The scope of the present invention is indicated not by the above description but by the claims, and it is intended that meanings equivalent to the claims and all modifications within the scope are included.

### REFERENCE SIGNS LIST

- 100: Mobile body
- 200: Traveling body
- 210: Mounting surface
- 220: Lift portion
- 230: Engagement portion
- 240: Fixing portion
- 250: Support portion
- 260: Vehicle body
- 270: Traveling device
- 280: Power supply
- 283: Control device
- 290: Transmission portion
- 300: Mounted body (attachment)
- 310: Base portion
- 320: First movable tool
- 330: Second movable tool
- 340: Drive unit
- 360: Outer shell portion
- 380: Power supply
- 383: Control device
- 390: Transmitted portion
- 400: Storage system
- 500: Storage station
- 560: Arrangement portion

## Claims

1. A mobile body comprising:
a traveling body that travels in a first direction and includes a mounting surface directed in a second direction which is an upward direction relative to the first direction;
a mounted body that is attachable to and detachable from the mounting surface, moves integrally with the traveling body in a case where the mounted body is attached to the mounting surface and mounted on the traveling body, and is arranged separately from the traveling body in a case where the mounted body is detached from the mounting surface and is not mounted on the traveling body; and
a lift portion that is provided in any one of the traveling body and the mounted body and moves the mounted body with respect to the mounting surface in the second direction or a third direction opposite to the second direction while supporting the mounted body.

2. The mobile body according to claim 1, comprising:
an engagement portion that engages the traveling body and the mounted body with each other, attaches the mounted body by engagement, and detaches the mounted body by disengagement.

3. The mobile body according to claim 2, wherein
the lift portion protrudes toward the engagement portion, and
the engagement portion is provided at a location corresponding to the lift portion of the other one of the traveling body and the mounted body, has a recessed shape into which the protruding lift portion is fittable, has a shape having a portion whose diameter decreases in a direction in which the lift portion is fitted, and is engaged by being fitted with the lift portion.

4. The mobile body according to any one of claims 1 to 3, comprising:
a fixing portion that fixes the mounted body to the traveling body, restricts relative movement of the mounted body with respect to the traveling body by the fixation, and allows the relative movement by releasing the fixation.

5. The mobile body according to claim 4, wherein
the fixing portion is provided at a location different from an installation location of the lift portion, is configured to generate a magnetic-based attraction force between the traveling body and the mounted body, and fixes the mounted body to the traveling body by an action of the attraction force.

6. The mobile body according to claim 1, wherein
the traveling body includes:
a first electric device; and
a first end portion which is electrically connected to the first electric device, and
the mounted body includes:
a second electric device; and
a second end portion which is electrically connected to the second electric device, for which contact or non-contact energization with the first end portion is allowed to achieve electrical connection between the first and second electric devices in a case where the mounted body is attached to the mounting surface, and for which the contact or non-contact energization with the first end portion is restricted to release the electrical connection between the first and second electric devices when the mounted body is detached from the mounting surface.

7. The mobile body according to claim 1, comprising:
an attachment control unit that controls the lift portion so as to move the mounted body facing the mounting surface upward from an arrangement position in the second direction while supporting the mounted body when the mounted body arranged at the arrangement position upward of the mounting surface in the second direction is attached to the traveling body to which the mounted body is not attached, controls the traveling body so as to travel in the first direction integrally with the mounted body in a state in which the mounted body has shifted upward from the arrangement position, and controls the lift portion so as to move the mounted body that has shifted upward in the third direction while supporting the mounted body.

8. The mobile body according to claim 1 or 7, comprising:
a detachment control unit that controls the lift portion to move the mounted body upward from the arrangement position in the second direction while supporting the mounted body attached to the mounting surface when the mounted body is detached from the traveling body to which the mounted body is attached and is arranged at the arrangement position upward of the mounting surface in the second direction, controls the traveling body to travel to a position for arranging the mounted body integrally with the mounted body in a state in which the mounted body has shifted upward from the arrangement position, and controls the lift portion to move the mounted body that has shifted upward in the third direction while supporting the mounted body.

9. A mobile body comprising:
a traveling body;
a mounted body that moves integrally with the traveling body when the mounted body is mounted on the traveling body and is configured to be arranged separately from the traveling body when the mounted body is detached from the traveling body; and
a lift portion that is provided in any one of the traveling body and the mounted body and is configured to move the mounted body in a vertical direction.

10. The mobile body according to claim 9, comprising:
an engagement portion that is configured to engage the traveling body and the mounted body with each other, to attach the mounted body by engagement, and to detach the mounted body by disengagement.

11. The mobile body according to claim 10, wherein
the lift portion protrudes toward the engagement portion, and
the engagement portion is provided at a location corresponding to the lift portion of the other one of the traveling body and the mounted body, has a recessed shape into which the protruding lift portion is fittable, has a shape having a portion whose diameter decreases in a direction in which the lift portion is fitted, and is engaged by being fitted with the lift portion.
